(19) Europäisches Patentamt
European Patent Office
Office européen des brevets

(11) EP 4 651 421 A1

(12) **EUROPEAN PATENT APPLICATION**
published in accordance with Art. 153(4) EPC

(43) Date of publication:
19.11.2025 Bulletin 2025/47

(21) Application number: 24757235.7

(22) Date of filing: 07.02.2024

(51) International Patent Classification (IPC):
*H04L 5/00* (2006.01)

(52) Cooperative Patent Classification (CPC):
H04L 5/00

(86) International application number:
PCT/KR2024/095088

(87) International publication number:
WO 2024/172514 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 13.02.2023 KR 20230018799

(71) Applicant: Samsung Electronics Co., Ltd.
Suwon-si, Gyeonggi-do 16677 (KR)

(72) Inventors:
• LIM, Seongmok
Suwon-si, Gyeonggi-do 16677 (KR)
• PARK, Kyoungmin
Suwon-si, Gyeonggi-do 16677 (KR)
• ABEBE, Ameha Tsegaye
Suwon-si, Gyeonggi-do 16677 (KR)
• JANG, Youngrok
Suwon-si, Gyeonggi-do 16677 (KR)
• JI, Hyoungju
Suwon-si, Gyeonggi-do 16677 (KR)
• CHOI, Kyungjun
Suwon-si, Gyeonggi-do 16677 (KR)

(74) Representative: Gulde & Partner
Patent- und Rechtsanwaltskanzlei mbB
Berliner Freiheit 2
10785 Berlin (DE)

(54) **METHOD AND DEVICE FOR TRANSMITTING PHASE TRACKING REFERENCE SIGNAL BASED ON SIMULTANEOUS TRANSMISSION ACROSS MULTIPLE PANELS IN WIRELESS COMMUNICATION SYSTEM**

(57) The present disclosure relates to a 5G or 6G communication system for supporting higher data transmission rates. Specifically, the present disclosure provides a method and device for uplink transmission considering simultaneous transmission across multiple panels.

FIG. 19

**Description**

[Technical Field]

The disclosure relates to operations of a terminal and a base station in a wireless communication system (or, mobile communication system). Specifically, the disclosure relates to a method for performing simultaneous uplink transmission using multiple panels in a wireless communication system, a method for configuring a reference signal for phase tracking when transmitting a reference signal for the corresponding operation, a method for transmitting the configured reference signal together with a scheduled uplink channel, and a device capable of performing the same.

[Background Art]

5G mobile communication technologies define broad frequency bands so as to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization(NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, with the development of communication systems, research is being conducted on the uplink transmission and reception process using multiple panels, and there is a growing demand for the realization of simultaneous uplink transmission using multiple panels.

[Disclosure]

[Technical Problem]

Various embodiments of the disclosure are to provide a device and a method capable of effectively providing services in a mobile communication system. Various embodiments of the disclosure may provide a specific method of configuring a phase tracking reference signal for simultaneously transmitting multiple uplink channels using multiple panels in a wireless communication system and transmitting the same together with the uplink channel transmission.

[Technical Solution]

In order to solve the above problems, the disclosure provides a method performed by a terminal in a communication system, the method including receiving higher layer signaling from a base station, wherein the higher layer signaling includes information for configuring a simultaneous uplink transmission scheme for two transmission and reception points (TRPs) as a scheme of a single frequency network (SFN) and information for configuring uplink phase tracking reference signal (PTRS) transmission, receiving, from the base station, downlink control information (DCI) for scheduling a first physical uplink shared channel (PUSCH) and a second PUSCH, mapping the first PUSCH to a first uplink PTRS, and the second PUSCH to a second uplink PTRS, based on a first transmit precoding matrix indicator (TPMI) or a second sounding reference signal resource indicator (SRI) included in the DCI, and transmitting the first PUSCH, the first uplink PTRS, the second PUSCH, and the second uplink PTRS, wherein the same rate matching is applied to uplink data transmitted via the first PUSCH and the second PUSCH, and the first uplink PTRS and the second uplink PTRS are mapped to the same time-frequency resource.

In addition, a method performed by a base station in a communication system includes transmitting higher layer signaling to a terminal, wherein the higher layer signaling includes information for configuring a simultaneous uplink transmission scheme for two transmission and reception points (TRPs) as a scheme of a single frequency network (SFN) and information for configuring uplink phase tracking reference signal (PTRS) transmission, transmitting downlink control information (DCI) for scheduling a first physical uplink shared channel (PUSCH) and a second PUSCH to the terminal, receiving a first PUSCH, a first uplink PTRS, a second PUSCH, and a second uplink PTRS, wherein the first PUSCH is mapped to the first uplink PTRS, and the second PUSCH is mapped to the second uplink PTRS, based on a first transmit precoding matrix indicator (TPMI) or a second sounding reference signal resource indicator (SRI) included in the DCI, and the same rate matching is applied to uplink data transmitted via the first PUSCH and the second PUSCH, and the first uplink PTRS and the second uplink PTRS are mapped to the same time-frequency resource.

In addition, a terminal in a communication system includes a transceiver, and a controller configured to receive higher layer signaling from a base station, wherein the higher layer signaling includes information for configuring a simultaneous uplink transmission scheme for two transmission and reception points (TRPs) as a scheme of a single frequency network (SFN) and information for configuring uplink phase tracking reference signal (PTRS) transmission, receive, from the base station, downlink control information (DCI) for scheduling a first physical uplink shared channel (PUSCH) and a second PUSCH, map the first PUSCH to a first uplink PTRS, and the second PUSCH to a second uplink PTRS, based on a first transmit precoding matrix indicator (TPMI) or a second sounding reference signal resource indicator (SRI) included in the DCI, and transmit the first PUSCH, the first uplink PTRS, the second PUSCH, and the second uplink PTRS, wherein the same rate matching is applied to uplink data transmitted via the first PUSCH and the second PUSCH, and the first uplink PTRS and the second uplink PTRS are mapped to the same time-frequency resource.

In addition, a base station in a communication system includes a transceiver, and a controller configured to transmit higher layer signaling to a terminal, wherein the higher layer signaling includes information for configuring a simultaneous uplink transmission scheme for two transmission and reception points (TRPs) as a scheme of a single frequency network (SFN) and information for configuring uplink phase tracking reference signal (PTRS) transmission, transmit downlink control information (DCI) for scheduling a first physical uplink shared channel (PUSCH) and a second PUSCH to the terminal, and receive a first PUSCH, a first uplink PTRS, a second PUSCH, and a second uplink PTRS, wherein the first PUSCH is mapped to the first uplink PTRS, and the second PUSCH is mapped to the second uplink PTRS, based on a first transmit precoding matrix indicator (TPMI) or a second sounding reference signal resource indicator (SRI) included in the DCI, and the same rate matching is applied to uplink data transmitted via the first PUSCH and the second PUSCH, and the first uplink PTRS and the second uplink PTRS are mapped to the same time-frequency resource.

[Advantageous Effects]

Various embodiments of the disclosure can provide a device and a method capable of effectively providing services in a mobile communication system. According to various embodiments of the disclosure, a method for configuring multiple uplink channels together with a phase tracking reference signal and performing simultaneous transmission through multiple panels in a wireless communication system, and a device for performing the same may be provided.

[Description of Drawings]

FIG. 1 illustrates a basic structure of a time-frequency domain, which is a radio resource domain used to transmit data or control channels, in a 5G system.
FIG. 2 illustrates a structure of a frame, a subframe, and a slot in a 5G system.
FIG. 3 illustrates an example of a bandwidth part configuration in a 5G system.
FIG. 4 illustrates an example of base station beam allocation according to TCI state configuration.
FIG. 5 illustrates an example of time domain resource allocation with regard to a PDSCH in a wireless communication system according to an embodiment of the disclosure.
FIG. 6 illustrates an example of an antenna port configuration and resource allocation for PDSCH transmission using cooperative communication in a communication system.
FIG. 7 illustrates an example of a downlink control information (DCI) configuration for NC-JT in which respective TRPs transmit different PDSCHs or different PDSCH layers to a UE in a wireless communication system.
FIG. 8 illustrates an example of a PDSCH TCI state activation/deactivation MAC-CE.
FIG. 9 illustrates an enhanced PDSCH TCI state activation/deactivation MAC-CE structure.
FIG. 10 illustrates a beam application time which may be considered in a case where a unified TCI scheme is used in a wireless communication system.
FIG. 11 illustrates an example of a MAC-CE structure for activation and indication of a joint TCI state or separate DL or UL TCI state in a wireless communication system.
FIG. 12 illustrates another example of a MAC-CE structure for activation and indication of multiple joint TCI states or separate DL or UL TCI states in a wireless communication system.
FIG. 13 illustrates yet another example of a MAC-CE structure for activation and indication of multiple joint TCI states or separate DL or UL TCI states in a wireless communication system.
FIG. 14 illustrates an example of a case in which two SRS resource sets each include two SRS resources and a UE is capable of supporting simultaneous uplink transmission using two panels in a wireless communication system according to an embodiment of the disclosure.
FIG. 15 illustrates an example of a case in which two SRS resource sets each include two SRS resources and a UE is capable of supporting simultaneous uplink transmission using two panels in a wireless communication system according to an embodiment of the disclosure.
FIG. 16 illustrates an example of an mTRP TDM-based uplink channel repetition transmission method, and SDM and single frequency network (SFN) schemes as multi-panel-based uplink channel simultaneous transmission methods.
FIG. 17 illustrates an example of the number of actual PTRS ports for PUSCH transmitted through each panel during codebook-based SFN PUSCH multi-panel transmission.
FIG. 18 illustrates an example of the number of actual PTRS ports for PUSCH transmitted through each panel during noncodebook-based SFN PUSCH multi-panel transmission.
FIG. 19 illustrates an example of a case in which each PTRS port is transmitted through each panel during simultaneous SFN PUSCH multi-panel transmission.
FIG. 20 illustrates an example of transmitting a PUSCH according to the maximum number of actual PTRS ports during simultaneous SFN PUSCH multi-panel transmission.
FIG. 21 is a flowchart illustrating an example of an operation in which a base station and a UE configure and transmit a PTRS depending on whether signaling between the base station and the UE and the SFN PUSCH multi-panel simultaneous transmission are scheduled.
FIG. 22A is a flowchart illustrating an example of an operation of a UE receiving and transmitting a configured PTRS according to at least one embodiment of the disclosure.
FIG. 22B is a flowchart illustrating an example of an operation of a base station configuring and receiving a PTRS according to at least one embodiment of the disclosure.
FIG. 23 illustrates a structure of a UE in a wireless communication system according to an embodiment of the disclosure.
FIG. 24 illustrates a structure of a base station in a wireless communication system according to an embodiment of the disclosure.

[Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Therefore, URLLC should provide communication with very low latency and very high reliability. For example, a service supporting URLLC must satisfy an air interface latency of less than 0.5 ms, and may also requires a packet error rate of $10^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, the 5G system is not limited to the three services described above.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

In the following description, the term "a/b" may be understood as at least one of a and b.

Hereinafter, a frame structure of a 5G system will be described in more detail with reference to the accompanying drawings.

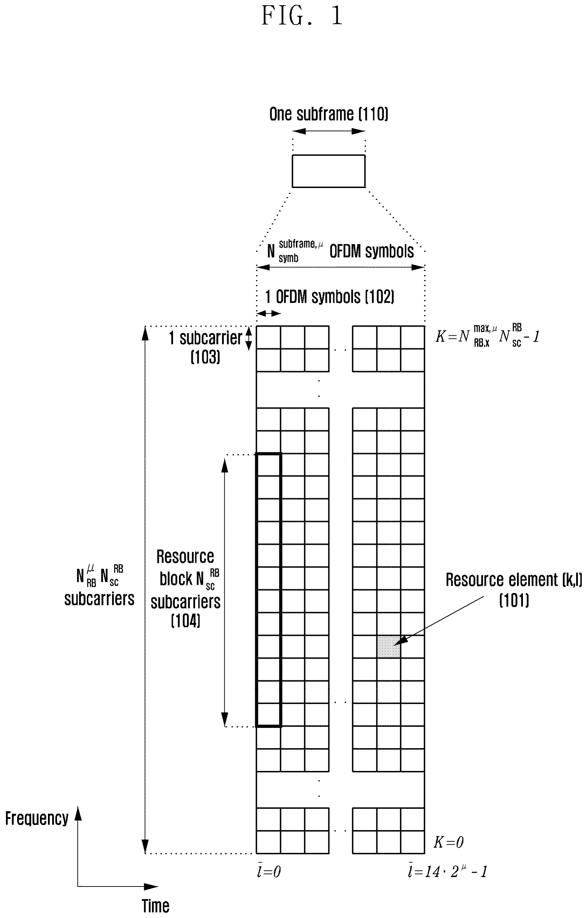

FIG. 1 illustrates a basic structure of a time-frequency domain, which is a radio resource domain used to transmit data or control channels, in a 5G system.

In FIG. 1, the horizontal axis denotes a time domain, and the vertical axis denotes a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, $N_{SC}^{RB}$ (for example, 12) consecutive REs may constitute one resource block (RB) 104. In the time domain, one subframe 110 may include multiple OFDM symbols 102. For example, the length of one subframe may be 1 ms.

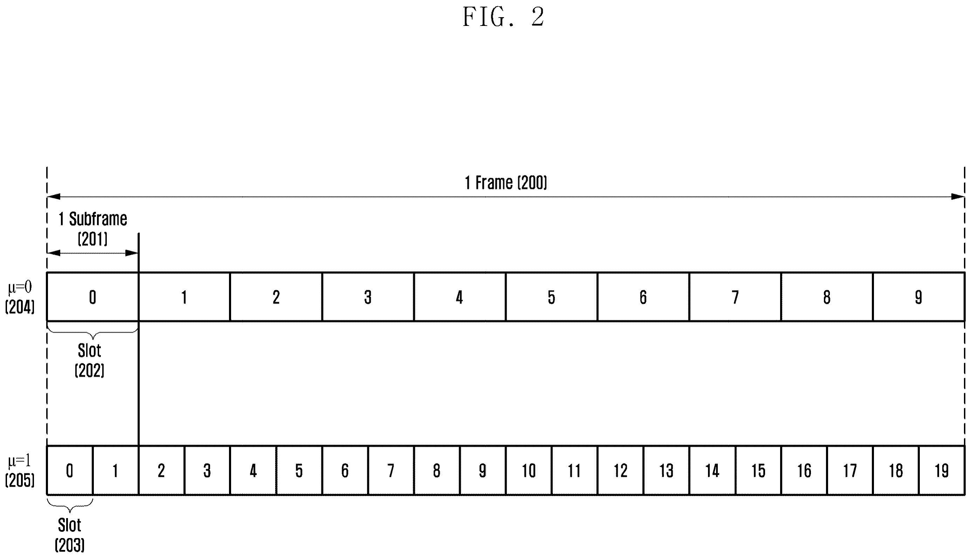

FIG. 2 illustrates a structure of a frame, a subframe, and a slot in a 5G system.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values μ for the subcarrier spacing 204 or 205. The example of FIG. 2 shows the case of μ=0 (204) and the case of μ=1 (205) as a configuration value for a subcarrier spacing. In the case of μ=0 (204), one subframe 201 may include one slot 202, and in the case of μ=1 (205), one subframe 201 may include two slots 203. That is, the number of slots per one subframe $N_{slot}^{subframe,\mu}$ may differ depending on the subcarrier spacing configuration value μ, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration μ as in Table 1 below.

[Table 1]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

Next, bandwidth part(BWP) configuration in a 5G communication system will be described in detail with reference to the accompanying drawings.

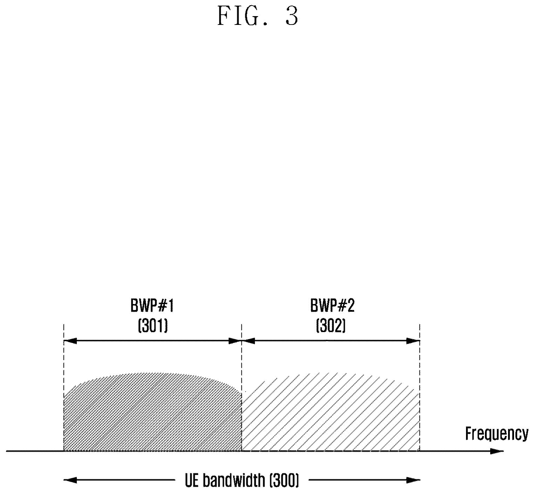

FIG. 3 illustrates an example of a bandwidth part configuration in a 5G communication system;

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given below.

[Table 2]

```
BWP ::=                     SEQUENCE {

    bwp-Id                      BWP-Id,
     (bandwidth part identifier)

    locationAndBandwidth        INTEGER (1..65536),
    (bandwidth part location)

    subcarrierSpacing           ENUMERATED {n0, n1, n2, n3, n4, n5},
    (subcarrier spacing)

    cyclicPrefix                ENUMERATED { extended }
    (cyclic prefix)

    }
```

Obviously, the above example is not limiting, and various parameters related to the bandwidth part may be configured for the UE, in addition to the above configuration information. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI). According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered to have identity (ID) 0. The base station may notify the UE of configuration information, such as frequency allocation information, time allocation information, and numerology, regarding control resource set #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0. The UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred. Hereinafter, QCLs and transmission configuration indicator (TCI) states will be described.

In a wireless communication system, one or more different antenna ports (which may also be replaced with one or more channels, signals, and combinations thereof, but will hereinafter be referred to as different antenna ports for convenience of description) may be associated with each other by a quasi co-location (QCL) configuration as in Table 3 below. A TCI state is for announcing the QCL relation between a PDCCH (or a PDCCH DRMS) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 3 below.

[Table 3]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may refer to some or all of various parameters as a whole, such as angle of arrival (AoA), power angular spectrum (PAS) of AoA, angle of departure (AoD), PAS of AoD, transmit/receive channel correlation, transmit/receive beamforming, and spatial channel correlation. The QCL relations may be configured for the UE through RRC parameter TCI-state and QCL-info as in Table 4 below. Referring to Table 4, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 3 above.

[Table 4]

```
TCI-State ::=                      SEQUENCE {
    tci-StateId                        TCI-StateId,
    (ID of corresponding TCI state)
    qcl-Type1                          QCL-Info,
    (QCL information of first refernece RS of RS (target RS) referring to corresponding
TCI state ID)
    qcl-Type2                          QCL-Info              OPTIONAL,
    -- Need R
    (QCL information of second refernece RS of RS (target RS) referring to
corresponding TCI state ID)
    ...
}

QCL-Info ::=                       SEQUENCE {
    cell                               ServCellIndex              OPTIONAL,    --
Need R
    (serving cell index of reference RS indicated by corresponding QCL information)
```

```
    bwp-Id                        BWP-Id                    OPTIONAL, -
- Cond CSI-RS-Indicated
    (BWP index of reference RS indicated by corresponding QCL information)
    referenceSignal               CHOICE {
        csi-rs                        NZP-CSI-RS-ResourceId,
        ssb                           SSB-Index
        (one of CSI-RS ID or SSB ID indicated by corresponding QCL information)
    },
    qcl-Type                      ENUMERATED   {typeA,   typeB,   typeC,
typeD},
    ...
    }
```

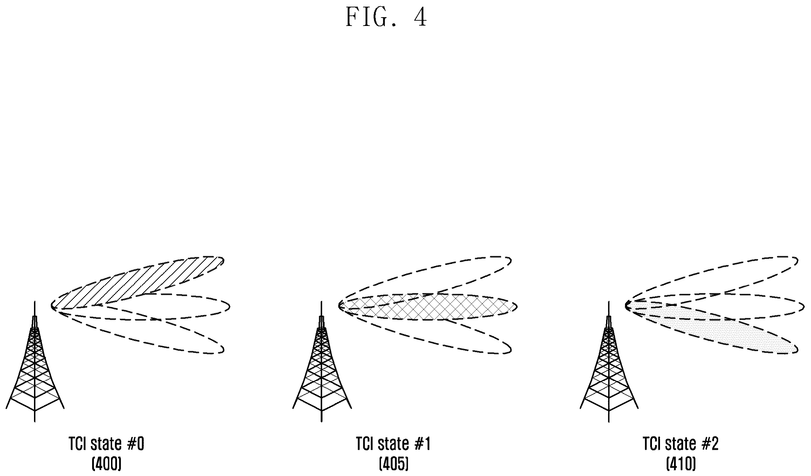

FIG. 4 illustrates an example of base station beam allocation according to TCI state configurations. Referring to FIG. 4, the base station may transfer information regarding N different beams to the UE through N different TCI states. For example, in the case of N=3 as in FIG. 4, the base station may configure qcl-Type2 parameters included in three TCI states 400, 405, and 410 in QCL type D while being associated with CSI-RSs or SSBs corresponding to different beams, thereby notifying that antenna ports referring to the different TCI states 400, 405, and 410 are associated with different spatial Rx parameters, that is, different beams.

Tables 5 to 9 below enumerate valid TCI state configurations according to the target antenna port type.

Table 5 enumerates valid TCI state configurations when the target antenna port is a CSI-RS for tracking (i.e., TRS). The TRS refers to a non-zero power (NZP) CSI-RS which has no repetition parameter configured therefor, and trs-Info of which is configured as "true", among CRI-RSs. In Table 5, configuration no. 3 may be used for a periodic TRS.

[Table 5]

| Valid TCI state Configuration | DL RS 1 | qcl-Type1 | DL RS 2 (If configured) | qcl-Type2 (If configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 6 enumerates valid TCI state configurations when the target antenna port is a CSI-RS for CSI. The CSI-RS for CSI refers to an NZP CSI-RS which has no parameter indicating repetition (for example, repetition parameter) configured therefor, and trs-Info of which is not configured as "true", among CRI-RSs.

[Table 6]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 7 enumerates valid TCI state configurations when the target antenna port is a CSI-RS for beam management (BM) (which has the same meaning as CSI-RS for L1 RSRP reporting). The CSI-RS for BM refers to an NZP CSI-RS which has a repetition parameter configured to have a value of "on" or "off", and trs-Info of which is not configured as "true", among CRI-RSs.

[Table 7]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS (same as DL RS 1) | QCL-TypeD |

(continued)

| Valid TCI state Configuration | DL RS 1 | qcl-TypeI | DL RS 2 (If configured) | qcl-Type2 (If configured) |
|---|---|---|---|---|
| 2 | TRS | QCL-TypeA | CSI-RS (BM) | QCL-TypeD |
| 3 | SS/PBCH Block | QCL-TypeC | SS/PBCH Block | QCL-TypeD |

Table 8 enumerates valid TCI state configurations when the target antenna port is a PDCCH DMRS.

[Table 8]

| Valid TCI state Configuration | DL RS 1 | qcl-TypeI | DL RS 2 (If configured) | qcl-Type2 (If configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 9 enumerates valid TCI state configurations when the target antenna port is a PDSCH DMRS.

[Table 9]

| Valid TCI state Configuration | DL RS 1 | qcl-Type1 | DL RS 2 (If configured) | qcl-Type2 (If configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

According to a representative QCL configuration method based on Tables 5 to 9 above, the target antenna port and reference antenna port for each step are configured and operated such as "SSB" - "TRS" - "CSI-RS for CSI, or CSI-RS for BM, or PDCCH DMRS, or PDSCH DMRS". Accordingly, it is possible to help the UE's receiving operation by associating statistical characteristics that can be measured from the SSB and TRS with respective antenna ports.

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the DCI message payload, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 10 below, for example.

[Table 10]

| |
|---|
| - Identifier for DCI formats – [1] bit |
| - Frequency domain resource assignment – $[\lceil \log_2(N_{RB}^{UL,BWP}(N_{RB}^{UL,BWP}+1)/2)\rceil]$ bits |
| - Time domain resource assignment – X bits |
| - Frequency hopping flag – 1 bit. |
| - Modulation and coding scheme – 5 bits |
| - New data indicator – 1 bit |
| - Redundancy version – 2 bits |
| - HARQ process number – 4 bits |
| - Transmit power control (TPC) command for scheduled PUSCH – [2] bits |
| - Uplink/ supplementary uplink (UL/SUL) indicator – 0 or 1 bit |

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 11 below, for example.

[Table 11]

| |
|---|
| - Carrier indicator - 0 or 3 bits |
| - UL/SUL indicator - 0 or 1 bit |
| - Identifier for DCI formats - [1] bits |
| - Bandwidth part indicator - 0, 1 or 2 bits |
| - Frequency domain resource assignment |
|      * For resource allocation type 0, $\lceil N_{RB}^{UL,BWP}/P \rceil$ bits |
|      * For resource allocation type 1, $\lceil \log_2(N_{RB}^{UL,BWP}(N_{RB}^{UL,BWP}+1)/2) \rceil$ bits |
| - Time domain resource assignment -1, 2, 3, or 4 bits |
| - Virtual resource block (VRB)-to-physical resource block (PRB) mapping |
| - 0 or 1 bit, only for resource allocation type 1. |
|      ◦ 0 bit if only resource allocation type 0 is configured; |
|      ◦ 1 bit otherwise. |
| - Frequency hopping flag - 0 or 1 bit, only for resource allocation type 1. |
|      ◦ 0 bit if only resource allocation type 0 is configured; |
|      ◦ 1 bit otherwise. |
| - Modulation and coding scheme - 5 bits |
| - New data indicator - 1 bit |
| - Redundancy version - 2 bits |
| - HARQ process number - 4 bits |
| - 1st downlink assignment index- 1 or 2 bits |
|      ◦ 1 bit for semi-static HARQ-ACK codebook; |
|      ◦ 2 bits for dynamic HARQ-ACK codebook with single HARQ-ACK codebook. |
| - 2nd downlink assignment index - 0 or 2 bits |
|      o 2 bits for dynamic HARQ-ACK codebook with two HARQ-ACK sub-codebooks; |
|      o 0 bit otherwise. |
| - TPC command for scheduled PUSCH - 2 bits |

(continued)

- - SRS resource indicator - $\left\lceil \log_2\left(\sum_{k=1}^{L_{max}}\binom{N_{SRS}}{k}\right)\right\rceil$ or $\left\lceil \log_2(N_{SRS})\right\rceil$ bits

    ○ $\left\lceil \log_2\left(\sum_{k=1}^{L_{max}}\binom{N_{SRS}}{k}\right)\right\rceil$ bits for non-codebook based PUSCH transmission;

    ○ $\left\lceil \log_2(N_{SRS})\right\rceil$ bits for codebook based PUSCH transmission.

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 12 below, for example.

[Table 12]

- Identifier for DCI formats - [1] bit

- Frequency domain resource assignment- $\left[\left\lceil \log_2(N_{RB}^{DL,BWP}(N_{RB}^{DL,BWP}+1)/2)\right\rceil\right]$ bits

- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 13 below, for example.

[Table 13]

- Carrier indicator - 0 or 3 bits
- Identifier for DCI formats - [1] bits
- Bandwidth part indicator - 0, 1 or 2 bits
- Frequency domain resource assignment

    ○ For resource allocation type 0, $\left\lceil N_{RB}^{DL,BWP}/P\right\rceil$ bits

    ○ For resource allocation type 1,

    $\left\lceil \log_2(N_{RB}^{DL,BWP}(N_{RB}^{DL,BWP}+1)/2)\right\rceil$ bits

(continued)

| |
|---|
| - Time domain resource assignment -1, 2, 3, or 4 bits |
| - VRB-to-PRB mapping - 0 or 1 bit, only for resource allocation type 1. |
| ◦ 0 bit if only resource allocation type 0 is configured; |
| ◦ 1 bit otherwise. |
| - Physical resource block (PRB) bundling size indicator - 0 or 1 bit |
| - Rate matching indicator - 0, 1, or 2 bits |
| - Zero power (ZP) channel state information (CSI)-reference signal (RS) trigger - 0, 1, or 2 bits |
| For transport block 1: |
| - Modulation and coding scheme - 5 bits |
| - New data indicator - 1 bit |
| - Redundancy version - 2 bits |
| For transport block 2: |
| - Modulation and coding scheme - 5 bits |
| - New data indicator - 1 bit |
| - Redundancy version - 2 bits |
| - HARQ process number - 4 bits |
| - Downlink assignment index - 0 or 2 or 4 bits |
| - TPC command for scheduled PUCCH - 2 bits |
| - PUCCH resource indicator - 3 bits |
| - PDSCH-to-HARQ_feedback timing indicator - 3 bits |
| - Antenna ports - 4, 5 or 6 bits |
| - Transmission configuration indication - 0 or 3 bits |
| - SRS request - 2 bits |
| - CBG transmission information - 0, 2, 4, 6, or 8 bits |
| - CBG flushing out information - 0 or 1 bit |
| - DMRS sequence initialization - 1 bit |

Hereinafter, a time domain resource allocation method regarding a data channel in a 5G system will be described.

A base station may configure a table for time domain resource allocation information regarding a physical downlink shared channel (PDSCH) and a physical uplink shared channel (PUSCH) for a UE through higher layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 14 or Table 15 below may be transmitted from the base station to the UE.

[Table 14]

```
PDSCH-TimeDomainResourceAllocationList ::=       SEQUENCE  (SIZE(1..maxNrofDL-
Allocations)) OF
    PDSCH-TimeDomainResourceAllocation

    PDSCH-TimeDomainResourceAllocation ::=        SEQUENCE {
         k0
INTEGER(0..32)
     OPTIONAL,    -- Need S
           (PDCCH-to-PDSCH timing, slot unit)
        mappingType                                        ENUMERATED
{typeA, typeB},
           (PDSCH mapping type)
        startSymbolAndLength                         INTEGER (0..127)
        (start symbol and length of PDSCH)
        }
```

[Table 15]

```
    PUSCH-TimeDomainResourceAllocationList  ::=      SEQUENCE  (SIZE(1..maxNrofUL-
Allocations)) OF
    PUSCH-TimeDomainResourceAllocation

    PUSCH-TimeDomainResourceAllocation ::=        SEQUENCE {
         k2
INTEGER(0..32)                    OPTIONAL,    -- Need S
           (PDCCH-to-PUSCH timing, slot unit)
           mappingType                                       ENUMERATED
{typeA, typeB},
              (PUSCH mapping type)
           startSymbolAndLength                         INTEGER (0..127)
              (start symbol and length of PUSCH)
       }
```

The base station may notify the UF of one of the entries of the table regarding time domain resource allocation information described above through L1 signaling (for example, DCI)(for example, "time domain resource allocation" field in DCI may indicate the same). The UE may acquire time domain resource allocation information regarding a PDSCH or PUSCH, based on the DCI acquired from the base station.

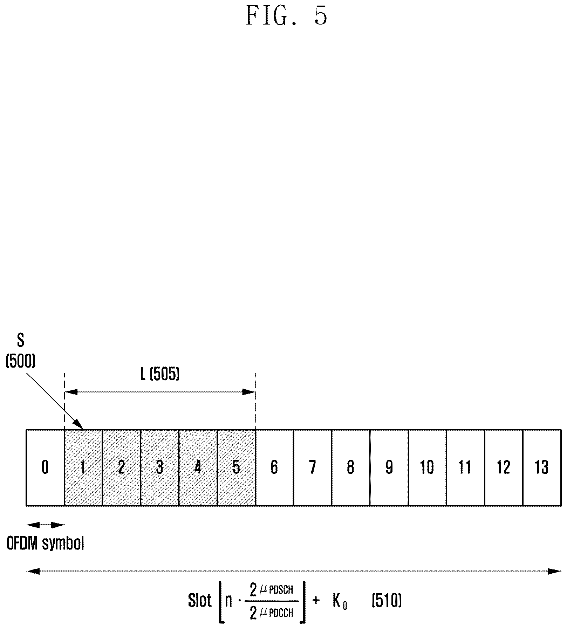

FIG. 5 illustrates an example of time domain resource allocation with regard to a PDSCH in a wireless communication system according to an embodiment of the disclosure.

Referring to FIG. 5, the base station may indicate the time domain location of a PDSCH resource according to the subcarrier spacing ($\mu_{PDSCH}$, $\mu_{PDCCH}$) of a data channel and a control channel configured by using an higher layer, the scheduling offset (K0) value, and the OFDM symbol start location 500 and length 505 within one slot dynamically indicated through DCI..

Next, a PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by

Configured grant Type 1 PUSCH transmission may be configured semi-statically by receiving configuredGrantConfig including rrc-ConfiguredUplinkGrant in Table 16 through higher signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 16 through higher signaling. If PUSCH transmission is operated by a configured grant, parameters applied to the PUSCH transmission are applied through configuredGrantConfig (higher signaling) in Table 16 except for dataScramblingIdentityPUSCH, txConfig, codebookSubset, maxRank, and scaling of UCI-OnPUSCH, which are provided by pusch-Config (higher signaling) in Table 17. If provided with transformPrecoder inside configuredGrantConfig (higher signaling) in Table 16, the UE applies tp-pi2BPSK inside pusch-Config in Table 17 to PUSCH transmission operated by a configured grant.

[Table 16]

```
ConfiguredGrantConfig ::=              SEQUENCE {
        frequencyHopping                        ENUMERATED {intraSlot, interSlot}
OPTIONAL,     -- Need S,
        cg-DMRS-Configuration           DMRS-UplinkConfig,
        mcs-Table                               ENUMERATED {qam256,
qam64LowSE}                             OPTIONAL,     -- Need S
        mcs-TableTransformPrecoder      ENUMERATED {qam256, qam64LowSE}
OPTIONAL,     -- Need S
        uci-OnPUSCH                             SetupRelease { CG-UCI-
OnPUSCH }                               OPTIONAL,     -- Need M
        resourceAllocation              ENUMERATED { resourceAllocationType0,
resourceAllocationType1, dynamicSwitch },
        rbg-Size                                ENUMERATED {config2}
OPTIONAL,     -- Need S
        powerControlLoopToUse           ENUMERATED {n0, n1},
        p0-PUSCH-Alpha                  P0-PUSCH-AlphaSetId,
        transformPrecoder                       ENUMERATED {enabled,
disabled}                              OPTIONAL,     -- Need S
        nrofHARQ-Processes              INTEGER(1..16),
        repK                                    ENUMERATED {n1,
n2, n4, n8},
        repK-RV                                 ENUMERATED {s1-0231,
s2-0303, s3-0000}                      OPTIONAL,     -- Need R
        periodicity                             ENUMERATED {
                                                        sym2,        sym7,
sym1x14, sym2x14, sym4x14, sym5x14, sym8x14, sym10x14, sym16x14, sym20x14,
```

```
                                                               sym32x14,
sym40x14,  sym64x14,  sym80x14,  sym128x14,  sym160x14,  sym256x14,  sym320x14,
sym512x14,

                                                               sym640x14,
sym1024x14, sym1280x14, sym2560x14, sym5120x14,

                                                               sym6,  sym1x12,
sym2x12, sym4x12, sym5x12, sym8x12, sym10x12, sym16x12, sym20x12, sym32x12,

                                                               sym40x12,
sym64x12,  sym80x12,  sym128x12,  sym160x12,  sym256x12,  sym320x12,  sym512x12,
sym640x12,

                                                               sym1280x12,
sym2560x12
    },
    configuredGrantTimer                            INTEGER (1..64)
OPTIONAL,    -- Need R
    rrc-ConfiguredUplinkGrant                       SEQUENCE {
        timeDomainOffset                                INTEGER (0..5119),
        timeDomainAllocation                            INTEGER   (0..15),
        frequencyDomainAllocation                       BIT STRING (SIZE(18)),
        antennaPort                                     INTEGER
(0..31),
        dmrs-SeqInitialization                          INTEGER  (0..1)
OPTIONAL,    -- Need R
        precodingAndNumberOfLayers                      INTEGER (0..63),
        srs-ResourceIndicator                           INTEGER (0..15)
OPTIONAL,    -- Need R
        mcsAndTBS
INTEGER (0..31),
        frequencyHoppingOffset                          INTEGER (1..
maxNrofPhysicalResourceBlocks-1)         OPTIONAL,    -- Need R
        pathlossReferenceIndex                          INTEGER
(0..maxNrofPUSCH-PathlossReferenceRSs-1),
        ...
    }
OPTIONAL,    -- Need R
```

```
    ...

}
```

Next, a PUSCH transmission method will be described. The DMRS antenna port for PUSCH transmission is identical to an antenna port for SRS transmission. PUSCH transmission may follow a codebook-based transmission method and a non-codebook-based transmission method according to whether the value of txConfig inside pusch-Config in Table 17, which is higher signaling, is "codebook" or "nonCodebook". As described above, PUSCH transmission may be dynamically scheduled through DCI format 0_0 or 0_1, and may be semi-statically configured by a configured grant. Upon receiving indication of scheduling regarding PUSCH transmission through DCI format 0_0, the UE performs beam configuration for PUSCH transmission by using pucch-spatialRelationInfoID corresponding to a UE-specific PUCCH resource corresponding to the minimum ID inside an activated uplink BWP inside a serving cell, and the PUSCH transmission is based on a single antenna port. The UE does not expect scheduling regarding PUSCH transmission through DCI format 0_0 inside a BWP having no configured PUCCH resource including pucch-spatialRelationInfo. If the UE has no configured txConfig inside pusch-Config in Table 17, the UE does not expect scheduling through DCI format 0_1.

[Table 17]

| PUSCH-Config ::= | SEQUENCE { |
|---|---|
| dataScramblingIdentityPUSCH | INTEGER (0..1023) OPTIONAL, -- Need S |
| txConfig {codebook, nonCodebook} | ENUMERATED OPTIONAL, -- Need S |
| dmrs-UplinkForPUSCH-MappingTypeA | SetupRelease { DMRS-UplinkConfig } OPTIONAL, -- Need M |
| dmrs-UplinkForPUSCH-MappingTypeB | SetupRelease { DMRS-UplinkConfig } OPTIONAL, -- Need M |
| pusch-PowerControl | OPTIONAL, -- Need M |
| frequencyHopping {intraSlot, interSlot} | ENUMERATED OPTIONAL, -- Need S |

```
    frequencyHoppingOffsetLists                    SEQUENCE (SIZE (1..4)) OF
INTEGER (1.. maxNrofPhysicalResourceBlocks-1)
OPTIONAL,    -- Need M
    resourceAllocation                                        ENUMERATED
{ resourceAllocationType0, resourceAllocationType1, dynamicSwitch},
    pusch-TimeDomainAllocationList                    SetupRelease { PUSCH-
TimeDomainResourceAllocationList }         OPTIONAL,    -- Need M
    pusch-AggregationFactor                     ENUMERATED { n2, n4, n8 }
OPTIONAL,    -- Need S
    mcs-Table                                                 ENUMERATED
{qam256, qam64LowSE}                              OPTIONAL,     --
Need S
    mcs-TableTransformPrecoder                      ENUMERATED  {qam256,
qam64LowSE}                                       OPTIONAL,    -- Need S
    transformPrecoder                             ENUMERATED {enabled,
disabled}                                   OPTIONAL,    -- Need S
    codebookSubset                                            ENUMERATED
{fullyAndPartialAndNonCoherent, partialAndNonCoherent,nonCoherent}
OPTIONAL, -- Cond codebookBased
    maxRank                                                   INTEGER (1..4)
OPTIONAL, -- Cond codebookBased
    rbg-Size                                                  ENUMERATED
{ config2}                                  OPTIONAL, -- Need S
    uci-OnPUSCH                                        SetupRelease { UCI-
OnPUSCH}                                    OPTIONAL, -- Need M
    tp-pi2BPSK                                                ENUMERATED
{enabled}                                   OPTIONAL, -- Need S
    ...
}
```

Next, codebook-based PUSCH transmission will be described. The codebook-based PUSCH transmission may be dynamically scheduled through DCI format 0_0 or 0_1, and may be operated semi-statically by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers). The SRI may be given through the SRS resource indicator (a field inside DCI) or configured through srs-ResourceIndicator (higher signaling). During codebook-based PUSCH transmission, the UE has at least one SRS resource configured therefor, and may have a maximum of two SRS resources configured therefor. If the UE is provided with the SRI through DCI, the SRS resource indicated by the corresponding SRI refers to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (higher signaling). The TPMI is used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

The precoder to be used for PUSCH transmission is selected from an uplink codebook having the same number of antenna ports as the value of nrofSRS-Ports inside SRS-Config (higher signaling). In connection with codebook-based PUSCH transmission, the UE determines a codebook subset, based on codebookSubset inside pusch-Config (higher signaling) and TPMI. The codebookSubset inside pusch-Config (higher signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE does not expect that the value of codebookSubset (higher signaling) will be configured as "fullyAndPartialAndNonCoherent". In addition, if the UE reported "nonCoherent" as UE capability, UE does not expect that the value of codebookSubset (higher signaling) will be configured as "fullyAndPartialAndNonCoherent" or "partialAndNonCoherent". If nrofSRS-Ports inside SRS-ResourceSet (higher signaling) indicates two SRS antenna ports, the UE does not expect that the value of codebookSubset (higher signaling) will be configured as "partialAndNonCoherent".

The UE may have one SRS resource set configured therefor, wherein the value of usage inside SRS-ResourceSet (higher signaling) is "codebook", and one SRS resource may be indicated through an SRI inside the corresponding SRS resource set. If multiple SRS resources are configured inside the SRS resource set wherein the value of usage inside SRS-ResourceSet (higher signaling) is "codebook", the UE expects that the value of nrofSRS-Ports inside SRS-Resource (higher signaling) is identical for all SRS resources.

The UE transmits, to the base station, one or multiple SRS resources included in the SRS resource set wherein the value of usage is configured as "codebook" according to higher signaling, and the base station selects one from the SRS resources transmitted by the UE and indicates the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station adds information indicating the rank and TPMI to be used by the UE for PUSCH transmission to the DCI. Using the SRS resource indicated by the SRI, the UE applies, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be operated semi-statically by a configured grant. If at least one SRS resource is configured inside an SRS resource set wherein the value of usage inside SRS-ResourceSet (higher signaling) is "nonCodebook", non-codebook-based PUSCH transmission may be scheduled for the UE through DCI format 0_1.

With regard to the SRS resource set wherein the value of usage inside SRS-ResourceSet (higher signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

If the configured value of resourceType inside SRS-ResourceSet (higher signaling) is "aperiodic", the connected NZP CSI-RS is indicated by an SRS request which is a field inside DCI format 0_1 or 1_1. If the connected NZP CSI-RS resource is an aperiodic NZP CSI-RS resource, the existence of the connected NZP CSI-RS is indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS is located in the slot used to transmit the PDCCH including the SRS request field. In this case, TCI states configured for the scheduled subcarrier are not configured as QCL-TypeD.

If there is a periodic or semi-persistent SRS resource set configured, the connected NZP CSI-RS may be indicated through associatedCSI-RS inside SRS-ResourceSet (higher signaling). With regard to non-codebook-based transmission, the UE does not expect that spatialRelationInfo which is higher signaling regarding the SRS resource and associatedCSI-RS inside SRS-ResourceSet (higher signaling) will be configured together.

If multiple SRS resources are configured for the UE, the UE may determine a precoder to be applied to PUSCH transmission and the transmission rank, based on an SRI indicated by the base station. The SRI may be indicated through the SRS resource indicator(a field inside DCI) or configured through srs-ResourceIndicator (higher signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE occupy the same RB. The UE configures one SRS port for each SRS resource. There may be only one configured SRS resource set wherein the value of usage inside SRS-ResourceSet (higher signaling) is "nonCodebook", and a maximum of four SRS resources may be configured for non-codebook-based PUSCH transmission.

The base station transmits one NZP-CSI-RS connected to the SRS resource set to the UE, and the UE calculates the precoder to be used when transmitting one or multiple SRS resources inside the corresponding SRS resource set, based on the result of measurement when the corresponding NZP-CSI-RS is received. The UE applies the calculated precoder when transmitting, to the base station, one or multiple SRS resources inside the SRS resource set wherein the configured usage is "nonCodebook", and the base station selects one or multiple SRS resources from the received one or multiple SRS resources. In connection with the non-codebook-based PUSCH transmission, the SRI indicates an index that may express one SRS resource or a combination of multiple SRS resources, and the SRI is included in DCI. The number of SRS resources indicated by the SRI transmitted by the base station may be the number of transmission layers of the PUSCH, and the UE transmits the PUSCH by applying the precoder applied to SRS resource transmission to each layer.

Below, a method for determining the transmission power of an uplink data channel in a 5G system is described in detail.

In the 5G system, the transmission power of an uplink data channel may be determined using the following mathematical expression 1.

[Mathematical formula 1]

$$P_{\text{PUSCH},b,f,c}(i,j,q_d,l) = \min \left\{ \begin{array}{l} P_{\text{CMAX},f,c}(i), \\ P_{0\_\text{PUSCH},b,f,c}(j) + 10\log_{10}(2^{\mu} \cdot M_{RB,b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$
[dBm]

In mathematical expression 1, j denotes a grant type of PUSCH, specifically, j = 0 denotes a PUSCH grant for a random access response, j=1 denotes a configured grant, and $j \in \{2,3,..., J-1\}$ denotes a dynamic grant. $P_{CMAX,f,c}(i)$ denotes the maximum output power configured in the UE with respect to carrier f of a support cell c for PUSCH transmission occasion i. $P_{0\_PUSCH,b,f,c}(j)$ is a parameter configured by the sum of $P_{0\_NOMINAL\_PUSCH,f,c}(j)$, which is configured vis a higher layer parameter, and $P_{0\_UE\_PUSCH,b,f,c}(j)$ that may be determined through a higher layer configuration and SRI (in a case of dynamic grant PUSCH). $M_{RB,b,f,c}^{PUSCH}(i)$ denotes a bandwidth for resource allocation expressed by the number of RBs for PUSCH transmission occasion i, and $\Delta_{TF,b,f,c}(i)$ denotes a value determined based on the modulation coding scheme (MCS) and the type of information transmitted through a PUSCH (e.g., whether UL-SCH is included or CSI is included, etc.).

$\alpha_{b,f,c}(j)$ is a value for compensating for path loss and denotes a value that may be determined via the higher layer configuration and SRI (in a case of dynamic grant PUSCH). $PL_{b,f,c}(q_d)$ denotes a downlink path loss estimation value, which is estimated by the UE through a reference signal having the reference signal index $q_d$, and the reference signal index $q_d$ may be determined by the UE via the higher layer configuration and SRI (in a case of dynamic grant PUSCH or ConfiguredGrantConfig-based configured grant PUSCH (type 2 configured grant PUSCH) that does not include higher layer configuration rrc-ConfiguredUplinkGrant) or via higher layer configuration.

$f_{b,f,c}(i,l)$ is a closed loop power adjustment value and may be supported by the accumulation method and absolute method. When the higher layer parameter tpc-Accumulation is not configured in the UE, the closed-loop power adjustment value may be determined using the accumulation method. Here, $f_{b,f,c}(i,l)$ is determined by

$$f_{b,f,c}(i-i_0,l) + \sum_{m=0}^{c(D_i)-1} \delta_{PUSCH,b,f,c}(m,l)$$ , obtained by adding TPC command values for closed-loop index 1 received through the DCI, between $K_{PUSCH}(i-i0)-1$ symbol for transmission of PUSCH transmission occasion $i-i_0$ to the closed-loop power adjustment value for the previous PUSCH transmission occasion $i-i_0$ and $K_{PUSCH}(i)$ symbol for transmission of PUSCH transmission occasion i. If the higher layer parameter tpc-Accumulation is configured in the UE, $f_{b,f,c}(i,l)$ is determined as the TPC command value $\delta_{PUSCH,b,f,c}(i,l)$ for the closed loop index 1 received through the DCI. The closed loop index 1 may be configured to be a value of 0 or 1 if the higher layer parameter twoPUSCH-PC-AdjustementStates is configured in the UE, and the value may be determined through the higher layer configuration and SRI (in a case of dynamic grant PUSCH). The mapping relationship between the TPC command field and the TPC value $\delta_{PUSCH,b,f,c}$ in the DCI according to the accumulation method and the absolute method may be defined as shown in Table 18 below.

[Table 18]

| TPC command field | Accumulated $\delta_{PUSCH,b,f,c}$[dB] | Absolute $\delta_{PUSCH,b,f,c}$[dB] |
|---|---|---|
| 0 | -1 | -4 |
| 1 | 0 | -1 |
| 2 | 1 | 1 |
| 3 | 3 | 4 |

Next, an uplink channel estimation method using sounding reference signal (SRS) transmission of a UE will be described. The base station may configure at least one SRS configuration with regard to each uplink BWP in order to transfer configuration information for SRS transmission to the UE, and may also configure as least one SRS resource set with regard to each SRS configuration. As an example, the base station and the UE may exchange higher signaling information as follows, in order to transfer information regarding the SRS resource set.

- srs-ResourceSetId: an SRS resource set index
- srs-ResourceIdList: a set of SRS resource indices referred to by SRS resource sets
- resourceType: time domain transmission configuration of SRS resources referred to by SRS resource sets, and may be configured as one of "periodic", "semi-persistent", and "aperiodic". If configured as "periodic" or "semi-persistent", associated CSI-RS information may be provided according to the place of use of SRS resource sets. If configured as "aperiodic", an aperiodic SRS resource trigger list/slot offset information may be provided, and associated CSI-RS information may be provided according to the place of use of SRS resource sets.
- usage: a configuration regarding the place of use of SRS resources referred to by SRS resource sets, and may be configured as one of "beamManagement", "codebook", "nonCodebook",and "antennaSwitching".
- alpha, p0, pathlossReferenceRS, srs-PowerControlAdjustmentStates: provides a parameter configuration for adjusting the transmission power of SRS resources referred to by SRS resource sets.

The UE may understand that an SRS resource included in a set of SRS resource indices referred to by an SRS resource set follows the information configured for the SRS resource set.

In addition, the base station and the UE may transmit/receive higher layer signaling information in order to transfer individual configuration information regarding SRS resources. As an example, the individual configuration information regarding SRS resources may include time-frequency domain mapping information inside slots of the SRS resources, and this may include information regarding intra-slot or inter-slot frequency hopping of the SRS resources. The individual configuration information regarding SRS resources may include time domain transmission configuration of SRS resources, and may be configured as one of "periodic", "semi-persistent", and "aperiodic". The time domain transmission configuration of SRS resources may be limited to have the same time domain transmission configuration as the SRS resource set including the SRS resources. If the time domain transmission configuration of SRS resources is configured as "periodic" or "semi-persistent", the time domain transmission configuration may further include an SRS resource transmission cycle and a slot offset (for example, periodicityAndOffset).

The base station may activate or deactivate SRS transmission for the UE through higher layer signaling including RRC signaling or MAC CE signaling, or L1 signaling (for example, DCI). For example, the base station may activate or deactivate periodic SRS transmission for the UE through higher layer signaling. The base station may indicate activation of an SRS resource set having resourceType configured as "periodic" through higher layer signaling, and the UE may transmit the SRS resource referred to by the activated SRS resource set. Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the periodic SRS resource activated through higher layer signaling.

For example, the base station may activate or deactivate semi-persistent SRS transmission for the UE through higher layer signaling. The base station may indicate activation of an SRS resource set through MAC CE signaling, and the UE may transmit the SRS resource referred to by the activated SRS resource set. The SRS resource set activated through MAC CE signaling may be limited to an SRS resource set having resourceType configured as "semi-persistent". Intra-slot time-frequency domain resource mapping of the transmitted SRS resource follows resource mapping information configured for the SRS resource, and slot mapping, including the transmission cycle and slot offset, follows periodicityAndOffset configured for the SRS resource. In addition, the spatial domain transmission filter applied to the transmitted SRS resource may refer to spatial relation info configured for the SRS resource, or may refer to associated CSI-RS information configured for the SRS resource set including the SRS resource. If the SRS resource has spatial relation info configured therefor, the spatial domain transmission filter may be determined, without following the same, by referring to configuration information regarding spatial relation info transferred through MAC CE signaling that activates semi-persistent SRS transmission. The UE may transmit the SRS resource inside the uplink BWP activated with regard to the semi-persistent SRS resource activated through higher layer signaling.

For example, the base station may trigger aperiodicSRS transmission by the UE through DCI. The base station may indicate one of aperiodic SRS triggers (aperiodicSRS-ResourceTrigger) through the SRS request field of DCI. The UE may understand that the SRS resource set including the aperiodic SRS resource trigger indicated through DCI in the aperiodic SRS resource trigger list, among configuration information of the SRS resource set, has been triggered. The UE may transmit the SRS resource referred to by the triggered SRS resource set. Intra-slot time-frequency domain resource mapping of the transmitted SRS resource follows resource mapping information configured for the SRS resource. In addition, slot mapping of the transmitted SRS resource may be determined by the slot offset between the SRS resource and a PDCCH including DCI, and this may refer to value(s) included in the slot offset set configured for the SRS resource set. Specifically, as the slot offset between the SRS resource and the PDCCH including DCI, a value indicated in the time domain resource assignment field of DCI, among offset value(s) included in the slot offset set configured for the SRS resource set, may be applied. In addition, the spatial domain transmission filter applied to the transmitted SRS resource may refer to spatial relation info configured for the SRS resource, or may refer to associated CSI-RS information configured for the SRS resource set including the SRS resource. The UE may transmit the SRS resource inside the uplink BWP activated with regard to the aperiodic SRS resource triggered through DCI.

If the base station triggers aperiodic SRS transmission by the UE through DCI, a minimum time interval may be necessary between the transmitted SRS and the PDCCH including the DCI that triggers aperiodic SRS transmission, in order for the UE to transmit the SRS by applying configuration information regarding the SRS resource. The time interval for SRS transmission by the UE may be defined as the number of symbols between the last symbol of the PDCCH including the DCI that triggers aperiodic SRS transmission and the first symbol mapped to the first transmitted SRS resource among transmitted SRS resource(s). The minimum time interval may be determined with reference to the PUSCH preparation procedure time needed by the UE to prepare PUSCH transmission. The minimum time interval may have a different value depending on the place of use of the SRS resource set including the transmitted SRS resource. For example, the minimum time interval may be determined as N2 symbols defined in consideration of UE processing capability that follows the UE's capability with reference to the UE's PUSCH preparation procedure time. In addition, if the place of use of the SRS resource set is configured as "codebook" or "antennaSwitching" in consideration of the place of use of the SRS resource set including the transmitted SRS resource, the minimum time interval may be determined as N2 symbols, and if the place of use of the SRS resource set is configured as "nonCodebook" or "'beamManagement", the minimum time interval may be determined as N2+14 symbols. The UE may transmit an aperiodic SRS if the time interval for aperiodic SRS transmission is larger than or equal to the minimum time interval, and may ignore the DCI that triggers the aperiodic SRS if the time interval for aperiodic SRS transmission is smaller than the minimum time interval.

[Table 19]

```
SRS-Resource ::=                        SEQUENCE {
    srs-ResourceId                      ,
    nrofSRS-Ports                       ENUMERATED {port1, ports2, ports4},
    ptrs-PortIndex                      ENUMERATED {n0, n1 }
OPTIONAL,      -- Need R
    transmissionComb                    CHOICE {
        n2                                  SEQUENCE {
            combOffset-n2                       INTEGER (0..1),
            cyclicShift-n2                      INTEGER (0..7)
        },
        n4                                  SEQUENCE {
            combOffset-n4                       INTEGER (0..3),
            cyclicShift-n4                      INTEGER (0..11)
        }
    },
    resourceMapping                     SEQUENCE {
        startPosition                       INTEGER (0..5),
        nrofSymbols                         ENUMERATED {n1, n2, n4},
        repetitionFactor                    ENUMERATED {n1, n2, n4}
    },
```

```
        freqDomainPosition              INTEGER (0..67),
        freqDomainShift                 INTEGER (0..268),
        freqHopping                     SEQUENCE {
            c-SRS                                   INTEGER (0..63),
            b-SRS                                   INTEGER (0..3),
            b-hop                                   INTEGER (0..3)
        },
        groupOrSequenceHopping          ENUMERATED { neither, groupHopping,
quenceHopping },
        resourceType                    CHOICE {
            aperiodic                               SEQUENCE {
                ...
            },
            semi-persistent             SEQUENCE {
                periodicityAndOffset-sp             SRS-PeriodicityAndOffset,
                ...
            },
            periodic                                SEQUENCE {
                periodicityAndOffset-p              SRS-PeriodicityAndOffset,
                ...
            }
        },
        sequenceId                      INTEGER (0..1023),
        spatialRelationInfo             SRS-SpatialRelationInfo
OPTIONAL,      -- Need R
        ...
}
```

Configuration information spatialRelationInfo in Table 19 above may be applied, with reference to one reference signal, to a beam used for SRS transmission corresponding to beam information of the corresponding reference signal. For example, configuration of the spatialRelationInfo may include the following pieces of information as given in Table 20 below.

[Table 20]

```
SRS-SpatialRelationInfo ::=        SEQUENCE {
        servingCellId                                          ServCellIndex
OPTIONAL,      -- Need S
        referenceSignal                              CHOICE {
                ssb-Index                                          SSB-
Index,
                csi-RS-Index                                       NZP-
CSI-RS-ResourceId,
                srs
SEQUENCE {
                        resourceId
SRS-ResourceId,
                        uplinkBWP
BWP-Id
        }
    }
}
```

Referring to the spatialRelationInfo configuration, an SS/PBCH block index, CSI-RS index, or SRS index may be configured as the index of a reference signal to be referred to in order to use beam information of a specific reference signal. Higher signaling referenceSignal corresponds to configuration information indicating which reference signal's beam information is to be referred to for corresponding SRS transmission, ssb-Index refers to the index of an SS/PBCH block, csi-RS-Index refers to the index of a CSI-RS, and srs refers to the index of an SRS. If higher signaling referenceSignal has a configured value of "ssb-Index", the UE may apply the reception beam which was used to receive the SS/PBCH block corresponding to ssb-Index as the transmission beam for the corresponding SRS transmission. If higher signaling referenceSignal has a configured value of "'csi-RS-Index", the UE may apply the reception beam which was used to receive the CSI-RS corresponding to csi-RS-Index as the transmission beam for the corresponding SRS transmission. If higher signaling referenceSignal has a configured value of "'srs", the UE may apply the reception beam which was used to transmit the SRS corresponding to srs as the transmission beam for the corresponding SRS transmission. Next, the uplink PTRS is described.

The UE may be configured with the higher layer parameter phaseTrackingRS for PTRS on the higher layer parameter DMRS-UplinkConfig. When the UE transmits a PUSCH to the base station, the UE may transmit a phase tracking reference signal (PTRS) for phase tracking for the uplink channel. A procedure in which the UE transmits the UL PTRS may be determined depending on whether transform precoding is performed when transmitting the PUSCH. In case that the UE performs transform precoding and the transformPrecoderEnabled area is configured in the higher layer parameter PTRS-UplinkConfig, the sampleDensity in the transformPrecoderEnabled area may indicate a sample density threshold represented by $N_{RB0}$ to $N_{RB4}$ in Table 21 below. In case that the UE performs transform precoding and the transformPrecoderEnabled area is configured in the higher layer parameter PTRS-UplinkConfig, the UE may determine a PT-RS group pattern for scheduled resource $N_{RB}$ according to Table 21 below. Additionally, if a transform precoder is applied to PUSCH transmission, the number of bits in the PTRS-DMRS association field for indicating association between PTRS and DMRS in DCI format 0_1 or 0_2 may be 0.

[Table 21]

| Scheduled bandwidth | Number of PT-RS groups | Number of sample s per PT-RS group |
|---|---|---|
| $N_{RB0} \leq N_{RB} < N_{RBI}$ | 2 | 2 |
| $N_{RBI} \leq N_{RB} < N_{RH2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

In case that transform precoding is not applied to PUSCH transmission and the higher layer parameter phaseTrackingRS is configured, the UE may be indicated frequecyDensity of $N_{RB0}$ to $N_{RB1}$ and timeDensity of ptrs-$MCS_1$ to ptrs-$MCS_3$ in the transformPrecoderDisabled field of the higher layer parameter PTRS-UplinkConfig. The UE may determine the PT-RS density in the time domain ($L_{PT-RS}$) and the PT-RS density ($K_{PT-RS}$) in the frequency domain as described in Tables 22 and 23 according to the MCS ($I_{MCS}$) and RB ($N_{RB}$) of the scheduled PUSCH. In Table 22, ptrs-MCS$_4$ is not specified as a higher layer parameter, but the base station and the UE may know that it is 29 or 28 according to the configured MCS table.

[Table 22]

| Scheduled MCS | Time Density ($L_{PT-RS}$) |
|---|---|
| $I_{MCS} <$ ptrs-MCS$_1$ | PT-RS is not present |
| ptrs-MCS$_1 \leq I_{MCS} <$ ptrs-MCS$_2$ | 4 |
| ptrs-MCS$_2 \leq I_{MCS} <$ ptrs-MCS$_3$ | 2 |
| ptrs-MCS$_3 \leq I_{MCS} <$ ptrs-MCS$_4$ | 1 |

[Table 23]

| Scheduled bandwidth | Frequnecy density ($K_{PT-RS}$) |
|---|---|
| $N_{RB} < N_{RB0}$ | PT-RS is not present |
| $N_{RB0} \leq N_{RB} < N_{RBI}$ | 2 |
| $N_{RBI} \leq N_{RB}$ | 4 |

In case that transform precoder is not applied to PUSCH transmission and PTRS-UplinkConfig is configured, the base station may indicate a 2-bit "PTRS-DMRS association" field to the UE to indicate association between PTRS and DMRS in DCI format 0_1 or 0_2. The indicated 2-bit PTRS-DMRS association field may be applied in Table 24 or Table 25 below according to the maximum number of PTRS ports configured by maxNrofPorts in the higher layer parameter PTRS-UplinkConfig. In case that the maximum number of PTRS ports is 1, the UE may determine association between PTRS and DMRS with the 2 bits indicated by the PTRS-DMRS association field and Table 24, and transmit PTRS according to the determined association. In case that the maximum number of PTRS ports is two, the UE may determine association between PTRS and DMRS with the 2 bits indicated by the PTRS-DMRS association field and Table 25, and transmit PTRS according to the determined association.

[Table 24]

| Value | DMRS port |
|---|---|
| 0 | 1st scheduled DMRS port |
| 1 | 2nd scheduled DMRS port |
| 2 | 3rd scheduled DMRS port |
| 3 | 4th scheduled DMRS port |

[Table 25]

| Value o f MSB | DMRS port | Value of LSB | DMRS port |
|---|---|---|---|
| 0 | 1st DMRS port whic h shares PTRS port 0 | 0 | 1st DMRS port whic h shares PTRS port 1 |
| 1 | 2nd DMRS port whic h shares PTRS port 0 | 1 | 2nd DMRS port whic h shares PTRS port 1 |

The DMRS ports in Tables 24 and 25 may be determined through a table determined by the "Antenna ports" field indicated by the same DCI as the DCI indicating PTRS-DMRS association and the higher layer parameter configuration. In case that the transform precoder is not configured by the higher layer configuration of the PUSCH, dmrs-Type is configured as 1 and maxLength is configured as 2 for DMRS, and the rank of the PUSCH is 2, the UE may determine the DMRS port through the table for "Antenna port(s)" as shown in Table 26 and the bits indicated by the antenna ports field. In the case of supporting a noncodebook-based PUSCH, the UE may determine a rank value by referring to the SRI field indicated by the same DCI as the DCI including the "Antenna ports" field (i.e., if the SRI field does not exist, the rank may be regarded as 1).

In the case of supporting codebook-based PUSCH, the UE may determine a rank value by referring to the TPMI field indicated by the same DCI as the DCI including the "Antenna ports" field. Table 26 is an example of the antenna port table referenced during the configuration of the PUSCH described above, and if the PUSCH is configured with other parameters, the DMRS port may be determined based on the antenna port table according to the configuration and the bits in the antenna ports field indicated by the DCI.

[Table 26]

| Val ue | Number of DMRS CDM group(s) wi thout data | DMRS port(s) | Number of front-load s ymbols |
|---|---|---|---|
| 0 | 1 | 0.1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10-1 5 | Reserved | Reserved | Reserved |

The 1st scheduled DMRS to the 4th scheduled DMRS in Table 24 may be defined as values used for sequentially mapping the bits of the antenna ports field of the DCI and the DMRS ports indicated by the antenna port table according to the higher layer configuration. For example, if the bits of the antenna ports field of the DCI are 0001 and the DMRS ports are determined by referring to Table 26 above, the scheduled DMRS ports may be 0 and 1, and DMRS port 0 may be defined as the 1st scheduled DMRS, and DMRS port 1 may be defined as the 2nd scheduled DMRS. Bits of other antenna ports fields and DMRS ports determined by the antenna port table according to other higher layer configuration may be applied similarly. The UE may determine a single DMRS port to associate with the PTRS port, by referring to bits indicated by PTRS-DMRS association in the DCI, among the DMRS ports defined as above, and transmit the PTRS according to the determined DMRS port. In Table 25, the DMRS port sharing PTRS port 0 and the DMRS port sharing PTRS port 1 may be defined according to codebook-based PUSCH transmission or non-codebook-based PUSCH transmission. If the UE transmits the PUSCH based on the partial-coherent or non-coherent codebook, the uplink layer transmitted to PUSCH antenna ports 1000 and 1002 is associated with PTRS port 0, and the uplink layer transmitted to PUSCH antenna ports 1001 and 1003 is associated with PTRS port 1. To explain with a more specific example, if layer 3: TPMI = 2 is selected for codebook-based PUSCH transmission, since the first layer is transmitted to PUSCH antenna ports 1000 and 1002, the first layer is associated with PTRS port 0, and since the second layer is transmitted to PUSCH antenna port 1001 and the third layer is transmitted to PUSCH antenna port 1002, the second and third layers are associated with PTRS port 1. Each of the three layers denotes a DMRS port, the DMRS port for the first layer corresponds to "1st DMRS port which shares PTRS port 0" in Table 25, the DMRS port for the second layer corresponds to "1st DMRS port which shares PTRS port 1" in Table 25, and the DMRS port for the third layer corresponds to "2nd DMRS port which shares PTRS port 1" in Table 25. Similarly, the DMRS port associated with PTRS port 0 and the DMRS port associated with PTRS port 1 may be determined based on different layer numbers and TPMIs.

If the UE transmits a PUSCH based on non-codebook, the DMRS port may be distinguished as a DMRS port associated with PTRS port 0 and a DMRS port associated with PTRS port 1 according to the SRI and antenna ports indicated by the DCI. More specifically, an SRS resource included in an SRS resource set with usage being "nonCodebook" is configured to be associated with PTRS port 0 or PTRS port 1 through the higher layer parameter ptrs-PortIndex. The base station indicates, through the SRI, an SRS resource for transmitting a non-codebook based PUSCH. At this time, each port of the indicated SRS resource is mapped one-to-one to each PUSCH DMRS port. The association between a PUSCH DMRS port and a PTRS port is determined according to the higher layer parameter ptrs-PortIndex of the SRS resource mapped to the DMRS port. To explain with a more specific example, it is assumed that the ptrs-PortIndex of SRS resources 1 through 4 included in the SRS resource set with usage being "nonCodebook" are configured as n0, n0, n1, and n1, respectively. In addition, it is assumed that PUSCH is indicated by the SRI to be transmitted through SRS resources 1, 2, and 4, and DMRS ports 0, 1, and 2 are indicated for the antenna ports field. The ports of SRS resources 1, 2, and 4 are mapped to DMRS ports 0, 1, and 2, respectively. In addition, DMRS ports 0 and 1 are associated with PTRS port 0 and DMRS port 2 is associated with PTRS port 1 according to ptrs-PortIndex in the SRS resource. Therefore, in Table 25, DMRS port 0 corresponds to "1st DMRS port which shares PTRS port 0", DMRS port 1 corresponds to "2nd DMRS port which shares PTRS port 0", and DMRS port 2 corresponds to "1st DMRS port which shares PTRS port 1". Similarly, the DMRS port associated with PTRS port 0 and the DMRS port associated with PTRS port 1 may be determined by different SRI values and ptrs-PortIndex configuration methods in different patterns of SRS resources. The UE determines the association between the DMRS ports and the PTRS ports as described above for the two PTRS ports. Thereafter, the UE determines a DMRS port to be associated with PTRS port 0 by referencing the MSB bit of the PTRS-DMRS association, among the multiple DMRS ports associated with each PTRS port, and determines a DMRS port to be associated with PTRS port 1 by referencing the LSB bit to transmit the PTRS.

Hereinafter, UE capability reporting will be described.

In LTE and NR systems, a UE may perform a procedure in which, while being connected to a serving base station, the UE may report capability supported by the UE to the corresponding base station. In the following description, the above-described procedure will be referred to as a UE capability report.

The base station may transfer a UE capability enquiry message to the UE in a connected state so as to request a capability report. The message may include a UE capability request with regard to each radio access technology (RAT) type of the base station. The RAT type-specific request may include supported frequency band combination information and the like. In addition, in the case of the UE capability enquiry message, UE capability with regard to multiple RAT types may be requested through one RRC message container transmitted by the base station, or the base station may transfer a UE capability enquiry message including multiple UE capability requests with regard to respective RAT types. That is, a capability enquiry may be repeated multiple times in one message, and the UE may configure a UE capability information message corresponding thereto and report the same multiple times. In next-generation mobile communication systems, a UE capability request may be made regarding multi-RAT dual connectivity (MR-DC), such as NR, LTE, E-UTRA - NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.

1. If the UE receives a list regarding LTE and/or NR bands from the base station at a UE capability request, the UE may construct band combinations (BCs) regarding EN-DC and NR standalone (SA). That is, the UE configures a candidate list of BCs regarding EN-DC and NR SA, based on bands received from the base station at a request through FreqBandList. Bands have priority in the order described in FreqBandList.

2. If the base station has set "eutra-nr-only" flag or "eutra" flag and requested a UE capability report, the UE may remove everything related to NR SA BCs from the configured BC candidate list. Such an operation may occur only if an LTE base station (eNB) requests "eutra" capability.

3. The UE may then remove fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, the same may be omitted. This step is applied in MR-DC as well, that is, LTE bands are also applied. BCs remaining after the above step constitute the final "candidate BC list".

4. The UE selects BCs appropriate for the requested RAT type from the final "candidate BC list" and selects BCs to report. In this step, the UE configures supportedBandCombinationList in a determined order. That is, the UE configures BCs and UE capability to report according to a preconfigured rat-Type order. (nr - > eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower step) is removed. The "candidate feature set combinations" may include all feature set combinations regarding NR and EUTRA-NR BCs, and may be acquired from feature set combinations of containers of UE-NR-Capabilities and UE-MRDC-Capabilities.

In addition, if the requested RAT type is eutra-nr and has an influence, featureSetCombinations may be included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

Hereinafter, non-coherent joint transmission (NC-JT) will be described. A UE may use NC-JT to receive PDSCHs from multiple TRPs.

Unlike the conventional system, the 5G wireless communication system may support not only a service requiring a high transmission rate, but also a service having a very short transmission delay and a service requiring a high connection density. In a wireless communication network including a plurality of cells, transmission and reception points (TRPs), or beams, coordinated transmission between respective cells, TRPs, and/or beams may satisfy various service requirements by increasing the strength of a signal received by the UE or efficiently controlling interference between the cells, TRPs, and/or beams.

Joint transmission (JT) is a representative transmission scheme for the aforementioned cooperative communication, and is a scheme for increasing the strength or throughput of a signal received by a UE, by transmitting the signal to one UE via multiple different cells, TRPs, and/or beams. Here, a channel between respective cells, TRPs, and/or beam and the UE may have different characteristics, and particularly, NC-JT supporting non-coherent precoding between respective cells, TRPs, and/or beams may need individual precoding, MCSs, resource allocations, and TCI indications according to the channel characteristics for each link between respective cells, TRPs, and/or beam and the UE.

The above-described NC-JT transmission may be applied to at least one of a downlink data channel (PDSCH), a downlink control channel (PDCCH), an uplink data channel (PUSCH), and an uplink control channel (PUCCH). In PDSCH transmission, transmission information such as precoding, MCS, resource allocation, and TCI may be indicated through DL DCI, and should be independently indicated for each cell, TRP, and/or beam for the NC-JT. This is a significant factor that increases payload required for DL DCI transmission, which may have a bad influence on reception performance of a PDCCH for transmitting the DCI. Therefore, in order to support JT of a PDSCH, it is necessary to carefully design tradeoff between the amount of DCI information and control information reception performance.

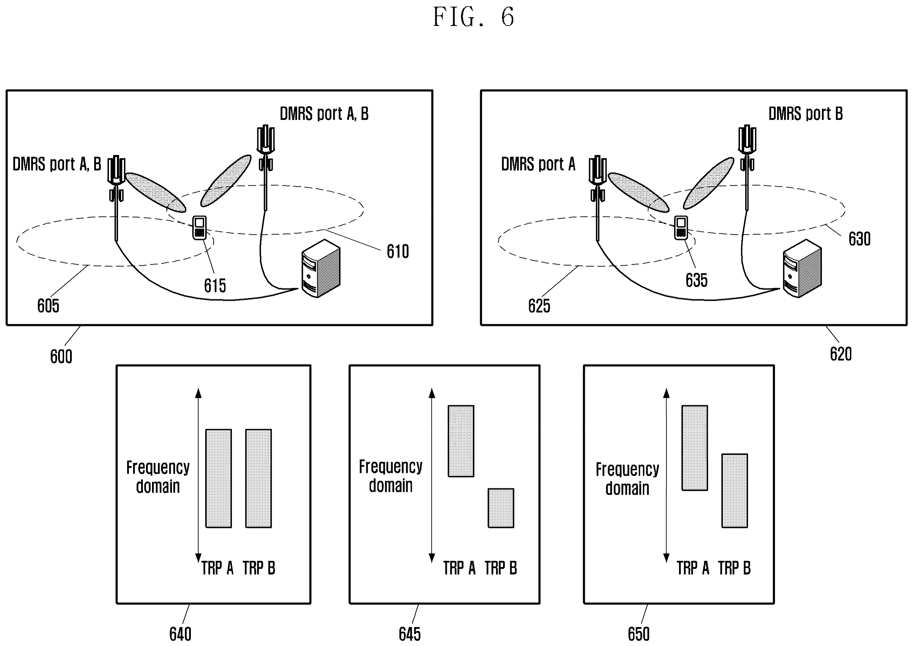

FIG. 6 illustrates an example of an antenna port configuration and resource allocation for PDSCH transmission using cooperative communication in a communication system.

Referring to FIG. 6, an example for PDSCH transmission is described for each scheme of joint transmission (JT), and examples for radio resource allocation for each TRP are illustrated.

Referring to FIG. 6, an example 600 of coherent joint transmission (C-JT) supporting coherent precoding between respective cells, TRPs, and/or beams is illustrated.

In the case of C-JT, a TRP A 605 and a TRP B 610 transmit single data (PDSCH) to a UE 615, and multiple TRPs may perform joint precoding. This may signify that the TRP A 605 and a TRP B 610 transmit DMRSs through the same DMRS ports in order to transmit the same PDSCH. For example, the TRP A 605 and a TRP B 610 may transmit DMRSs to the UE through a DMRS port A and a DMRS port B, respectively. In this case, the UE may receive one piece of DCI information for receiving one PDSCH demodulated based on the DMRSs transmitted through the DMRS port A and the DMRS port B.

FIG. 6 illustrates an example 620 of non-coherent joint transmission (NC-JT) that supports non-coherent precoding between respective cells, TRPs, or/and beams for PDSCH transmission.

In the case of NC-JT, the PDSCH is transmitted to a UE 635 per cell, per TPR, and/or per beam, and individual precoding may be applied to each PDSCH. Respective cells, TRPs, and/or beams may transmit different PDSCHs or different PDSCH layers to the UE, thereby improving throughput as compared to single cell, TRP, and/or beam transmission. Furthermore, respective cells, TRPs, and/or beams may repeatedly transmit the same PDSCH to the UE, thereby improving reliability compared to single cell, TRP, and/or beam transmission. For the sake of convenience of description, the cell, TRP, and/or beam are commonly called a TRP.

In this case, various radio resource allocations may be considered, such as a case 640 where frequency and time resources used in multiple TRPs for PDSCH transmission are all identical, a case 645 where frequency and time resources used in multiple TRPs do not overlap at all, and a case 650 where some of frequency and time resources used in multiple TRPs overlap.

In order to support NC-JT, DCIs in various forms, structures, and relations may be considered to simultaneously allocate a plurality of PDSCHs to one UE.

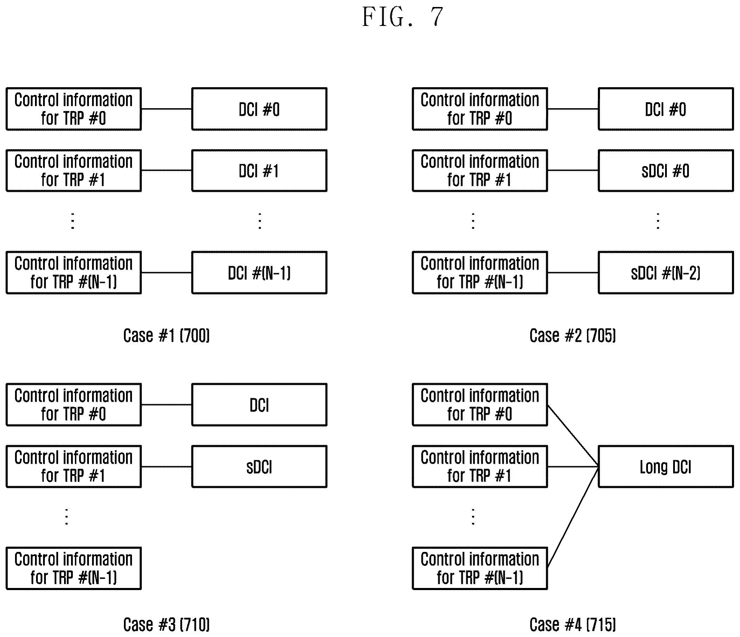

FIG. 7 illustrates an example of a downlink control information (DCI) configuration for NC-JT in which respective TRPs transmit different PDSCHs or different PDSCH layers to a UE in a wireless communication system.

Referring to FIG. 7, case #1 700 is an example in which control information for PDSCHs transmitted from (N-1) additional TRPs is transmitted independently from control information for a PDSCH transmitted from a serving TRP in a situation in which (N-1) different PDSCHs are transmitted from the (N-1) additional TRPs (TRP #1 to TRP # (N-1)) other than the serving TRP (TRP #0) used for single PDSCH transmission. That is, the UE may acquire control information for PDSCHs transmitted from different TRPs (TRP #0 to TRP #(N-1)) through independent DCIs (DC1 #0 to DCI #(N-1)). Formats between the independent DCIs may be the same as or different from each other, and payload between the DCIs may also be the same as or different from each other. In case #1 described above, a degree of freedom of PDSCH control or allocation may be completely guaranteed, but when respective pieces of the DCI are transmitted by different TRPs, a difference between DCI coverages may be generated and reception performance may deteriorate.

Case #2 705 may be dependent on control information for a PDSCH, in which, in a situation where N-1 different PDSCHs are transmitted from N-1 additional TRPs (TRP#1 to TRP#N-1) in addition to a serving TRP (TRP#0) used during single PDSCH transmission, control information (DCI) for PDSCHs of the respective additional N-1 TRPs is transmitted, and each piece of the DCI is transmitted from the serving TRP.

For example, DCI #0 that is control information for a PDSCH transmitted from the serving TRP (TRP #0) may include all information elements of DCI format 1_0, DCI format 1_1, and DCI format 1_2, but shortened DCIs (hereinafter, referred to as sDCIs) (sDCI#0 to sDCI#(N-2)) that are control information for PDSCHs transmitted from the cooperative TRPs (TRP#1 to TRP#(N-1)) may include only some of the information elements of DCI format 1_0, DCI format 1_1, and DCI format 1_2. Accordingly, the sDCI for transmitting control information of PDSCHs transmitted from cooperative TPRs has smaller payload compared to the normal DCI (nDCI) for transmitting control information related to the PDSCH transmitted from the serving TRP, and thus can include reserved bits compared to the nDCI.

In case #2 described above, a degree of freedom of each PDSCH control or allocation may be limited according to content of information elements included in the sDCI, but reception capability of the sDCI is better than the nDCI, and thus a probability of the generation of difference between DCI coverages may become lower.

Case #3 710 is an example in which one piece of control information for PDSCHs of (N-1) additional TRPs is transmitted and the DCI is dependent on control information for the PDSCH transmitted from the serving TRP in a situation in which (N-1) different PDSCHs are transmitted from (N-1) additional TRPs (TRP#1 to TRP#(N-1)) other than the serving TRP (TRP#0) used for single PDSCH transmission.

For example, in the case of DCI #0 that is control information for the PDSCH transmitted from the serving TRP (TRP#0), all information elements of DCI format 1_0, DCI format 1_1, and DCI format 1_2 may be included, and in the case of control information for PDSCHs transmitted from cooperative TRPs (TRP#1 to TRP#(N-1)), only some of the information elements of DCI format 1_0, DCI format 1_1, and DCI format 1_2 may be gathered in one "secondary" DCI (sDCI) and transmitted. For example, the sDCI may include at least one piece of HARQ-related information such as frequency domain resource assignment and time domain resource assignment of the cooperative TRPs and the MCS. In addition, information that is not included in the sDCI such as a bandwidth part (BWP) indicator and a carrier indicator may follow the DCI (DCI #0, normal DCI, or nDCI) of the serving TRP.

In case #3 710, a degree of freedom of PDSCH control or allocation may be limited according to content of the information elements included in the sDCI but reception performance of the sDCI can be controlled, and case #3 710 may have smaller complexity of DCI blind decoding of the UE compared to case #1 700 or case #2 705.

Case #4 715 is an example in which control information for PDSCHs transmitted from (N-1) additional TRPs is transmitted in the DCI (long DCI) that is the same as that of control information for the PDSCH transmitted from the serving TRP in a situation in which different (N-1) PDSCHs are transmitted from the (N-1) additional TRPs (TRP#1 to TRP#(N-1)) other than the serving TRP (TRP#0) used for single PDSCH transmission. That is, the UE may acquire control information for PDSCHs transmitted from different TRPs (TRP#0 to TRP#(N-1)) through single DCI. In case #4 715, complexity of DCI blind decoding of the UE may not be increased, but a degree of freedom of PDSCH control or allocation may be low, for example, the number of cooperative TRPs is limited according to long DCI payload restriction.

In the following description and embodiments, sDCI may refer to various pieces of supplementary DCI such as shortened DCI, secondary DCI, or normal DCI (DCI formats 1_0 and 1_1 described above) including PDSCH control information transmitted in the cooperative TRP, and unless specific restriction is mentioned, the corresponding description may be similarly applied to the various pieces of supplementary DCI.

In the following description and embodiments, Case #1 700, case #2 705, and case #3 710 in which one or more pieces of DCI (or PDCCHs) are used to support NC-JT may be classified as multiple PDCCH-based NC-JT, and case #4 715 in which single DCI (or PDCCH) is used to support NC-JT may be classified as single PDCCH-based NC-JT. In multiple PDCCH-based PDSCH transmission, a CORESET for scheduling the DCI of the serving TRP (TRP#0) is separated from CORESETs for scheduling the DCI of cooperative TRPs (TRP#1 to TRP#(N-1)). A method of distinguishing the CORESETs may include a distinguishing method through a higher-layer indicator for each CORESET and a distinguishing method through a beam configuration for each CORESET. Furthermore, in single PDCCH-based NC-JT, single DCI schedules a single PDSCH having a plurality of layers instead of scheduling a plurality of PDSCHs, and the plurality of layers may be transmitted from a plurality of TRPs. In this case, association between a layer and a TRP transmitting the corresponding layer may be indicated through a transmission configuration indicator (TCI) indication for the layer.

According to embodiments of the disclosure, the "cooperative TRP" may be replaced by various terms such as a "cooperative panel" or a "cooperative beam" when actually applied.

According to embodiments of the disclosure, "the case in which NC-JT is applied" may be variously interpreted as "the case in which the UE simultaneously receives one or more PDSCHs in one BWP", "the case in which the UE simultaneously receives PDSCHs based on two or more transmission configuration indicator (TCI) indications in one BWP", and "the case in which the PDSCHs received by the UE are associated with one or more DMRS port groups" according to circumstances, but is used by one expression for the sake of descriptive convenience.

In the disclosure, a wireless protocol structure for NC-JT may be variously used according to a TRP development scenario. For example, if there is no backhaul delay between cooperative TRPs or there is a small backhaul delay, a method (a CA-like method) using a structure based on MAC layer multiplexing can be used. On the other hand, when the backhaul delay between cooperative TRPs is too large to be ignored (for example, when a time of 2 ms or longer is needed to exchange information such as CSI, scheduling, and HARQ-ACK between cooperative TRPs), a method (a DC-like method) of securing a characteristic robust to a delay can be used through an independent structure for each TRP from an RLC layer.

The UE supporting C-JT/NC-JT may receive a C-JT/NC-JT-related parameter or a setting value from a higher-layer configuration and set an RRC parameter of the UE based on the same. For the higher-layer configuration, the UE may use a UE capability parameter, for example, tci-StatePDSCH. Here, the UE capability parameter, for example, tci-StatePDSCH may define TCI states for PDSCH transmission, the number of TCI states may be configured as 4, 8, 16, 32, 64, and 128 in FR1 and as 64 and 128 in FR2, and a maximum of 8 states which can be indicated by 3 bits of a TCI field of the DCI may be configured through a MAC CE message among the configured numbers. A maximum value 128 refers to a value indicated by maxNumberConfiguredTCIstatesPerCC within the parameter tci-StatePDSCH which is included in capability signaling of the UE. In this way, a series of configuration procedures from the higher-layer configuration to the MAC CE configuration may be applied to a beamforming change command or a beamforming indication for at least one PDSCH in one TRP.

Next, a multi-DCI-based multi-TRP transmission method will be described. The multi-DCI based multi-TRP transmission method is a method in which a downlink control channel for NC-JT is configured based on multi-PDCCHs to transmit a PDSCH.

NC-JT based on multiple PDCCHs may have CORESETs or search spaces distinguished between respective TRPs when the DCI for PDSCH scheduling of the respective TRPs is transmitted. The CORESETs or the search spaces for the respective TRPs may be configured according to at least one of the following configuration cases.

- Higher-layer index configuration for each CORESET: CORESET configuration information configured via a higher layer may include an index value, and a TRP for PDCCH transmission in a corresponding CORESET may be distinguished by a configured index value for each CORESET. That is, in a set of CORESETs having the same higher-layer index value, it may be considered that the same TRP transmits the PDCCH or that the PDCCH for scheduling the PDSCH of the same TRP is transmitted. The index for each CORESET may be named CORESETPoolIndex, and it may be considered that the PDCCH is transmitted from the same TRP in CORESETs in which the same CORESETPoolIndex value is configured. For a CORESET for which no CORESETPoolIndex value has been configured, it may be considered that a default value has been configured for CORESETPoolIndex, and the default value may be 0.

  > In the disclosure, when the number of types of CORESETPoolIndex of each of a plurality of CORESETs included in higher-layer signaling PDCCH-Config is larger than 1, that is, when respective CORESETs have different CORESETPoolIndex, the UE may consider that the base station can use a multi-DCI-based multi-TRP transmission method.

  > Unlike this, in the disclosure, when the number of types of CORESETPoolIndex of each of a plurality of CORESETs included in higher-layer signaling PDCCH-Config is 1, that is, when all CORESETs have the same CORESETPoolIndex of 0 or 1, the UE may consider that the base station performs transmission using a single-TRP instead of using the multi-DCI-based multi-TRP transmission method.

- Multi-PDCCH-Config configuration: Multiple values of PDCCH-Config may be configured in one BWP, and each PDCCH-Config may include a PDCCH configuration for each TRP. That is, a list of CORESETs for each TRP and/or a list of search spaces for each TRP may be included in one PDCCH-Config, and it may be considered that one or more CORESETs and one or more search spaces included in one PDCCH-Config correspond to a specific TRP.

- CORESET beam/beam group configuration: A TRP corresponding to a corresponding CORESET may be distinguished via a beam or beam group configured for each CORESET. For example, if the same TCI state is configured for multiple CORESETs, it may be considered or determined that the CORESETs are transmitted via the same TRP, or that a PDCCH for scheduling of a PDSCH of the same TRP is transmitted in the corresponding CORESET.

- Search space beam/beam group configuration: A beam or beam group may be configured for each search space, and a TRP for each search space may be distinguished based on the configured beam or beam group. For example, if the same beam/beam group or TCI state is configured for multiple search spaces, it may be considered or determined that the same TRP transmits a PDCCH in a corresponding search space or that a PDCCH for scheduling of a PDSCH of the same TRP is transmitted in the corresponding search space.

As described above, by distinguishing the CORESETs or search spaces according to TRPs, it may be possible to classify PDSCH and HARQ-ACK information for each TRP, and based on this, it may be possible to independently generate an HARQ-ACK codebook and independently use a PUCCH resource for each TRP.

The configuration may be independent for each cell or BWP. For example, while two different CORESETPoolIndex values are configured for a PCell, a CORESETPoolIndex value may not be configured for a specific SCell. In this case, it may be considered that NC-JT transmission has been configured for the PCell, whereas NC-JT transmission has not been configured for the SCell for which no CORESETPoolIndex value has been configured.

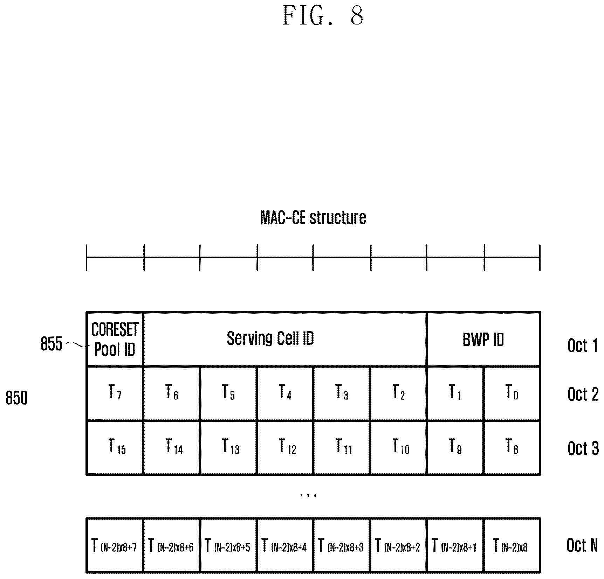

A PDSCH TCI state activation/deactivation MAC-CE which can be applied to the multi-DCI-based multi-TRP transmission method may follow FIG. 8.

FIG. 8 illustrates an example of a PDSCH TCI state activation/deactivation MAC-CE. If the UE does not receive a configuration of CORESETPoolIndex for each of all CORESETs within higher-layer signaling PDCCH-Config, the UE may ignore a CORESET Pool ID field 955 within a corresponding MAC-CE 950. If the UE can support the multi-DCI-based multi-TRP transmission method, that is, when respective CORESETs within higher-layer signaling PDCCH-Config have different CORESETPoolIndex, the UE may activate a TCI state within the DCI included in PDCCHs transmitted in CORESETs having a CORESETPoolIndex value which is the same as a value of a CORESET Pool ID field 955 within the corresponding MAC-CE 950. For example, if the CORESET Pool ID field 955 within the corresponding MAC-CE 950 has a value of 0, a TCI state within the DCI included in PDCCHs transmitted by the CORESETs having CORSETPoolIndex of 0 may follow activation information of the corresponding MAC-CE.

If the UE receives, from the base station, a configuration such that the multi-DCI-based multi-TRP transmission method can be used, that is, the number of types of CORESETPoolIndex of a plurality of CORESETs included in higher-layer signaling PDCCH-Config is larger than 1 or respective CORESETs have different CORESETPoolIndex, the UE is able to know that there are the following restrictions on PDSCHs scheduled by PDCCHs within respective CORESETs having different two CORESETPoolIndex.

First, if PDSCH indicated by PDCCHs within respective CORESETs having different two CORESETPoolIndex completely or partially overlap, the UE may apply TCI states indicated by the respective PDCCHs to different CDM groups. That is, two or more TCI states may not be applied to one CDM group

Secondly, if PDSCH indicated by PDCCHs within respective CORESETs having different two CORESETPoolIndex completely or partially overlap, the UE may expect that the numbers of actual front loaded DMRS symbols of respective PDSCHs, the numbers of actual additional DMRS symbols, locations of actual DMRS symbols, and DMRS types are not different.

Thirdly, the UE may expect that bandwidth parts indicated by PDCCHs within respective CORESETs having different two CORESETPoolIndexs are the same and subcarrier spacings are also the same.

Fourthly, the UE may expect that information on PDSCH scheduled by PDCCHs within respective CORESETs having different two CORESETPoolIndex are completely included in respective PDCCHs.

Next, a single-DCI-based multi-TRP transmission method will be described. The single-DCI-based multi-TRP transmission method is a method in which a downlink control channel for NC-JT is configured based on a single-PDCCH to transmit a PDSCH.

In the single-DCI-based multi-TRP transmission method, PDSCHs transmitted by a plurality of TRPs may be scheduled by one piece of DCI. Here, as a method of indicating the number of TRPs transmitting the corresponding PDSCHs, the number of TCI states may be used. That is, when the number of TCI states indicated by the DCI for scheduling the PDSCHs is 2, single PDCCH-based NC-JT transmission may be considered, and when the number of TCI states is 1, single-TRP transmission may be considered. The TCI states indicated by the DCI may correspond to one or two TCI states among TCI states activated by the MAC CE. If the TCI states of the DCI correspond to two TCI states activated by the MAC CE, a TCI codepoint indicated by the DCI is associated with the TCI states activated by the MAC CE, and this may correspond to a case in which the number of TCI states activated by the MAC CE, corresponding to the TCI codepoint, is 2.

As another example, when at least one of all codepoints of the TCI state field within the DCI indicate two TCI states, the UE may consider that the base station can perform transmission based on the single-DCI-based multi-TRP method. In this case, at least one codepoint indicating two TCI states within the TCI state field may be activated through an enhanced PDSCH TCI state activation/deactivation MAC-CE.

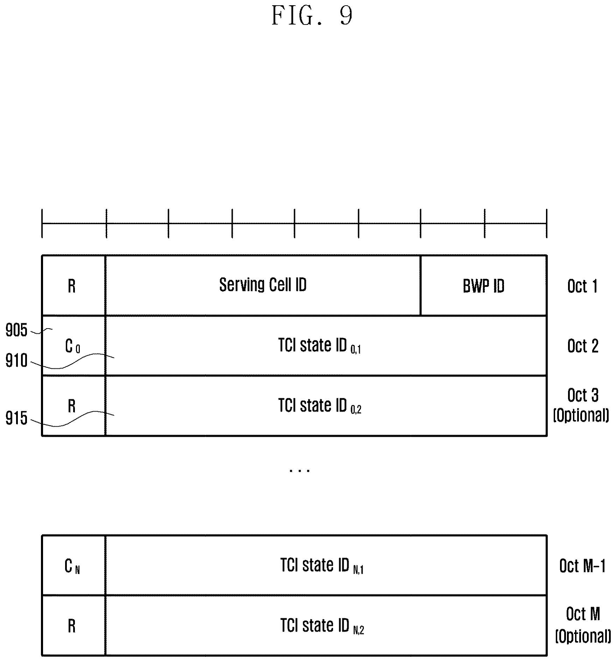

FIG. 9 illustrates an enhanced PDSCH TCI state activation/deactivation MAC-CE structure; The meaning of respective fields inside the MAC CE and values configurable for respective fields are as follows.

- Serving Cell ID: This field indicates the identity of the Serving Cell for which the MAC CE applies. The length of the field is 5 bits. If the indicated Serving Cell is configured as part of a simultaneousTCI-UpdateList1 or simultaneousTCI-UpdateList2 as specified in TS 38.331 [5], this MAC CE applies to all the Serving Cells configured in the set simultaneousTCI-UpdateList1 or simultaneous TCI-UpdateList2, respectively;
- BWP ID: This field indicates a DL BWP for which the MAC CE applies as the codepoint of the DCI bandwidth part indicator field as specified in TS 38.212 [9]. The length of the BWP ID field is 2 bits.
- $C_i$: This field indicates whether the octet containing TCI state ID$_{i,2}$ is present. If this field is set to 1, the octet containing TCI state ID$_{i,2}$ is present. If this field is set to 0, the octet containing TCI state ID$_{i,2}$ is not present;
- TCI state ID$_{i,j}$: This field indicates the TCI state identified by TCI-StateId as specified in TS 38.331 [5], where i is the index of the codepoint of the DCI Transmission configuration indication field as specified in TS 38.212 [9] and TCI state IDi,j denotes the jth TCI state indicated for the ith codepoint in the DCI Transmission Configuration Indication field. The TCI codepoint to which the TCI States are mapped is determined by its ordinal position among all the TCI codepoints with sets of TCI state IDi,j fields, i.e. the first TCI codepoint with TCI state ID0,1 and TCI state ID0,2 shall be mapped to the codepoint value 0, the second TCI codepoint with TCI state ID1,1 and TCI state ID1,2 shall be mapped to the codepoint value 1 and so on. The TCI state IDi,2 is optional based on the indication of the Ci field. The maximum number of activated TCI codepoint is 8 and the maximum number of TCI states mapped to a TCI codepoint is 2.

- R: Reserved bit, set to 0.

In FIG. 9, if a C0 field 905 has a value of 1, the corresponding MAC-CE may include a TCI state ID0,2 field 915 in addition to a TCI state ID0,1 field 910. This signifies that a TCI state ID0, 1 and a TCI state ID0,2 are activated for a zeroth codepoint of the TCI state field included within the DCI, and when the base station indicates the corresponding codepoint to the UE, the UE may receive an indication of two TCI states. If the C0 field 905 has a value of 0, the corresponding MAC-CE is unable to include the TCI state ID0,2 field 915, and this signifies that one TCI state corresponding to the TCI state ID0, 1 is activated for the zeroth codepoint of the TCI state field included in the DCI.

The configuration may be independent for each cell or BWP. For example, while a maximum number of activated TCI states corresponding to one TCI codepoint is 2 in the PCell, a maximum number of activated TCI states corresponding to one TCI codepoint may be 1 in a specific SCell. In this case, it may be considered that NC-JT is configured for the PCell but NC-JT is not configured for the SCell.

Next, a method of distinguishing single-DCI-based multi-TRP PDSCH repeated transmission schemes is described. The UE may receive an indication of different single-DCI-based multi-TRP PDSCH repetition transmission schemes (for example, time division multiplexing (TDM), FDM, and spatial division multiplexing (SDM)) from the base station according to a value indicated by a DCI field and a higher-layer signaling configuration. Table 27 below shows a method of distinguishing single or multi-TRP-based schemes indicated to a UE according to a specific DCI field value and a higher-layer signaling configuration.

[Table 27]

| Combination | Number. of TCI states | Number of CDM groups | repetitionNumber configuration and indication condition | Regarding repetitionScheme configuration | Transmission scheme indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 1 | Condition 3 | Configured | Multi-TRP FDM scheme A/FDM scheme B/TDM scheme A |
| 9 | 2 | 1 | Condition 1 | Not configured | Multi-TRP TDM scheme B |

Each column in Table 27 above may be described as follows.

- Number of TCI states (second column): refers to the number of TCI states indicated by a TCI state field within the DCI, and may be 1 or 2.
- Number of CDM groups (third column): refers to the number of different CDM groups of DRMS ports indicated by an antenna port field within the DCI. The number of CDM groups may be 1, 2, or 3.
- RepetitionNumber configuration and indication condition (fourth column): has three conditions according to whether repetitionNumber for all TDRA entries which can be indicated by a time domain resource allocation field within the DCI is configured and whether an actually indicated TDRA entry has a repetitionNumber configuration.

> Condition 1: case in which at least one of all TDRA entries which can be indicated by the time domain resource allocation field includes the configuration for repetitionNumber and the TDRA entry indicated by the time domain resource allocation field within the DCI includes the configuration of repetitionNumber larger than 1.

> Condition 2: case in which at least one of all TDRA entries which can be indicated by the time domain resource allocation field includes the configuration for repetitionNumber and the TDRA entry indicated by the time domain resource allocation field within the DCI does not include the configuration for repetitionNumber.

> Condition 3: case in which all TDRA entries which can be indicated by the time domain resource allocation field do not include the configuration for repetitionNumber.

- Regarding a repetitionScheme configuration (fifth column): refers to whether repetitionScheme which is higher-layer signaling is configured. RepetitionScheme which is higher-layer signaling may receive a configuration of one of 'tdmSchemeA', and 'fdmSchemeA', 'fdmSchemeB'.

- Transmission scheme indicated to UE (sixth column): refers to single or multiple-TRP schemes indicated according to each combination (first column) expressed by Table 29 above.

> Single-TRP: refers to single-TRP-based PDSCH transmission. If the UE receives a configuration of pdsch-AggegationFactor within higher-layer signaling PDSCH-config, the UE may receive scheduling of single TRP-based PDSCH repeated transmission a number of times received through the configuration. Otherwise, the UE may receive scheduling of single TRP-based PDSCH single transmission.

> Single-TRP TDM scheme B: refers to time resource division-based PDSCH repeated transmission between single TRP-based slots. The UE repeatedly transmits a PDSCH on a time dimension a number of times corresponding to the number of slots of repetitionNumber larger than 1 configured in the TDRA entry indicated by the time domain resource allocation field according to the above-described condition 1 related to repetition-Number. In this case, a start symbol and a symbol length of the PDSCH indicated by the TDRA entry is equally applied to every slot corresponding to repetitionNumber and the same TCI state is applied to each PDSCH repeated transmission. The corresponding scheme is similar to a slot aggregation scheme in that the PDSCH repeated transmission between slots is performed in time resources but is different therefrom in that a repeated transmission indication is dynamically determined based on the time domain resource allocation field within the DCI.

> Multi-TRP SDM: refers to a multi-TRP-based space resource division PDSCH transmission scheme. This is a method of dividing a layer and performing reception from each TRP and may increase reliability of PDSCH transmission in that transmission can be performed at a lowered coding rate through an increase in the number of layers even though it is not the repeated transmission scheme. The UE may receive a PDSCH by applying each of two TCI states indicated through the TCI state field within the DCI to two CDM groups indicated by the base station.

> Multi-TRP FDM scheme A: refers to a multi-TRP-based frequency resource division PDSCH transmission scheme and is a scheme having one PDSCH transmission occasion and capable of performing transmission with higher reliability by increasing frequency resources and lowering a coding rate even though it is not the repeated transmission such as multi-TRP SDM. Multi-TRP FDM scheme A may apply two TCI states indicated through the TCI state field within the DCI to frequency resources which do not overlap each other. If the PRB bundling size is determined as a wideband and the number of RBs indicated by the frequency domain resource assignment field is N, the UE may receive first ceil (N/2) RBs by applying a first TCI state and receive the remaining floor(N/2) RBs by applying a second TCI state. Here, ceil(.) and floor(.) are operators for rounding up and rounding off the first decimal place. If the PRB bundling size is determined as 2 or 4, even-numbered PRGs are received by applying a first TCI state and odd-numbered PRGs are received by applying a second TCI state.

> Multi-TRP FDM scheme B: refers to a multi-TRP-based frequency resource division PDSCH repeated transmission scheme and has two PDSCH transmission occasions to repeatedly transmit a PDSCH on each occasion. In the same manner as the multi-TRP FDM scheme A, multi-TRP FDM scheme B may also apply two TCI states indicated through the TCI state field within the DCI to frequency resources which do not overlap each other. If the PRB bundling size is determined as a wideband and the number of RBs indicated by the frequency domain resource assignment field is N, the UE may receive first ceil (N/2) RBs by applying a first TCI state and receive the remaining floor(N/2) RBs by applying a second TCI state. Here, ceil(.) and floor(.) are operators for rounding up and rounding off the first decimal place. If the PRB bundling size is determined as 2 or 4, even-numbered PRGs are received by applying a first TCI state and odd-numbered PRGs are received by applying a second TCI state.

> Multi-TRP TDM scheme A: refers to a PDSCH repeated transmission scheme within a multi-TRP-based time resource division slot. The UE has two PDSCH transmission occasion within one slot, and a first reception occasion may be determined based on a start symbol and a symbol length of the PDSCH indicated through the time domain resource allocation field within the DCI. A start symbol of a second reception occasion of the PDSCH may be an occasion to which a symbol offset is applied by higher-layer signaling StartingSymbolOffsetK from the last symbol of the first transmission occasion, and the transmission occasion corresponding to the symbol length indicated therefrom may be determined. If higher-layer signaling StartingSymbolOffsetK is not configured, the symbol offset may be considered as 0.

> Multi-TRP TDM scheme B: refers to a PDSCH repeated transmission scheme between multi-TRP-based time resource division slots. The UE has one PDSCH transmission occasion within one slot and may receive repeated transmission based on a start symbol and a symbol length of the same PDSCH during slots corresponding to repetitionNumber indicated by the time domain resource allocation field within the DCI. If repetitionNumber is 2, the UE may receive PDSCH repeated transmission of first and second slots by applying first and second TCI states, respectively. If repetitionNumber is larger than 2, the UE may use different TCI state application schemes according to configured higher-layer signaling tciMapping. If tciMapping is configured as cyclicMapping, first and second TCI states may be applied to first and second PDSCH transmission occasions, respectively, and the same TCI state application method is equally applied to the remaining PDSCH transmission occasions. If tciMapping is configured as sequenticalMapping, a first TCI state may be applied to first and second PDSCH transmission occasions, a second TCI state may be applied to third and fourth PDSCH transmission occasions, and the same TCI state application method may be equally applied to the remaining PDSCH transmission occasions.

Hereinafter, the single TCI state indication and activation method based on the unified TCI scheme is described. The unified TCI scheme may indicate a scheme for unifying and managing the transmit and receive beam management scheme divided into the TCI state scheme used in the downlink reception and the spatial relation information used in the uplink transmission of the UE in the existing Rel-15/16, as the TCI state. Hence, if indicated from the base station based on the unified TCI scheme, the UE may perform beam management using the TCI state even for the uplink transmission. In case that the UE is configured with higher layer signaling TCI-State having higher layer signaling tci-stateId-r17 from the base station, the UE may perform an operation based on the unified TCI scheme using the corresponding TCI-State.

TCI-State based on the unified TCI scheme may include two types of a joint TCI state or a separate TCI state.

The first type is the joint TCI state, and the UE may be indicated from the base station with the TCI state to apply for the uplink transmission and the downlink reception through one TCI-State. In case that the UE is indicated with TCI-State based on the joint TCI state, the UE may be indicated with a parameter to use for downlink channel estimation using an RS corresponding to qcl-Type1 of the corresponding joint TCI state based TCI-State, and a parameter to use as a downlink reception beam or a receive filter using an RS corresponding to qcl-Type2. In case that the UE is indicated with TCI-State based on the joint TCI state, the UE may be indicated with a parameter to use as an uplink transmission beam or a transmit filter using the RS corresponding to qcl-Type2 of the corresponding joint DL/UL TCI state based TCI-State. In doing so, if the UE is indicated with the joint TCI state, the UE may apply the same beam to the uplink transmission and the downlink reception.

The second type is the separate TCI state, and the UE may be indicated from the base station individually with a UL TCI state to apply for the uplink transmission and a DL TCI state to apply for the downlink reception. In case that the UE is indicated with the UL TCI state, the UE may be indicated with a parameter to use as an uplink transmission beam or a transmit filter using a reference RS or a source RS configured in the corresponding UL TCI state. In case that the UE is indicated with the DL TCI state, the UE may be indicated with a parameter to use for downlink channel estimation using the RS corresponding to qcl-Type1 of the corresponding DL TCI state, and a parameter to use as a downlink reception beam or a receive filter using the RS corresponding to qcl-Type2.

If the UE is indicated with the DL TCI state and the UL TCI state together, the UE may be indicated with the parameter to use as the uplink transmission beam or the transmit filter using the reference RS or the source RS configured in the corresponding UL TCI state. In addition, if the UE is indicated with the DL TCI state and the UL TCI state together, the UE may be indicated with the parameter to use for the downlink channel estimation using the RS corresponding to qcl-Type1 of the corresponding DL TCI state, and the parameter to use as the downlink reception beam or the receive filter using the RS corresponding to qcl-Type2. At this time, if the reference RSs or the source RSs configured in the DL TCI state and the UL TCI state indicated to the UE are different, the UE may individually apply the beam to the uplink transmission and the downlink reception based on the indicated UL TCI state and DL TCI state.

The UE may be configured from the base station with a maximum of 128 joint TCI states for each specific BWP in a specific cell through higher layer signaling. In addition, a maximum of 64 or 128 DL TCI states of the separate TCI state may be configured for each specific BWP in a specific cell through higher layer signaling based on a UE capability report. The DL TCI state of the separate TCI state and the joint TCI state may use the same higher layer signaling structure. For example, if 128 joint TCI states are configured and 64 DL TCI states are configured in the separate TCI state, 64 DL TCI states may be included in 128 joint TCI states.

A maximum of 32 or 64 UL TCI states of the separate TCI state may be configured for each specific BWP in a specific cell through higher layer signaling based on a UE capability report, the UL TCI state of the separate TCI state and the joint TCI state may use the same higher layer signaling structure, like the relationship of the DL TCI state of the separate TCI state and the joint TCI state, and the UL TCI state of the separate TCI state may use a different higher layer signaling structure from the joint TCI state and the DL TCI state of the separate TCI state.

As such, using the different or the same higher layer signaling structure may be defined in the standard, and may be distinguished through yet another higher layer signaling configured by the base station, based on a UE capability report containing information of whether to use one of the two types supported by the UE.

The UE may receive transmit and receive beam related indication in the unified TCI manner using one of the joint TCI state and the separate TCI state configured from the base station. The UE may be configured from the base station whether to use one of the joint TCI state and the separate TCI state through higher layer signaling.

The UE may receive the transmit and receive beam related indication using one scheme selected from the joint TCI state and the separate TCI state through higher layer signaling. In doing so, the transmit and receive beam indication method of the UE from the base station may include two methods of a MAC-CE based indication method and a MAC-CE based activation and DCI based indication method.

In case that the UE receives the transmit and receive beam related indication using the joint TCI state through the higher layer signaling, the UE may perform a transmit and receive beam application operation by receiving a MAC-CE indicating the joint TCI state from the base station, and the base station may schedule to the UE PDSCH reception including the corresponding MAC-CE over the PDCCH. In case that the MAC-CE includes one joint TCI state, the UE may determine an uplink transmission beam, a transmit filter and a downlink reception beam, or a receive filter using the joint TCI state indicated from 3 ms after PUCCH transmission including HARQ-ACK information indicating whether the PDSCH including the corresponding MAC-CE is successfully received or not. In case that the MAC-CE includes two or more joint TCI states, the UE may identify the multiple the joint TCI states indicated by the MAC-CE corresponding to respective codepoints of the TCI state field of DCI format 1_1 or 1_2 and activate the indicated joint TCI state, from 3 ms after PUCCH transmission including HARQ-ACK information indicating whether the PDSCH including the corresponding MAC-CE is successfully received or not. Next, the UE may receive DCI format 1_1 or 1_2 and apply one joint TCI state indicated by the TCI state field of the corresponding DCI to the uplink transmission and downlink reception beams. In doing so, DCI format 1_1 or 1_2 may include downlink data channel scheduling information (with DL assignment), or may not include the same (without DL assignment).

In case that the UE receives the transmit and receive beam related indication using the separate TCI state through higher layer signaling, the UE may perform the transmit and receive beam application operation by receiving the MAC-CE indicating the separate TCI state from the base station, and the base station may schedule to the UE PDSCH reception including the corresponding MAC-CE over the PDCCH. In case that the MAC-CE includes one separate TCI state set, the UE may determine an uplink transmission beam, a transmit filter and a downlink reception beam, or a receive filter using the separate TCI states included in the separate TCI state set indicated from 3 ms after PUCCH transmission including HARQ-ACK information indicating whether the corresponding PDSCH is successfully received or not. At this time, the separate TCI state set may indicate one or more separate TCI states of one codepoint of the TCI state field in DCI format 1_1 or 1_2. In addition, the separate TCI state set may include one DL TCI state, one UL TCI state, or one DL TCI state and one UL TCI state. In case that the MAC-CE includes two or more separate TCI state sets, the UE may identify the multiple the separate TCI state sets indicated by the MAC-CE corresponding to respective codepoints of the TCI state field of DCI format 1_1 or 1_2 and activate the indicated separate TCI state set, from 3 ms after PUCCH transmission including HARQ-ACK information indicating whether the corresponding PDSCH is successfully received or not. At this time, each codepoint of the TCI state field of DCI format 1_1 or 1_2 may indicate one DL TCI state, one UL TCI state, or one DL TCI state and one UL TCI state. The UE may receive DCI format 1_1 or 1_2 and apply the separate TCI state set indicated by the TCI state field of the corresponding DCI to the uplink transmission and downlink reception beams. In doing so, DCI format 1_1 or 1_2 may include downlink data channel scheduling information (with DL assignment), or may not include the same (without DL assignment).

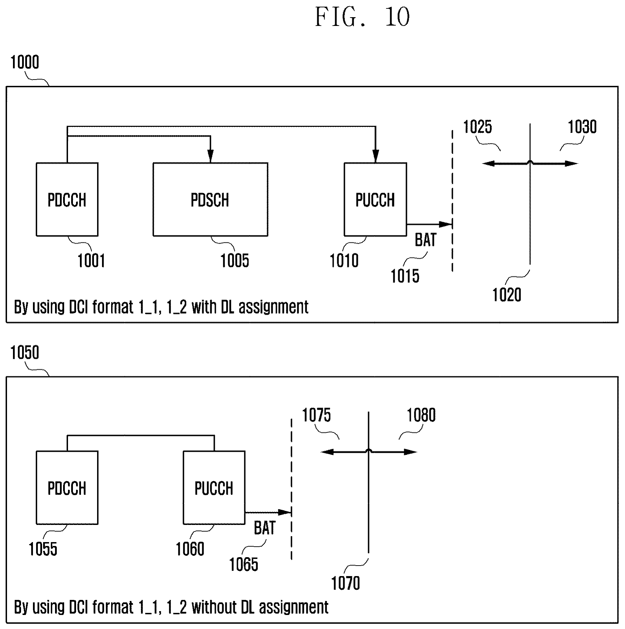

FIG. 10 illustrates a beam application time that can be considered in using a unified TCI scheme in a wireless communication system.

As described above, the UE may receive DCI format 1_1 or 1_2 with or without the downlink data channel scheduling information (DL assignment) from the base station, and apply one joint TCI state or separate TCI state set indicated by the TCI state field of the corresponding DCI to the uplink transmission and downlink reception beams.

- DCI format 1_1 or 1_2 with DL assignment 1000: If the UE receives from the base station DCI format 1_1 or 1_2 (PDCCH) including the downlink data channel scheduling information (indicated by reference numeral 1001) to indicate one joint TCI state or separate TCI state set based on the unified TCI scheme, the UE may receive a PDSCH scheduled based on the received DCI (indicated by reference numeral 1005), and transmit a PUCCH including HARQ-ACK indicating reception success or failure of the DCI and the PDSCH (indicated by reference numeral 1010). At this time, the HARQ-ACK may include success or failure of the DCI and the PDSCH both, the UE may transmit NACK if not receiving at least one of the DCI and the PDSCH, and the UE may transmit ACK if successfully receiving both the DCI and the PDSCH.
- DCI format 1_1 or 1_2 without the DL assignment 1050: If the UE receives from the base station DCI format 1_1 or 1_2 (PDCCH) not including the downlink data channel scheduling information (indicated by reference numeral 1055) to indicate one joint TCI state or separate TCI state set based on the unified TCI scheme, the UE may assume the following for the corresponding DCI:
- including CRC scrambled by CS-RNTI
- every bit value allocated to fields used as redundancy version (RV) fields is 1.
- every bit value allocated to fields used as MCS fields is.
- every bit value allocated to fields used as new data indication (NDI) fields is 0.
- every bit value allocated to an FDRA field is 0 for FDRA type 0, every bit value allocated to the FDRA field is 1 for FDRA type 1, and every bit value allocated to the FDRA field is 0 for FDRA scheme dynamicSwitch.

The UE may transmit a PUCCH including the HARQ-ACK indicating reception success or failure of DCI format 1_1 or 1_2 for which the above details are assumed (indicated by reference numeral 1060).

- With respect to DCI format 1_1 or 1_2 with the DL assignment 1000 and without the DL assignment 1050, if a new TCI state indicated by the DCI 1001 and the 1055 is already indicated and identical to the TCI state applied to the uplink transmission and downlink reception beams, the UE may maintain the previously applied TCI state. In case that the new TCI state is different from the existing TCI state, the UE may determine an application time 1030 and 1080 of the joint TCI state or separate TCI state set indicated from the TCI state field of the DCI after an initial slot 1020 and 1070 after a time corresponding to a beam application time (BAT) 1015 and 1065 after the PUCCH transmission, and may use the previously indicated TCI states 1025 and 1075 until the corresponding slot 1020 and 1070.
- With respect to DCI format 1_1 or 1_2 with the DL assignment 1000 and without the DL assignment 1050, the BAT may be configured with higher layer signaling based on UE capability report information using a specific number of OFDM symbols. Numerology of the BAT and the first slot after the BAT may be determined based on the smallest numerology among all the cells applying the joint TCI state or separate TCI state set indicated by the DCI.

The UE may apply one joint TCI state indicated through the MAC-CE or the DCI to reception of CORESETs connected to every UE-specific search space, reception of the PDSCH scheduled with the PDCCH transmitted from the corresponding CORESET and transmission of the PUSCH, and transmission of every PUCCH resource.

In case that one separate TCI state set indicated through the MAC-CE or the DCI includes one DL TCI state, the UE may apply the one separate TCI state set to reception of CORESETs connected to every UE-specific search space, and reception of the PDSCH scheduled with the PDCCH transmitted from the corresponding CORESET, and may apply the one separate TCI state set to every PUSCH and PUCCH resource based on the existing UL TCI state indicated.

In case that one separate TCI state set indicated through the MAC-CE or the DCI includes one UL TCI state, the UE may apply the UL TCI state to every PUSCH and PUCCH resource, and may apply, based on the previously indicated DL TCI state, to reception of CORESETs connected to every UE-specific search space, and reception of the PDSCH scheduled with the PDCCH transmitted from the corresponding CORESET.

- If one separate TCI state set indicated through the MAC-CE or the DCI includes one DL TCI state and one UL TCI state, the UE may apply the DL TCI state to reception of CORESETs connected to every UE-specific search space, and reception of the PDSCH scheduled with the PDCCH transmitted from the corresponding CORESET, and may apply the UL TCI state to every PUSCH and PUCCH resource.

Hereinafter, a single TCI state indication and activation method based on the unified TCI scheme is described. A UE receives scheduling of a PDSCH including the following MAC-CE from a base station, and from 3 slots after transmitting a HARQ-ACK for the corresponding PDSCH to the base station, the UE may interpret each code point of the TCI state field in DCI format 1_1 or 1_2 based on the information in the MAC-CE received from the base station. In other words, the UE may activate each entry of the MAC-CE received from the base station to each code point of the TCI state field in DCI format 1_1 or 1_2.

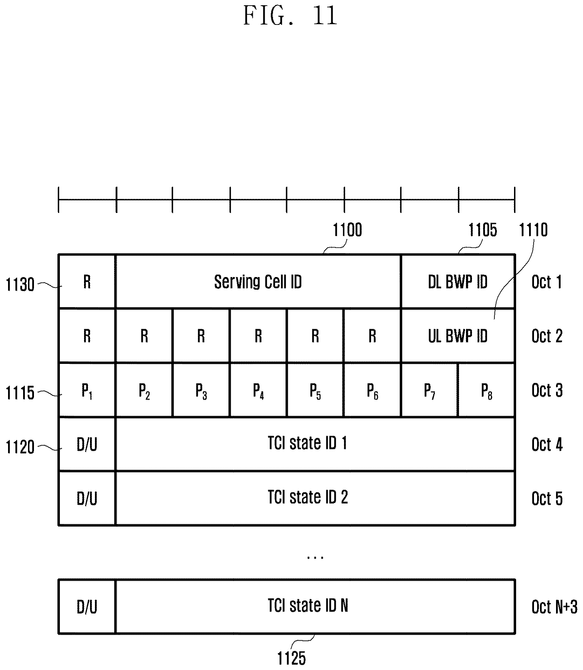

FIG. 11 illustrates an example of a MAC-CE structure for activation and indication of a joint TCI state or a separate DL or UL TCI state in a wireless communication system. The meaning of each field in the MAC-CE structure may be as follows.

- Serving Cell ID 1100: This field may indicate a serving cell to which the corresponding MAC-CE is applied. The length of this field may be 5 bits. In case that the serving cell indicated by this field is included in one or more of the higher layer signaling simultaneousU-TCI-UpdateList1, simultaneousU-TCI-UpdateList2, simultaneousU-TCI-UpdateList3, or simultaneousU-TCI-UpdateList4, the MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.

- DL BWP ID 1105: This field may indicate a DL BWP to which the corresponding MAC-CE is to be applied, and the meaning of each code point in this field may correspond to each code point of the BWP indicator in the DCI. The length of this field may be 2 bits.
- UL BWP ID 1110: This field may indicate a UL BWP to which the corresponding MAC-CE is to be applied, and the meaning of each code point of this field may correspond to each code point of the BWP indicator in the DCI. The length of this field may be 2 bits.
- $P_i$ 1115: This field may indicate whether each code point of the TCI state field in DCI format 1_1 or 1_2 has multiple TCI states or a single TCI state. In case that $P_i$ has a value of 1, it indicates that the corresponding ith code point has multiple TCI states, and this may indicate that the corresponding code point may include a separate DL TCI state and a separate UL TCI state. In case that Pi has a value of 0, it indicates that the corresponding ith code point has a single TCI state, and this may indicate that the corresponding code point may include one of a joint TCI state, a separate DCI TCI state, or a separate UL TCI state.
- D/U 1120: This field may indicate whether the TCI state ID field in the same octet is a joint TCI state, a separate DL TCI state, or a separate UL TCI state. In case that this field has a value of 1, the TCI state ID field within the same octet may be a joint TCI state or a separate DL TCI state, and if this field has a value of 0, the TCI state ID field in the same octet may be a separate UL TCI state.
- TCI state ID 1125: This field may indicate a TCI state that may be identified by the higher layer signaling TCI-StateId. In case that the D/U field is configured as 1, this field may be used to express a TCI-StateId that may be expressed by 7 bits. In case that the D/U field is configured as 0, the most significant bit (MSB) of this field may be considered a reserved bit, and the remaining 6 bits may be used to express the higher layer signaling UL-TCIState-Id. The maximum number of TCI states that can be activated may be 8 for a joint TCI state, and 16 for a separate DL or UL TCI state.
- R: Indicates reserved bit and may be configured as 0.

For the MAC-CE structure of FIG. 11 described above, the UE may include a 3rd octet including the $P_1, P_2, ..., P_8$ fields in FIG. 11 in the corresponding MAC-CE structure, regardless of whether unifiedTCI-StateType-r17 in MIMOparam-r17 in ServingCellConfig, which is higher layer signaling, is configured as joint or separate type. In this case, the UE may perform TCI state activation by using the fixed MAC-CE structure regardless of the higher layer signaling configured from the base station. As another example, for the MAC-CE structure of FIG. 11 described above, the UE may omit the 3rd octet including the $P_1, P_2, ..., P_8$ fields in FIG. 11 when the higher layer signaling unifiedTCI-StateType-r17 in MIMOparam-r17 in ServingCellConfig is configured as joint type. In this case, the UE may save a maximum of 8 bits of the payload of the corresponding MAC-CE according to the higher layer signaling configured from the base station. In addition, from the fourth octet in FIG. 11, all D/U fields located in the first bit of the corresponding octet may be regarded as R fields, and all of the R fields may be configured as 0 bits.

Next, additional single and multiple TCI state indication and activation methods based on the unified TCI scheme are described. The UE receives scheduling of a PDSCH including the MAC-CE from a base station, and from 3 slots after transmitting a HARQ-ACK for the corresponding PDSCH to the base station, the UE may interpret each code point of the TCI state field in DCI format 1_1 or 1_2, based on the information in the MAC-CE received from the base station. In other words, the UE may activate each entry of the MAC-CE received from the base station to each code point of the TCI state field in DCI format 1_1 or 1_2.

If the UE has been configured with two different CORESETPoolIndexes by higher layer signaling and has been configured with DLorJointTCIState or UL-TCIState which is higher layer signaling, the base station and the UE may expect that an R field 1130 existing in the first octet in FIG. 11, which is one of the MAC-CE structures indicating unified TCI state activation, is interpreted as a field indicating a CORESET Pool ID. In case that the corresponding CORESET Pool ID is configured as 0, the UE may consider that the corresponding MAC-CE may be applied to each code point of the TCI state field in a PDCCH transmitted through a CORESET corresponding to CORESETPoolIndex 0. In case that the corresponding CORESET Pool ID is configured as 1, the UE may consider that the corresponding MAC-CE may be applied to each code point of the TCI state field in the PDCCH transmitted through a CORESET corresponding to CORESETPoolIndex 1.

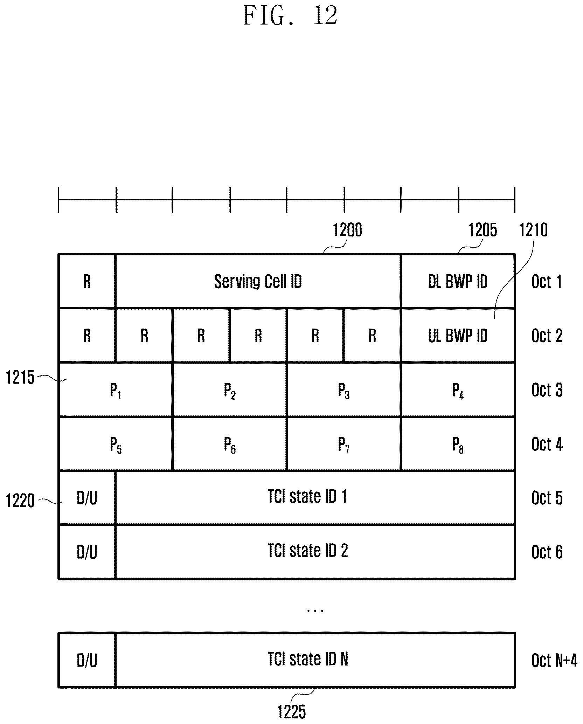

FIG. 12 illustrates another example of another MAC-CE structure for activation and indication of multiple joint TCI states or separate DL or UL TCI states in a wireless communication system. The meaning of each field in the MAC-CE structure may be as follows.

- Serving Cell ID 1200: This field may indicate a serving cell to which the corresponding MAC-CE is applied. The length of this field may be 5 bits. In case that the serving cell indicated by this field is included in one or more of the higher layer signaling simultaneousU-TCI-UpdateList1, simultaneousU-TCI-UpdateList2, simultaneousU-TCI-UpdateList3, or simultaneousU-TCI-UpdateList4, the corresponding MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.

- DL BWP ID 1205: This field may indicate a DL BWP to which the corresponding MAC-CE is to be applied, and the meaning of each code point in this field may correspond to each code point of the BWP indicator in the DCI. The length of this field may be 2 bits.
- UL BWP ID 1210: This field may indicate a UL BWP to which the corresponding MAC-CE is to be applied, and the meaning of each code point of this field may correspond to each code point of the BWP indicator in the DCI. The length of this field may be 2 bits.
- $P_i$ 1215: This field may indicate whether each code point of the TCI state field in DCI format 1_1 or 1_2 has multiple TCI states or one TCI state.

> In case that the UE is capable of configuring the unifiedTCI-StateType-r17 in MIMOparam-r17 of Serving-CellConfig, which is the higher layer signaling, as either joint or separate, this field may be interpreted as follows, regardless of which of the two pieces of configuration information is configured.

>> In case that the value of $P_i$ is "00", it indicates that the corresponding i-th code point has a single TCI state, and this may indicate that the corresponding code point may include one of a joint TCI state, a separate DCI TCI state, or a separate UL TCI state.
>> In case that the value of $P_i$ is "01", it indicates that the corresponding i-th code point has two TCI states, and this may indicate that the corresponding code point may include one of two joint TCI states, one separate DL TCI state and one separate UL TCI state, two separate DL TCI states, or two separate UL TCI states.
>> In case that the value of $P_i$ is "10", it indicates that the corresponding i-th code point has 3 TCI states, and this may indicate that the corresponding code point may include one separate DL TCI state and two separate UL TCI states, or two separate DL TCI states and one separate UL TCI state.
>> In case that the value of $P_i$ is "11", it indicates that the corresponding i-th code point has 4 TCI states, and this may indicate that the corresponding code point may include two separate DL TCI states and two separate UL TCI states.

> In case that the UE is capable of configuring the higher layer signaling unifiedTCI-StateType-r17 in MIMOparam-r17 of ServingCellConfig to one of joint, separate, and mixed modes, this field may be interpreted as follows, regardless of which of the possible configuration values is configured. The mixed mode may be represented by a single configuration value indicating that a general mixed mode of joint TCI state and separate DL or UL TCI state is possible, and it may be represented by multiple configuration values such as "1joint+1DL" and "1joint+1UL", and configured to indicate a specific combination of a specific number of joint TCI states and a specific number of separate DL or UL TCI states.

>> In case that the value of Pi is "00", it indicates that the corresponding i-th code point has a single TCI state, and this may indicate that the corresponding code point may include one of a joint TCI state, a separate DCI TCI state, or a separate UL TCI state.
>> In case that the value of $P_i$ is "01", it indicates that the corresponding i-th code point has two TCI states, and this may indicate that the corresponding code point may include one of two joint TCI states, one joint TCI state and one separate DL TCI state, one joint TCI state and one separate UL TCI state, one separate DL TCI state and one separate UL TCI state, two separate DL TCI states, or two separate UL TCI states. In case that the UE has received the higher layer signaling unifiedTCI-StateType-r17 configured with a value indicating that a general mixed mode of joint TCI state and separate DL or UL TCI states is possible, in MIMOparam-r17 of ServingCellConfig, both of the above-described 1 joint TCI state and one separate DL TCI state, and 1 joint TCI state and one separate UL TCI state may be possible. In case that the UE has the higher layer signaling unifiedTCI-StateType-r17 configured with either "1joint+1DL" or "1joint+1UL" in MIMOparam-r17 of ServingCellConfig, only the configuration value of unifiedTCI-StateType-r17 corresponding to one of the above-described 1 joint TCI state and one separate DL TCI state, and 1 joint TCI state and one separate UL TCI state may be possible.
>> In case that the value of $P_i$ is "10", it indicates that the corresponding i-th code point has 3 TCI states, and this may indicate that the corresponding code point may include one separate DL TCI state and two separate UL TCI states, or two separate DL TCI states and one separate UL TCI state.
>> In case that the value of $P_i$ is "11", it indicates that the corresponding i-th code point has 4 TCI states, and this may indicate that the corresponding code point may include two separate DL TCI states and two separate UL TCI states.

> This field may be 2 bits.

- D/U 1220: This field may indicate whether the TCI state ID field in the same octet is a joint TCI state, a separate DL TCI state, or a separate UL TCI state. In case that this field has a value of 1, the TCI state ID field in the same octet may be a joint TCI state or a separate DL TCI state, and if this field has a value of 0, the TCI state ID field in the same octet may be a separate UL TCI state.
- TCI state ID 1225: This field may indicate a TCI state that may be identified by the higher layer signaling TCI-StateId. In case that the D/U field is configured as 1, this field may be used to express a TCI-StateId that may be expressed by 7 bits. In case that the D/U field is configured as 0, the Most significant bit (MSB) of this field may be considered a reserved bit, and the remaining 6 bits may be used to express the higher layer signaling UL-TCIState-Id. The maximum number of TCI states that can be activated may be 8 for a joint TCI state, and 16 for a separate DL or UL TCI state.
- R: Indicates reserved bit and may be configured as 0.

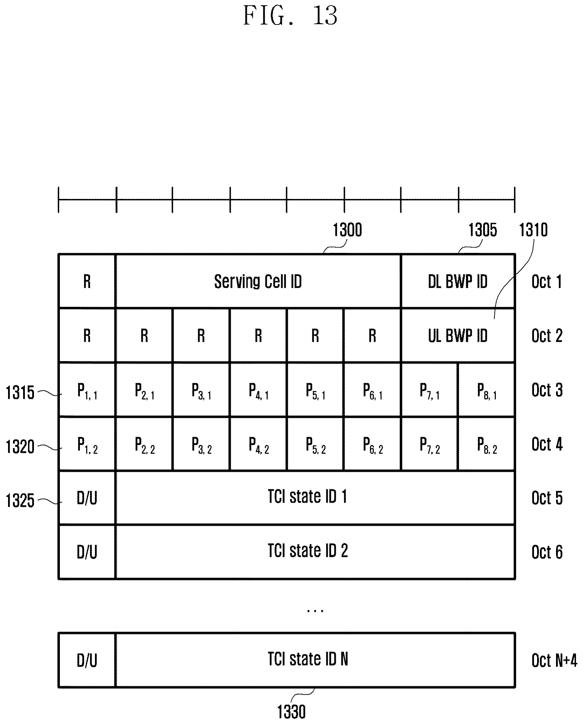

FIG. 13 illustrates yet another example of a MAC-CE structure for activation and indication of multiple joint TCI states or separate DL or UL TCI states in a wireless communication system. The meaning of each field in the MAC-CE structure may be as follows.

- Serving Cell ID 1300: This field may indicate a serving cell to which the corresponding MAC-CE is applied. The length of this field may be 5 bits. In case that the serving cell indicated by this field is included in one or more of the higher layer signaling simultaneousU-TCI-UpdateList1, simultaneousU-TCI-UpdateList2, simultaneousU-TCI-UpdateList3, or simultaneousU-TCI-UpdateList4, the corresponding MAC-CE may be applied to all serving cells included in one or more of simultaneousU-TCI-UpdateList1, simultaneousU-TCI-UpdateList2, simultaneousU-TCI-UpdateList3, and simultaneousU-TCI-UpdateList4 in which the serving cell indicated by this field is included.
- DL BWP ID 1305: This field may indicate a DL BWP to which the corresponding MAC-CE is to be applied, and the meaning of each code point in this field may correspond to each code point of the BWP indicator in the DCI. The length of this field may be 2 bits.
- UL BWP ID 1310: This field may indicate a UL BWP to which the corresponding MAC-CE is to be applied, and the meaning of each code point of this field may correspond to each code point of the BWP indicator in the DCI. The length of this field may be 2 bits.
- $P_{i,1}$ 1315, $P_{i,2}$ 1320: These two fields may indicate whether each code point of the TCI state field in DCI format 1_1 or 1_2 has multiple TCI states or one TCI state.

> In case that the UE is capable of configuring the higher layer signaling unifiedTCI-StateType-r17 in MIMOparam-r17 in ServingCellConfig to one of joint and separate modes, or one of joint, separate, and mixed modes, and if the higher layer signaling unifiedTCI-StateType-r17 is configured as joint, a 4th octet including the $P_{1,2}$, $P_{2,2}$, ..., and $P_{8,2}$ fields in FIG. 13 may be omitted, and only $P_{i,1}$ may be interpreted as follows. The mixed mode may be represented by a single configuration value indicating that a general mixed mode of a joint TCI state and a separate DL or UL TCI state is possible, or it may be represented by multiple configuration values such as "1joint+1DL" and "1joint+1UL", and configured to indicate a specific combination of a specific number of joint TCI states and a specific number of separate DL or UL TCI states.

>> In case that the value of $P_{i,1}$ is "0", it indicates that the corresponding i-th code point has 1 TCI state, and this may indicate that the corresponding code point includes 1 joint TCI state.
>> In case that the value of $P_{i,1}$ is "1", it indicates that the corresponding i-th code point has two TCI states, and this may indicate that the corresponding code point includes two joint TCI states.

> In case that the UE is capable of configuring the higher layer signaling unifiedTCI-StateType-r17 in MIMOparam-r17 of ServingCellConfig to one of joint and separate modes, or one of joint, separate, and mixed modes, and if the higher layer signaling unifiedTCI-StateType-r17 is configured with "separate", the UE may consider $P_{i,1}$ of the 3rd octet and $P_{i,2}$ of the 4th octet as a single 2-bit field and interpret the same as follows. The mixed mode may be represented by a single configuration value indicating that a general mixed mode of a joint TCI state and a separate DL or UL TCI state is possible, and may be represented by multiple configuration values such as "1joint+1DL" and "1joint+1UL", and configured to indicate a specific combination of a specific number of joint TCI states and a specific number of separate DL or UL TCI states.
> In case that the values of $P_{i,1}$ and $P_{i,2}$ are "0" and "0", respectively, it indicates that the corresponding i-th code point has a single TCI state, and this may indicate that the corresponding code point may include either a separate DL TCI state or a separate UL TCI state.

>> In case that the values of $P_{i,1}$ and $P_{i,2}$ are "0" and "1", respectively, it indicates that the corresponding i-th code point has two TCI states, and this may indicate that the corresponding code point may include one separate DL TCI state and one separate UL TCI state, two separate DL TCI states, or two separate UL TCI states.

>> In case that the values of $P_{i,1}$ and $P_{i,2}$ are "1" and "0", respectively, it indicates that the corresponding i-th code point has three TCI states, and this may indicate that the corresponding code point may include one separate DL TCI state and two separate UL TCI states, or two separate DL TCI states and one separate UL TCI state.

>> In case that the values of $P_{i,1}$ and $P_{i,2}$ are "1" and "1" respectively, it indicates that the corresponding i-th code point has four TCI states, and this may indicate that the corresponding code point may include two separate DL TCI states and two separate UL TCI states.

> In case that the UE is capable of configuring the higher layer signaling unifiedTCI-StateType-r17 in MIMOparam-r17 of ServingCellConfig to one of joint, separate, and mixed modes, and if the higher layer signaling unifiedTCI-StateType-r17 is configured with the mixed mode, the UE may interpret $P_{i,1}$ of the 3rd octet as follows, and may not transmit the 4th octet. The mixed mode may be represented by a single configuration value indicating that a general mixed mode of joint TCI state and separate DL or UL TCI state is possible.

>> In case that the value of $P_{i,1}$ is "0", it may indicate that the corresponding i-th code point contains one joint TCI state and one separate DL TCI state.

>> In case that the value of $P_{i,1}$ is "1", it may indicate that the corresponding i-th code point contains one joint TCI state and one separate UL TCI state.

> In case that the UE is capable of configuring the higher layer signaling unifiedTCI-StateType-r17 in MIMOparam-r17 of ServingCellConfig to one of joint, separate, and mixed modes, and if the higher layer signaling unifiedTCI-StateType-r17 is configured with the mixed mode, the UE may interpret $P_{i,1}$ of the 3rd octet and $P_{i,2}$ of the 4th octet as follows. The mixed mode may be represented by a single configuration value indicating that a general mixed mode of joint TCI state and separate DL or UL TCI state is possible.

> In case that the value of $P_{i,1}$ is "0", it may indicate that the corresponding i-th code point contains only one joint TCI state. In other words, since mixed mode is not used, the value of $P_{i,2}$ may be ignored.

>> In case that the value of $P_{i,1}$ is "1", it may indicate that the corresponding i-th code point includes one joint TCI state, and additionally includes one of the one separate UL TCI state and one separate DL TCI state. In other words, the mixed mode may be used for the corresponding code point, and if the value of $P_{i,2}$ is "0", one separate UL TCI state may be additionally used, and if the value of $P_{i,2}$ is "1", one separate UL TCI state may be additionally used.

- D/U 1325: This field may indicate whether the TCI state ID field in the same octet is a joint TCI state, a separate DL TCI state, or a separate UL TCI state. In case that this field has a value of 1, the TCI state ID field in the same octet may be a joint TCI state or a separate DL TCI state, and if this field has a value of 0, the TCI state ID field in the same octet may be a separate UL TCI state.

- TCI state ID 1330: This field may indicate a TCI state that can be identified by the higher layer signaling TCI-StateId. In case that the D/U field is configured as 1, this field may be used to express a TCI-StateId that may be expressed by 7 bits. In case that the D/U field is configured as 0, the most significant bit (MSB) of this field may be considered a reserved bit, and the remaining 6 bits may be used to express the higher layer signaling UL-TCIState-Id. The maximum number of TCI states that can be activated may be 8 for a joint TCI state, and 16 for a separate DL or UL TCI state.

- R: Indicates reserved bit and may be configured as 0.

The unifiedTCI-StateType-r17 in MIMOparam-r17 in ServingCellConfig, which is the higher layer signaling described above, may be defined as a new parameter, such as unifiedTCI-StateType-r18 in the higher layer signaling MIMOparam-r18 in ServingCellConfig, or an existing parameter may be reused.

In this specification, the technology of transmitting and receiving resources may be understood as transmitting and receiving a reference signal corresponding to the resource.

<First embodiment: Beam reporting method for simultaneous transmission using multiple panels>

Hereinafter, methods in which a UE performs beam reporting to a base station to simultaneously transmit an uplink channel using multiple panels according to an embodiment of the disclosure are described in detail.

NR Release 17 has newly introduced and reinforced transmission/reception techniques so that beams that were managed separately for uplink and downlink in previous releases may be supported using a single unified TCI framework. Based on the unified TCI described above, not only a reception beam for receiving downlink signals, but also a transmission beam for transmitting uplink signals may be indicated through TCI. To be precise, a UE may determine a transmission beam or a reception beam, based on the transmit filter or receive filter used to transmit or receive a reference signal indicated by the TCI state.

In order for a UE to transmit an uplink signal simultaneously using multiple panels, an uplink transmit filter may be required for each panel. In case that the UE selects two panels from among multiple panels and transmits an uplink signal through each transmission beam, two transmission beams should be determined. Extending this, if N panels among multiple panels are selected and uplink signals are transmitted through each transmission beam, N transmission beams should be determined. In order to support simultaneous uplink transmission using multiple panels, a method for reporting and determining N transmission beams may be commonly applied to a system supporting multi-panel simultaneous transmission based on a single DCI (sDCI) and a system supporting multi-panel simultaneous transmission based on a multi DCI (mDCI), and transmission beams determined in the same manner may be applied to simultaneous uplink transmission. Alternatively, although a method of reporting and determining N transmission beams may be commonly applied to both an sDCI-based system and an mDCI-based system, a separate transmission beam application method suitable for each system may be considered. Alternatively, a method of reporting and determining N transmission beams suitable for each sDCI-based system and a method of reporting and determining N transmission beams suitable for each mDCI-based system may be applied respectively, and the determined transmission beams may be applied respectively.

The UE may perform beam reporting to the base station to determine a transmission beam. To perform beam reporting, the UE may use the beam reporting method supporting up to NR Release 17. Alternatively, the UE may use a reinforced method of the beam reporting method supporting up to NR Release 17, or a new beam reporting method that is different from the beam reporting method supporting up to Release 17 may be introduced. For example, in order to support simultaneous uplink transmission using multiple panels, the UE may perform beam reporting by reporting the reinforced group-based beam reporting introduced in NR Release 17, additionally. Specifically describing the reinforced group based beam reporting, the CSI information reported by the UE to the base station may include the following information (here, the group-based beam reporting method supported by NR Release 17 may be assumed to be the same as the case where N=2 in the N transmission beams described above. In other words, the transmission beam reporting and determination method to support simultaneous transmission using multiple panels based on NR Release 17 to be described later assumes the case where N=2. However, this is only one example, and the case may be applied by extending N to an integer greater than 2.):

- resource set indicator,
- The first and second CSI-RS resource indicator (CRI) or SSB resource indicator (SSBRI) for each reported resource group (or, for convenience of explanation, "reported resource group" may also be defined as "beam group". A maximum of four groups may be defined, and the number of groups configured for the corresponding UE is determined based on the higher layer parameter configured by the base station (e.g., "nrofReportedGroups"))
- RSRP or differential RSRP for the reported CRI or SSBRI. At this time, an RSRP of 7 bits is reported only for the first resource of the first resource group, and a differential RSRP of 4 bits may be reported for each of the other resource groups and resources in a resource group.
- CORESETPoolIndex (This information may be implicitly omitted, and if omitted, the first beam information of each resource group may be associated with the case where COPRESETPoolIndex is configured as "0" or CORESETPoolIndex is not configured, and the second beam information of each resource group may be associated with the case where CORESETPoolIndex is "1". There may be mapping information between CORESETPoolIndex and beam information other than the example described may be included.)
- Associated SRS resource sets (This information may be implicitly omitted or not reported. If not reported, some association between each resource group and each SRS resource set may be defined in advance. For example, the first beam information in the resource group may be associated with the first SRS resource set (e.g., the SRS resource set having a smaller ID value among the multiple SRS resource sets with usage of "codebook" or "nonCodebook"), and the second beam information in the resource group may be associated with the second SRS resource set (e.g., the SRS resource set having a larger ID value among the multiple SRS resource sets with usage of "codebook" or "nonCodebook").

Here, one piece of information of the first reported resource (or first reported beam) and one piece of information of the second reported resource (or second reported beam) in the reported resource group (or beam group) are selected from among multiple (e.g., two in NR Release 17) resource sets for group-based beam reporting introduced in NR Release 17, and each selected resource (or beam) may be reported. In other words, in order to indicate a first beam of a predetermined beam group, the UE may select one of the CSI-RS resources in the first resource set or one of the SSB resources in the first resource set. In other words, in order to indicate a second beam of a predetermined beam group, the UE may select one of the CSI-RS resources in the second resource set or one of the SSB resources in the second resource set. At this time, the UE should be able to simultaneously transmit/receive uplink/downlink channels using multiple panels, based on the reception beams for receiving the two selected CSI-RS resources or SSB resources in each beam group.

Alternatively, similar to the supporting groupBasedBeamReporting introduced prior to NR Release 17, CRI or SSBRI may be selected from two different CSI-RS resources or two different SSB resources that can be transmitted and received simultaneously by the UE through one or multiple spatial domain receive filters. In beam reporting methods based on releases prior to NR Release 17, unlike group-based beam reporting based on NR Release 17, two separate resource sets may not be configured, and the resources selected by the UE may be any two different CSI-RS or SSB resources that the UE is capable of transmitting and receiving simultaneously using multiple panels among the multiple resources.

As described above, the CSI information reported by the UE to the base station may follow the CSI reporting method supported by NR Release 17, and the UE may also report additional CSI information for simultaneous multi-panel transmission to the base station. Specifically, the UE may additionally report the following information:

- The UE may report CapabilityIndex for the capability value indication with respect to the reported CRI or SSBRI (or any indicator of a name that may perform an operation to indicate the maximum number of SRS ports that the UE can support for the reported CRI or SSBRI, e.g., UE capability set index) by 2 bits to each resource group and resource of the resource group. Alternatively, the number of bits for CapabilityIndex reporting may be greater than 2 bits depending on the maximum number of SRS ports that can be supported. As another example of CapabilityIndex reporting, instead of reporting CapabilityIndex to each beam group and resources within the group, the UE may also report CapabilityIndex only for each beam group, and in this case, it may be understood that the maximum number of SRS ports according to the same CapabilityIndex may be supported for multiple resources in the reported beam group.

In other words, the UE may additionally report the maximum number of SRS ports that can be supported for each beam group and resources in the beam group, thereby supporting the base station to use this information to configure two TCI states for performing simultaneous support using multiple panels. For example, the base station may expect to receive two resources included in the same beam group through different panels. If a beam group and a CSI resource set according thereto are configured as described above, the base station may activate two TCI states by using the reported beam group pair. Alternatively, as in groupBasedBeamReporting prior to NR Release 17, the base station may activate two TCI states by using beam pairs within a beam group reported from two different CSI-RS resources or two different SSB resources that the UE is capable of receiving simultaneously through one or multiple spatial domain receive filters as described above.

In other words, for the MAC CE for activating/deactivating the unified TCI state reinforced in NR Release 17, only one TCI state corresponding to a single code point could be indicated in the past, but this may be extended so that a maximum of two TCI states corresponding to a single code point may be indicated. At this time, the two TCI states for supporting simultaneous transmission using multiple panels to a single code point may be determined by referring to the beam group pair of the beam group reporting received from the UE. In the above description, although the case where two TCI states are indicated through a single code point has been described for the convenience of explanation, in case that the UE simultaneously transmits signals using panels with the number of $N_{UL,panels}$ greater than 2, instead of two TCI states being indicated through one code point, $N_{UL,panels}$ TCI states may be indicated through one code point. As another example, the base station may configure the same CSI resource for each CSI resource set included in the same group via the higher layer configuration, and may also consider an operation in which the UE receives the same CSI resource by using different panels. This may be used as a method of allowing a single TRP and the UE to simultaneously transmit and receive signals using multiple panels.

As another method, when a UE reports a beam to a base station, panel information about the reported beam may be configured as additional CSI information and reported. For example, when the maximum number of panels that the UE is capable of supporting is defined as $N_{panel}$, the UE may add $\log_2 N_{panel}$ bits to each reported CRI or SSBRI to notify the base station of information about the corresponding panel. This may be defined as a "panel index", or may be configured as another form of CSI reporting information that may implicitly indicate rather than explicitly indicate that it is information about a panel.

As a specified example, if the number of resources in the CSI resource set associated with the CSI report is 8, and a CSI-RS resource having a CRI of 0, 1, 2, or 3 is received through the first panel of the two panels that the UE is able to operate, the UE may report the CRI and the RSRP based thereon (or SINR or any channel measurement information may be applicable) as well as one additional bit configured as "0". In other words, the UE may report to the base station that the CSI-RS resource has been received through the first panel of the two panels. Similarly, if a CSI-RS resource with a CRI of 4, 5, 6, or 7 is received through the second panel of the two panels that the UE is able to operate, the UE may report the CRI and the RSRP based thereon (or SINR or any channel measurement information may be applicable) along with one additional bit configured as "1".

As such, when the UE adds additional information to the CSI report, the base station may configure a beam combination that can be transmitted simultaneously using multiple panels, based on the reported beam information and the panel information according thereto, thereby transmitting a MAC CE that configures multiple TCI states through a single code point to the UE. The UE may receive the MAC CE from the base station, activate the TCI state, and finally applies the TCI state indicated by the a single code point specified by DCI format 1_1 or DCI format 1_2 to transmit uplink signals starting from the BAT time. Even in case that the panel information is added, an operation in which the base station configures the same CSI resource for each CSI resource set included in the same group via higher layer configuration and the UE receives the same CSI resource using different panels may also be considered. Likewise, even in case that the same CSI resource is configured for different resource sets within a group, the UE may report the CRI and the RSRP based thereon (or SINR or any channel measurement information may be applicable) along with panel information (e.g., including $\log_2 N_{panel}$ bits as described above) to the base station.

As described above, in the first embodiment, the UE may report beam information to the base station, and the base station may configure higher layer parameters to support simultaneous transmission using multiple panels based on the beam information, and transmit a MAC CE to the UE to activate the TCI state. Here, the MAC CE transmitted by the base station to the UE may be the same as the example of the MAC CE shown in FIG. 11 for indicating multiple TCI states based on the unified TCI method, such as the TCI state indication method based on the unified TCI method described above. Alternatively, the MAC CE may be configured as shown in FIG. 12 or FIG. 13 to indicate multiple TCI states through a single code point, enabling multiple TCI states for supporting multi-panel simultaneous transmission to be activated through a single code point.

As shown in the MAC CE (FIG. 11, FIG. 12, or FIG. 13), multiple TCI states activated for a single code point may be multiple TCI states allowing simultaneous transmission using multiple panels, or may be multiple TCI states that do not support simultaneous transmission using multiple panels. The former and the latter may be identified and configured by the base station through a group-based beam report that the UE transmits to the base station, and the UE and the base station may implicitly identify whether a combination of TCI states allows simultaneous transmission using multiple panels or a combination of TCI stats does not allow simultaneous transmission using multiple panels through the reported (received) group-based beam report.

Alternatively, an indicator may be added to indicate whether to perform multi-panel simultaneous transmission for each code point by using an unused field in the reserved field (R field) of the MAC CE. Alternatively, if the reserved field cannot secure the total number of code points, an indicator field may be newly added to the MAC CE by using a new Octat (8 bits) to indicate whether to perform multi-panel simultaneous transmission. For example, when there are a total of 8 code points, an additional bit for indicating multi-panel simultaneous transmission may be configured by a total of 8 bits, and the MAC CE may be configured by using the reserved field or adding a new Octat. In this case, when the first bit (MSB) is configured as 1 and multiple (e.g., two) TCI states are indicated for the first code point, the TCI state may be activated to perform simultaneous uplink transmission using multiple panels based on the multiple TCI states. Alternatively, when the first bit (MSB) is configured as 0 and multiple (e.g., two) TCI states are indicated for the first code point, it may indicate that simultaneous uplink transmission using multiple panels cannot be performed based on the multiple TCI states. In this case, when simultaneous transmission using multiple panels is not performed, the multiple TCI states indicated by the corresponding code point may support TDM-based multi-TRP transmission.

As described above, multiple TCI states may be activated/configured/indicated using a single code point, and the method of indicating a single code point meaning multiple TCI states through one field in the single DCI is a method suitable for simultaneous transmission using sDCI-based multi-panels. For the simultaneous transmission method using mDCI-based multi-panels in which the UE performs uplink transmission to a TRP that may correspond to each CORESETPoolIndex through multiple DCIs, multiple (e.g., N=2) transmission beam pairs may be determined as one beam group through the same or similar procedure as described, and the UE may report the determined beam group to the base station. The base station and the UE may define explicit rules in the 3GPP standard such that the first transmission beam information within a beam group is associated with CORESETPoolIndex = 0 (here, when the groupBasedBeamReporting method is considered, the first transmission beam information may imply the beam information reported first in any beam group of CSI information included in UCI, and the beam information includes the CRI or SSBRI), and the second reported beam information from among the CSI information included in the UCI is associated with CORESETPoolIndex = 1 (here, when the groupBasedBeamReporting method is considered, the second reported beam information may imply the beam information reported second in the beam group including the first transmission beam information of the CSI information included in the UCI, and the beam information includes the CRI or SSBRI). In addition, an explicit mapping rule between the transmission beam information and CORESETPoolIndex may be defined without being limited to this example.

Alternatively, the base station and the UE may define the association between the reported beam group and the CORESETPoolIndex according to an implicit manner. In this case, the relationship between the first beam information and the second beam information in the reported beam group and the CORESETPoolIndex having different indices follows the explicit rule described above, such that the first beam information in the beam group may be associated with CORESETPoolIndex = 0, and the second beam information in the beam group may be associated with CORESETPoolIndex = 1. In the case of following the implicit method, such association may not be specified in the 3GPP specifications, but the base station may consider the implicit relationship to indicate the beam information (e.g., CRI or SSBRI), which is associated with the corresponding CORESETPoolIndex within the beam group through the DCI associated with the corresponding CORESETPoolIndex (i.e., PDCCH received via a CORESET where CORSETPoolIndex is 0 (or may not be configured) or 1), as a reference signal (referenceSigal) of the TCI state (DLorJoint-TCIstate-r17 or UL-TCIstate) for the scheduled uplink channel transmission. Here, the DCI indicating the TCI state may correspond to a DL DCI format (e.g., DCI format 1_1 or 1_2) for indicating the downlink scheduling or the TCI state, in the same manner as the conventional unified TCI framework, and the indicated TCI state may be applied to uplink transmission after beam application time (BAT). Further, the DCI indicating the TCI state may correspond to a UL DCI format (e.g., DCI format 0_1 or 0_2) for scheduling the uplink PUSCH, and the indicated TCI state may be applied after the BAT or applied immediately at a timepoint at which the PUSCH scheduled by the corresponding DCI is transmitted. In addition, an implicit mapping rule between transmission beam information and CORESETPoolIndex may be defined, without being limited to these examples.

<Second embodiment: Method for configuring SRS for simultaneous transmission of codebook-based PUSCH using multiple panels>

In this embodiment, a method for configuring an SRS resource set and SRS resources to support simultaneous transmission of codebook-based PUSCH using multiple panels is specifically described.

In case that simultaneous uplink transmission using multiple panels is possible depending on the UE capability, the UE may configure the corresponding UE capability to be supportable and report this to the base station. For example, the UE capability report parameter that the UE reports to the base station may be "simulTx-PUCCH-PUSCH", and the value for the corresponding parameter may be configured as "supported" or "enable" to report that the UE may simultaneously transmit PUCCH or PUSCH using multiple panels. In this case, the UE may simultaneously transmit multiple PUCCHs or PUCCH repeated transmissions or multiple PUSCHs or PUSCH repeated transmissions using multiple panels. On the other hand, an operation in which the UE simultaneously transmits PUCCH and PUSCH using multiple panels may not be supported. The UE capability report parameter "simulTx-PUCCH-PUSCH" that the UE reports to the base station is only an example, and the UE may report to the base station that it is capable of simultaneous uplink transmission using multiple panels through parameters of different names that may perform similar or identical UE capability reports.

Thereafter, the base station may configure higher layer parameters to support the UE, and the configured higher layer parameters may include higher layer parameters for simultaneous uplink transmission using multiple panels. The base station may configure, in the UE, an SRS resource set for PUSCH transmission using a higher layer parameter for simultaneous uplink transmission using multiple panels. At this time, if codebook-based PUSCH transmission is supported using multiple panels, the base station may configure, in the UE, an SRS resource set with "usage" being "codebook". One or more (e.g., up to two) SRS resource sets, with "usage" configured as "codebook," may be configured for the simultaneous transmission of codebook-based PUSCH using multiple panels. Configuring multiple SRS resource sets with "usage" configured as "codebook" may indicate that the UE may transmit an uplink signal to multiple TRPs according to the relationship between TCI states as many as the number of configured SRS resource sets. For example, if two SRS resource sets with "usage" being "codebook" is configured in a UE by a base station, the UE may transmit an uplink signal to a maximum of two TRPs. For convenience of explanation, the disclosure mainly describes a method of simultaneously transmitting an uplink signal to two TRPs, but the disclosure may be extended based on the described method so that the UE may simultaneously transmit an uplink signal to more than two TRPs.

When a base station configures multiple SRS resource sets with "usage" being codebook, one or more SRS resources may be configured within each SRS resource set. When the base station configures a higher layer parameter for the SRS resource set for the UE, the base station may additionally configure "followUnifiedTCTstate-r17". In case that "followUnifiedTCTstate-r17" is configured for the SRS resource set, the UE transmits the SRS resource within the SRS resource set by considering a reference signal with qcl-Type configured as "typeD" in QCL-Info of the indicated "TCI-State" (if the higher layer parameter "unifiedTCI-StateType" is configured as "joint") or a reference signal configured in "TCI-UL-State" (if the higher layer parameter "unifiedTCI-StateType" is configured as "separate"). At this time, if the reference signal with qcl-Type configured as "typeD" is a downlink reference signal, the UE may transmit an SRS by considering a spatial filter used when receiving the corresponding reference signal, and if the reference signal configured as "typeD" is an uplink reference signal, the UE may transmit an SRS by considering the spatial filter used when transmitting the corresponding reference signal. At this time, the reference RS indicated by DLorJoint-TCIstate-r17 may be a CSI-RS within the NZP-CSI-RS-ResourceSet with the higher layer parameter repetition configured or a CSI-RS within the NZP-CSI-RS-ResourceSet with the higher layer parameter trs-Info set configured. Alternatively, the reference RS indicated by "UL-TCIstate" may be a CSI-RS within the NZP-CSI-RS-ResourceSet with the higher layer parameter repetition configured, a CSI-RS within the NZP-CSI-RS-ResourceSet with the higher layer parameter trs-Info set configured, an SRS resource with "usage" configured as "beamManagement", or an SSB associated with the PCI that is the same as or different from the PCI of the serving cell.

In the disclosure, for convenience of explanation, it is assumed that the higher layer parameter "followUnifiedTCTstate-r17" is configured for multiple SRS resource sets, and SRS resources are transmitted according to a spatial relation determined by referring to a TCI state (e.g., TCI-State or DLorJoint-TClstate-r17 or UL-TClstate) indicated by DCI.

As described in the first embodiment, when a MAC CE activating multiple TCI states is received by a UE from a base station to support simultaneous uplink transmission using multiple panels, and if a single codepoint including multiple (e.g., N) TCI states is indicated through DCI or the like, a first SRS resource set among the multiple SRS resource sets is associated with a first TCI state among the indicated N TCI states. In other words, the UE may transmit all SRS resources in the first SRS resource set according to the spatial relation determined with reference to the first TCI state among the indicated N TCI states. Here, the first SRS resource set may refer to an SRS resource set having a smallest SRS-ResourceSetId value among multiple SRS resource sets with "usage" configured as "codebook" (for convenience of description, an SRS resource set described in the second and third embodiments denotes an SRS resource set with "usage" configured as "codebook"). Similarly, a second SRS resource set among the multiple SRS resource sets may be associated with the second TCI state among the indicated N TCI states. In other words, the UE may transmit all SRS resources in the second SRS resource set according to the spatial relation determined with reference to the second TCI state among the indicated N TCI states. Similarly, for more than two SRS resource sets and TCI states, the UE may transmit all SRS resources included in the n-th SRS resource set according to the spatial relation determined with reference to the n-th TCI state. The above-described association between the TCI state and the SRS resource set is merely an example, and the disclosure is not limited by the above-described example.

At this time, if multiple SRS resources are included in one SRS resource set, each of SRS resources may be associated with a panel according to different methods as follows. In case that the UE has reported, through the UE capability report, that it may perform simultaneous uplink transmission using multiple panels, and the base station considers this and configures higher layer parameters for simultaneous uplink transmission using multiple panels, the association between the SRS resource and the panel described above may be established.

**[0204]** - [Association 1] Each SRS resource included in the SRS resource set may be associated with one panel supported by the UE. For example, the first SRS resource in the first SRS resource set may be associated with the first panel among the panels supported by the UE (the order among the multiple panels may be determined by the UE implementation if information about the panels is implicitly configured and indicated. Alternatively, if information about the panels is explicitly configured and indicated, it may be determined as the lowest panel indicator. The second, third, etc. panels thereafter may be defined similarly. The disclosure is not limited by this example). The second SRS resource in the first SRS resource set may be associated with the second panel among the panels supported by the UE. The configuration method described above is only one example, and a number of SRS resources other than 2 may be configured in one SRS resource set, and each SRS resource may be associated with a predetermined panel supported by the UE. However, this association should be configured so that the base station and the UE may have the same understanding, and a method of defining the association between SRS resources and panels supported by the UE in order, as in the example described above, may be considered.

Additionally, the group-based beam reporting information described above may be used so that the base station and the UE have the same understanding of the association between SRS resources and panels. Alternatively, information on the panels supported by the UE may be added and configured in the SRS-Resource, which is explicitly configured by a higher layer parameter. For example, a higher layer parameter such as "panel_Index" may be added in the higher layer parameter SRS-Resource, and the higher layer parameter may indicate the panel, supported by the UE, using one of the values from 0 to $N_{panel-1}$.

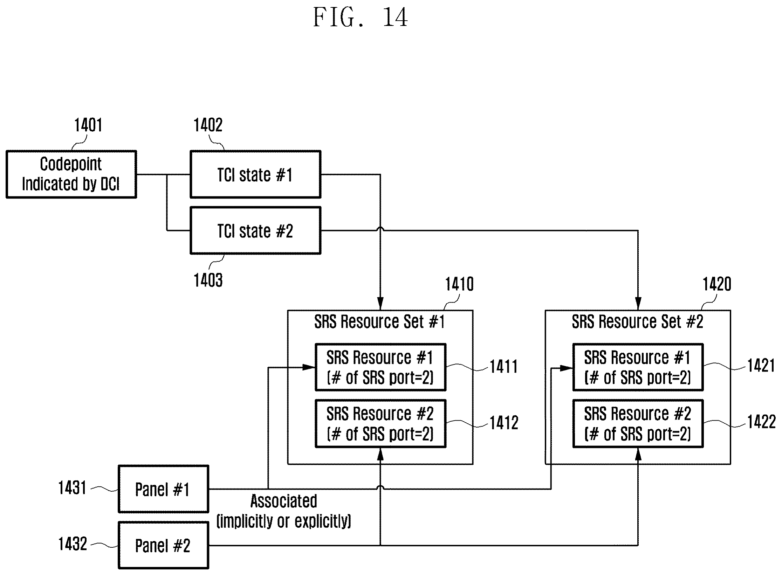

FIG. 14 illustrates an example of a case in which two SRS resource sets each include two SRS resources and a UE is capable of supporting simultaneous uplink transmission using two panels in a wireless communication system according to an embodiment of the disclosure.

According to FIG. 14, a code point indicated by a TCI field of DCI 1401, received by the UE from the base station, indicates two TCI states 1402 and 1402 for simultaneous transmission using multiple panels. At this time, the first TCI state 1402 may be used to determine the spatial relation for transmitting SRS resources 1411 and 1412 within the first SRS resource set 1410. The second TCI state 1403 may be used to determine the spatial relation for transmitting SRS resources 1421 and 1422 within the second SRS resource set 1420.

In addition, a first panel 1431 of the UE may be implicitly or explicitly associated with the first SRS resource 1411 within the first SRS resource set 1410. If the first TCI state includes an RS transmitted from a first TRP among multiple TRPs as a reference RS, the UE may understand that the first SRS resource 1411 within the first SRS resource set 1410 is configured to transmit an SRS to the first TRP by using the first panel 1431 of the UE. In addition, the first panel 1431 may also be implicitly or explicitly associated with the first SRS resource 1421 within the second SRS resource set 1420. If the second TCI state includes an RS transmitted from a second TRP among multiple TRPs as a reference RS, the UE may understand that the first SRS resource 1421 in the second SRS resource set 1420 is configured to transmit the SRS to the second TRP by using the first panel 1431 of the UE.

The second panel 1432 of the UE may be implicitly or explicitly associated with the second SRS resource 1412 within the first SRS resource set 1410. If the first TCI state includes an RS transmitted from a first TRP among multiple TRPs as a reference RS, the UE may understand that the second SRS resource 1412 within the first SRS resource set 1410 is configured to transmit an SRS to the first TRP by using the second panel 1432 of the UE. In addition, the second panel 1432 may also be implicitly or explicitly associated with the second SRS resource 1422 within the second SRS resource set 1420. If the second TCI state includes an RS transmitted from the second TRP among multiple TRPs as a reference RS, the UE may understand that the second SRS resource 1422 in the second SRS resource set 1420 is configured to transmit the SRS to the second TRP by using the second panel 1432 of the UE. FIG. 14 illustrates a case where the number of SRS ports of SRS resources included in each SRS resource set is two.

-    [Association 2] An SRS resource included in an SRS resource set may be associated with one panel or multiple panels. For example, a first SRS resource in a first SRS resource set may be associated with a first panel (or a second panel) among the panels supported by the UE, and a second SRS resource in the first SRS resource set may be associated with a first panel and a second panel among the panels supported by the UE. Similarly, a first SRS resource in a second SRS resource set may be associated with a second panel (or a first panel) among the panels supported by the UE, and a second SRS resource in the second SRS resource set may be associated with a first panel and a second panel among the panels supported by the UE. The described configuration method is only one example, and a number of SRS resources other than two may be configured in a single SRS resource set, and each SRS resource may be associated with any panel supported by the UE. In addition, unlike the described example, a first SRS resource in an SRS resource set may be associated with multiple panels. However, [Association 2] should also be configured similarly to [Association 1] so that the base station and the UE may have the same understanding, and the above-described example may be considered as one method of defining the association between the SRS resource and the panel supported by the UE.

In addition, the group-based beam reporting information described above may be used so that the base station and the UE have the same understanding of the association between SRS resources and panels. Alternatively, information on the panels supported by the UE may be added and configured in the SRS-Resource, which is explicitly configured by a higher layer parameter. For example, a higher layer parameter such as "panel_Index" may be added in the higher layer parameter SRS-Resource, and the higher layer parameter may indicate a panel associated with one or more value ranging from 0 to $N_{panel-1}$. Alternatively, "panel_Index" may be in the form of a bitmap, where each bit of the bitmap corresponds to a panel, and each bit may be configured as 1 for a panel associated with the corresponding SRS resource and 0 for a panel that is not associated therewith. In this case, "panel_Index" may be configured by $N_{panel}$ bits. Alternatively, 'panel_Index' may be configured by $\left(\log_2\left(\overset{N_{panel}}{\underset{k=1}{Q}}\left(\begin{array}{c}N_{panel}\\k\end{array}\right)\right)\right)$ bits so as to consider all possible combinations of supported panels.

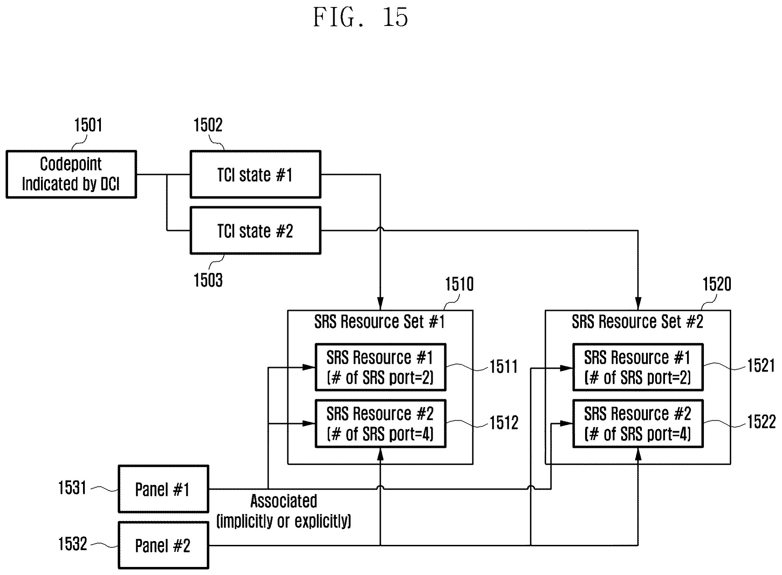

FIG. 15 illustrates an example of a case in which two SRS resource sets each include two SRS resources and a UE is capable of supporting simultaneous uplink transmission using two panels in a wireless communication system according to an embodiment of the disclosure.

According to FIG. 15, a code point indicated by a TCI field of DCI 1501 received by a UE from a base station indicates two TCI states 1502 and 1502 for simultaneous transmission using multiple panels. At this time, the first TCI state 1502 may be used to determine the spatial relation for transmitting SRS resources 1511 and 1512 within the first SRS resource set 1510. The second TCI state 1503 may be used to determine the spatial relation for transmitting SRS resources 1521 and 1522 within the second SRS resource set 1520.

In addition, a first panel 1531 of the UE may be implicitly or explicitly associated with the first SRS resource 1511 in the first SRS resource set 1510. If the first TCI state includes an RS transmitted from a first TRP among multiple TRPs as a reference RS, the UE may understand that the first SRS resource 1511 in the first SRS resource set 1510 is configured to transmit an SRS to a first TRP by using the first panel 1531 of the UE. At this time, for example, the number of SRS ports configured in the first SRS resource 1511 in the first SRS resource set 1510 may be two. A second panel 1532 of the UE may be implicitly or explicitly associated with the first SRS resource 1521 in the second SRS resource set 1520. If the second TCI state includes an RS transmitted from a second TRP among multiple TRPs as a reference RS, the UE may understand that the first SRS resource 1521 in the second SRS resource set 1520 is configured to transmit an SRS to the second TRP by using the second panel 1532 of the UE. In this case, for example, the number of SRS ports configured in the first SRS resource 1521 in the second SRS resource set 1520 may be two.

The second SRS resource 1512 configured in the first SRS resource set 1510 may be implicitly or explicitly associated with the first panel 1531 and the second panel 1532, both of which are supported by the UE. If the first TCI state includes an RS transmitted from the first TRP among multiple TRPs as a reference RS, it may be understood that the second SRS resource 1512 in the first SRS resource set 1510 is configured to transmit an SRS to the first TRP by using the first panel 1531 and the second panel 1532, both of which are supported by the UE.

At this time, the number of SRS ports configured in the second SRS resource 1512 in the first SRS resource set 1510 may be four, which is a number that may be supported by using both panels. Here, the first two SRS ports may be associated with the first panel 1531, and the remaining two SRS ports may be associated with the second panel 1532. The relationship between these SRS ports and the multiple panels may be implicitly associated in sequence or may be explicitly indicated by a new higher layer parameter. For example, as many panel_Indexes as the SRS ports for the SRS resource may be configured in the form of a sequence.

The second SRS resource 1522 configured in the second SRS resource set 1520 may be implicitly or explicitly associated with the first panel 1531 and the second panel 1532, both of which are supported by the UE. If the second TCI state includes an RS transmitted from the second TRP among multiple TRPs as a reference RS, it may be understood that the second SRS resource 1522 in the second SRS resource set 1520 is configured to transmit the SRS to the second TRP using the first panel 1531 and the second panel 1532, both of which are supported by the UE. In this case, the number of SRS ports configured in the second SRS resource 1522 in the second SRS resource set 1520 may be equal to 4, which is the number that may be supported using both panels. As with the second SRS resource 1512 within the first SRS resource set 1510 above, an implicit or explicit association may be established between an SRS port and a panel supported by a UE.

The above description is specifically described assuming the case where SRS resources are transmitted based on the indicated TCT state. However, even in the case where "followUnifiedTCTstate-r17" is not configured, simultaneous transmission using multiple panels may be supported by applying the above-described method based on the spatial relation info configured for SRS resources in each SRS resource set. In this case, the first TCI state described above may be replaced by the spatialRelationInfo configured by the higher layer parameter for SRS resources in the first SRS resource set, and the second TCI state may be replaced by the spatialRelationInfo configured by the higher layer parameter for SRS resources in the second SRS resource set.

According to the methods described above, multiple TCI states are indicated through sDCI, and each indicated TCI state may be associated with each SRS resource set and SRS resource(s) included in each SRS resource set. In other words, if each TCI state and an SRS resource set are associated, the UE may transmit the SRS resource by referring to the reference signal (referenceSignal) indicated by the TCI state. Further, the UE may transmit the PUSCH by configuring a PUSCH transmission port to be the same as the SRS port of the SRS resource indicated through SRI (In the case of supporting noncodebook-based PUSCH), or may transmit the PUSCH by applying a precoder indicated by TPMI to the PUSCH transmission port configured to be the same as the SRS port of the SRS resource indicated through SRI (In the case of supporting codebook-based PUSCH).

Meanwhile, through mDCI, multiple DCIs may be used to schedule each PUSCH, and each scheduled PUSCH may be fully/partially/non-overlapping in a time/frequency domain. Each DCI is associated with a different CORESETPoolIndex, and each scheduled PUSCH is also associated with a different CORESETPoolIndex. In this case, two different SRS resource sets may be configured by higher layer parameters to transmit the PUSCHs scheduled by each DCI. According to the explicit rule in the 3GPP technical specification or the implicit rule between the base station and the UE, the first SRS resource set (which may indicate the SRS resource set configured with a low (small) SRS-ResourceSetId among two different SRS resource sets with usage being either "codebook" or "nonCodebook") may be associated with a CORESET with CORESETPoolIndex = 0 (or CORESETPoolIndex is not configured) and a PUSCH scheduled by the DCI within the CORESET. The second SRS resource set (which may indicate the SRS resource set with a high (large) SRS-ResourceSetId among two different SRS resource sets with usage being either "codebook" or "nonCodebook") may be associated with a CORESET with CORESETPoolIndex = 1 and a PUSCH scheduled by the DCI within the CORESET.

The DCI associated with each CORESETPoolIndex may indicate a TCI state based on beam information within a beam group that may be associated with each CORESETPoolIndex as described in the first embodiment, to schedule the corresponding PUSCH transmission. For example, the TCI state (DLorJoint-TCIstate-r17 or UL-TCIstate) within the DCI received by a CORESET with CORESETPoolIndex=0 (or CORESETPoolIndex is not configured) may be indicated through the first beam information within the beam group. As described in the first embodiment, the base station may indicate a TCI state through the DCI corresponding to a DL DCI format (e.g., DCI format 1_1 or 1_2), and the UE may also apply the beam information indicated by the TCI state indicated by the DCI for uplink transmission after the BAT. Alternatively, as described in the first embodiment, the base station may indicate a TCI state through the DCI corresponding to a UL DCI format (e.g., DCI format 0_1 or 0_2), and the UE may apply the beam information indicated by the indicated TCI state for uplink transmission after the BAT, or may immediately apply the beam information corresponding to the indicated TCI state at the time of transmitting an uplink PUSCH scheduled by the corresponding DCI.

<Third embodiment: Configuration method and association between SRS port and PUSCH port when performing single DCI-based simultaneous multi-panel transmission>

In the third embodiment, for a UE supporting simultaneous transmission using single DCI (sDCI)-based multiple panels, a configuration method and association between a PUSCH port and an SRS port are specifically described.

In the second embodiment, two methods (association 1, association 2) for configuring an SRS resource set to support simultaneous multi-panel transmission are specifically described. If the UE is capable of transmitting a PUSCH to two TRPs simultaneously by using two panels based on the sDCI, the base station may indicate an SRS resource for PUSCH transmission, through an SRI, by using an SRS resource set associated with each TRP (each TRP may be indirectly indicated to the UE through multiple TCI states determined through group-based beam reporting) (or a higher layer parameter may be configured so as to follow beam information configured in an SRS resource set or beam information configured in an SRS resource within the SRS resource set instead of following a unified TCI state, however, for convenience of explanation, it is assumed that the UE transmits an SRS resource set according to multiple TCI states indicated by a unified TCI state, and the disclosure may be applied to both cases described above).

At this time, similar to the two SRI fields for supporting NR Release 17 sDCI TDM mTRP PUSCH repeated transmission, the base station may transmit one DCI including two SRI fields to the UE. In the two SRI fields, unlike NR Release 17, when a noncodebook PUSCH is supported, bits may be configured so that the second SRI field may also indicate the number of layers (ranks) of a PUSCH transmitted to the second TRP. In addition, the number of SRS resources that may be configured in each SRS resource set may be the same or different. In case that the numbers of SRS resources included in the first SRS resource set and the second SRS resource set are different, since, unlike NR Release 17, both SRI fields should be able to indicate the rank, the number of bits of the first SRI field and the number of bits of the second SRI field may be different, and depending on the configuration, the number of bits of the second SRI field may be greater than the number of bits of the first SRI field.

Similarly, when a codebook PUSCH is supported, the second TPMI field should be able to indicate the number of ranks of a second PUSCH to be transmitted, and the number of bits of each TPMI field may be selected differently depending on the number of SRS ports of the SRS resources indicated by each SRI field. Alternatively, if a constraint is added to ensure that the number of SRS ports of the SRS resources in each SRS resource set indicated by each SRI field is the same, unlike NR Release 17, the number of bits of the two TPMI fields may be selected to be the same because the second TPMI field should also be able to indicate the number of ranks.

If the base station schedules the UE to transmit two PUSCHs by using each panel toward each TRP simultaneously through mTRP multi-panel simultaneous transmission, the base station may include information for mTRP multi-panel simultaneous transmission in the DCI for PUSCH scheduling. For example, the base station may use an SRS resource set indicator transmitted to the UE to indicate multi-panel simultaneous transmission. In NR Release 17, the SRS resource set indicator has indicated either single-TRP TDM PUSCH repeat transmission or multi-TRP TDM PUSCH repeat transmission, but in NR Release 18, the SRS resource set indicator may be used to indicate either single-TRP transmission or multi-TRP transmission. In this case, the single-TRP transmission may be single-TRP panel selection-based transmission through a single panel or multi-panel simultaneous transmission for a single TRP through multiple panels. After the base station indicates single TRP transmission by using an SRS resource set indicator, the UE may select one SRS resource associated with one panel (for single TRP panel selection-based transmission) or two SRS resources associated with two panels (for single TRP multi-panel simultaneous transmission) from among the SRS resources having an association between SRS resources and panels as in the association 1 of the second embodiment, through an SRI field (since two SRI fields are included in the DCI as two SRS resource sets are established, the UE may use only the first SRI field or the second SRI field and ignore the remaining fields, or may use using all bits for the first SRI field and the second SRI field to configure a single SRI, thereby enabling more codepoints to be used). In other words, the base station may schedule either single TRP panel selection-based transmission or single TRP multi-panel simultaneous transmission for the UE through a combination of the SRS resource set indicator indication for single TRP transmission and the SRI field accordingly.

Here, the single TRP panel selection-based transmission may be the same as the single TRP transmission of releases prior to NR Release 18, and the association between the SRS port and the PUSCH port may be determined in the same manner accordingly. In other words, in the case of codebook PUSCH, the PUSCH port is configured to be the same as the SRS port of the indicated SRS resource, and the same number of PUSCH ports as the number of SRS ports determined according to the higher layer parameter configuration for the SRS resource may be configured. For example, if the number of SRS ports of the SRS resource selected by the SRI for scheduling PUSCH transmission is four, the UE may use 4 PUSCH ports for PUSCH transmission, and each PUSCH port may be configured to be the same as the SRS port. In addition, the first SRS port may be mapped to PUSCH port 0, the second SRS port may be mapped to PUSCH port 1, the third SRS port may be mapped to PUSCH port 2, and the fourth SRS port may be mapped to PUSCH port 3. For noncodebook PUSCH, each SRS resource is configured by only one SRS port, and the SRS port of the $(i+1)$th SRS resource in the SRS resource set may be mapped to PUSCH port $i$. For example, if four SRS resources are configured in the SRS resource set, the SRS port of the first SRS resource may be mapped to PUSCH port 0, the SRS port of the second SRS resource may be mapped to PUSCH port 1, the SRS port of the third SRS resource may be mapped to PUSCH port 2, and the SRS port of the fourth SRS resource may be mapped to PUSCH port 3.

In case that single TRP multi-panel simultaneous transmission is supported, if two SRS resources are indicated by SRI (which may be one field or two SRI fields), the mapping relationship between SRS ports and PUSCH ports within the two SRS resources may need to be determined. The following two mapping methods may be considered:

Mapping method 1: A method of mapping each SRS resource selected by the SRI to a PUSCH transmission for each panel, and of individually indexing a PUSCH port.

Mapping method 1 is a method of indexing a PUSCH port according to each PUSCH transmitted through each panel. The codebook PUSCH is described. When a PUSCH is transmitted using the first SRS resource, SRS ports 0 to 3 (when the number of SRS ports of the first SRS resource is four) equal to the SRS ports of the first SRS resource are mapped to PUSCH ports 0 to 3, which are configured with the same ports as the first SRS resource and are transmitted. Further, when the PUSCH transmitted using the second SRS resource, SRS ports 0 to 3 (when the number of SRS ports of the second SRS resource is four) equal to the SRS ports of the second SRS resource are mapped to PUSCH ports 0 to 3, which are configured with the same ports as those of the second SRS resource and are transmitted. In case that two SRS resources are indicated by a single SRI field, the first SRS resource may correspond to the SRS resource indicated first through the SRI field, and the second SRS resource may correspond to the SRS resource indicated second through the SRI field. In case that two SRI fields each indicate one SRS resource, the first SRS resource may be the SRS resource indicated through the first SRI field, and the second SRS resource may be the SRS resource indicated through the second SRI field. The specific example describes a case in which the SRS resource is configured by four ports. However, the SRS ports and PUSCH ports may be mapped in a similar manner even if the SRS resource is configured by a number of ports other than 4.

The noncodebook PUSCH is described. For a PUSCH transmitted through a first panel, among SRS resources having an association with the first panel (the association between SRS resources and panels may be defined by implicit or explicit higher layer parameters), a port of a first SRS resource may be mapped to PUSCH port 0 transmitted through the first panel, a port of a second SRS resource may be mapped to PUSCH port 1 transmitted through the first panel, a port of a third SRS resource may be mapped to PUSCH port 2 transmitted through the first panel, and a port of a fourth SRS resource may be mapped to PUSCH port 3 transmitted through the first panel. In addition, for a PUSCH transmitted through a second panel, among SRS resources having an association with the second panel (the association between SRS resources and panels may be defined by implicit or explicit higher layer parameters), a port of a first SRS resource may be mapped to PUSCH port 0 transmitted through the second panel, a port of a second SRS resource may be mapped to PUSCH port 1 transmitted through the second panel, a port of a third SRS resource may be mapped to PUSCH port 2 transmitted through the second panel, and a port of a fourth SRS resource may be mapped to PUSCH port 3 transmitted through the second panel. This is only an example, and the number of ports of the SRS resource or the number of SRS resources associated with each panel may be a value other than four as in the example. In this case, the mapping between the SRS port and the PUSCH port may be performed in the same manner as the method described above. In case that SRS resources to be transmitted through both panels are indicated through a single SRI field, in the above example, a total of eight SRS resources, including the first to fourth SRS resources that can be transmitted through the first panel and the first to fourth SRS resources that can be transmitted through the second panel, may be indicated through a single SRI field. At this time, the first four SRS resources among the eight indicated SRS resources may correspond to resources transmitted through the first panel, and the remaining four SRS resources may correspond to resources transmitted through the second panel. In case that SRS resources to be transmitted through each panel are indicated through two SRI fields, the four SRS resources indicated through the first SRI field may be the first to fourth SRS resources that can be transmitted through the first panel. The four SRS resources indicated through the second SRI field may be the first to fourth SRS resources that can be transmitted through the second panel.

Mapping method 2: A method of mapping both of two SRS resources selected by the SRI to PUSCH transmission and indexing the PUSCH port by considering all SRS ports of the two SRS resources.

Mapping Method 2 is a method of indexing PUSCH ports by considering all ports transmitted through two panels together. The codebook PUSCH is described. When a PUSCH is transmitted based on the first SRS resource, SRS ports 0 to 3 (when the number of SRS ports of the first SRS resource is four) equal to the SRS ports of the first SRS resource are mapped to PUSCH ports 0 to 3, which are configured with the same ports as the first SRS resource and are transmitted, and when the PUSCH is transmitted based on the second SRS resource, SRS ports 0 to 3 (when the number of SRS ports of the second SRS resource is four) equal to the SRS ports of the second SRS resource are mapped to PUSCH ports 4 to 7, which are configured with the same ports as the second SRS resource and are transmitted. In case that two SRS resources are indicated through a single SRI field, the first SRS resource may be the SRS resource indicated first through the SRI field and the second SRS resource may be the SRS resource indicated second through the SRI field. In case that two SRI fields each indicate one SRS resource, the first SRS resource may be the SRS resource indicated through the first SRI field and the second SRS resource may be the SRS resource indicated through the second SRI field. In the specific example, the case in which the SRS resource is configured by four ports has been described. However, the SRS ports and PUSCH ports may be mapped in a similar manner even if the SRS resource is configured by a number of ports other than 4.

The noncodebook PUSCH is described. For a PUSCH transmitted through the first panel, among SRS resources having an association with the first panel (the association between SRS resources and panels may be defined by implicit or explicit higher layer parameters), a port of a first SRS resource may be mapped to PUSCH port 0 transmitted through the first panel, a port of a second SRS resource may be mapped to PUSCH port 1 transmitted through the first panel, a port of a third SRS resource may be mapped to PUSCH port 2 transmitted through the first panel, and a port of a fourth SRS resource may be mapped to PUSCH port 3 transmitted through the first panel. In addition, for a PUSCH transmitted through a second panel, among SRS resources having an association with the second panel (the association between SRS resources and panels may be defined by implicit or explicit higher layer parameters), a port of a first SRS resource may be mapped to PUSCH port 4 transmitted through the second panel, a port of a second SRS resource may be mapped to PUSCH port 5 transmitted through the second panel, a port of a third SRS resource may be mapped to PUSCH port 6 transmitted through the second panel, and a port of a fourth SRS resource may be mapped to PUSCH port 7 transmitted through the second panel. This is only an example, and the number of ports of the SRS resource or the number of SRS resources associated with each panel may be a value other than 4 as in the example. In this case, the mapping between the SRS port and the PUSCH port may be performed in the same manner as the method described above. In case that SRS resources to be transmitted through both panels are indicated through a single SRI field, in the above example, a total of eight SRS resources, including the first to fourth SRS resources that can be transmitted through the first panel and the first to fourth SRS resources that can be transmitted through the second panel, may be indicated through a single SRI field. At this time, the first four SRS resources among the eight indicated SRS resources may correspond to resources transmitted through the first panel, and the remaining four SRS resources may correspond to resources transmitted through the second panel. In case that SRS resources to be transmitted through each panel are indicated through two SRI fields, the four SRS resources indicated through the first SRI field may be the first to fourth SRS resources that can be transmitted through the first panel. The four SRS resources indicated through the second SRI field may be the first to fourth SRS resources that can be transmitted through the second panel.

Mapping methods 1 and 2 are specifically described assuming single-TRP panel selection based on single DCI or single-TRP multi-panel simultaneous transmission based on single DCI. However, in order to support single-DCI based multi-TRP multi-panel simultaneous transmission for multiple TRPs using the same mapping method, port indexing among a PUSCH transmitted to each TRP through each panel and an SRS resource set associated with the corresponding PUSCH transmission and an SRS resource indicated through each SRI field may be performed using either mapping method 1 or mapping method 2.

For example, when the single DCI-based multi-TRP multi-panel simultaneous codebook PUSCH transmission is supported according to mapping method 1, in order for the UE to transmit a PUSCH to TRP1 by using the first panel, the first SRS port of the SRS resource indicated through the SRI within the first SRS resource configured for transmitting the PUSCH to TRP1 may be mapped to PUSCH port 0 transmitted to TRP1, the second SRS port may be mapped to PUSCH port 1 transmitted to TRP 1, the third SRS port may be mapped to PUSCH port 2 transmitted to TRP1, and the fourth SRS port may be mapped to PUSCH port 3 transmitted to TRP1. Additionally, in order to transmit the PUSCH to TRP2 by using the second panel, the first SRS port of the SRS resource indicated through the SRI within the second SRS resource configured for transmitting the PUSCH to TRP2 may be mapped to PUSCH port 0 transmitted to TRP2, the second SRS port may be mapped to PUSCH port 1 transmitted to TRP2, the third SRS port may be mapped to PUSCH port 2 transmitted to TRP2, and the fourth SRS port may be mapped to PUSCH port 3 transmitted to TRP2.

When the single DCI-based multi-TRP multi-panel simultaneous codebook PUSCH transmission is supported according to mapping method 2, the relationship between PUSCH ports and SRS ports of SRS resources indicated through the SRI within the first SRS resource set is the same as the mapping method 1, the first SRS port of an SRS resource indicated through the SRI within the second SRS resource configured for transmitting the PUSCH to TRP2 by using the second panel may be mapped to PUSCH port 4 transmitted to TRP2, the second SRS port may be mapped to PUSCH port 5 transmitted to TRP2, the third SRS port may be mapped to PUSCH port 6 transmitted to TRP2, and the fourth SRS port may be mapped to PUSCH port 7 transmitted to TRP2.

When the single DCI-based multi-TRP multi-panel simultaneous noncodebook PUSCH transmission is supported according to mapping method 1, for a PUSCH transmitted to TRP1, among SRS resources having an association with a first panel within a first SRS resource set (the association between SRS resources and panels may be defined by implicit or explicit higher layer parameters), a port of a first SRS resource may be mapped to PUSCH port 0 transmitted through the first panel, a port of a second SRS resource may be mapped to PUSCH port 1 transmitted through the first panel, a port of a third SRS resource may be mapped to PUSCH port 2 transmitted through the first panel, and a port of a fourth SRS resource may be mapped to PUSCH port 3 transmitted through the first panel. In addition, for a PUSCH transmitted through a second panel, among SRS resources having an association with the second panel in a second SRS resource set (the association between SRS resources and panels may be defined by implicit or explicit higher layer parameters), a port of a first SRS resource may be mapped to PUSCH port 0 transmitted through the second panel, a port of a second SRS resource may be mapped to PUSCH port 1 transmitted through the second panel, a port of a third SRS resource may be mapped to PUSCH port 2 transmitted through the second panel, and a port of a fourth SRS resource may be mapped to PUSCH port 3 transmitted through the second panel.

Similarly, when the single DCI-based multi-TRP multi-panel simultaneous noncodebook PUSCH transmission is supported according to mapping method 2, for a PUSCH transmitted using the first panel to TRP1, PUSCH ports are indexed in the same manner as in mapping method 1, and for a PUSCH transmitted using the second panel to TRP2, among SRS resources having an association with the second panel within the second SRS resource set (the association between SRS resources and panels may be defined by an implicit or explicit higher layer parameter), the port of the first SRS resource may be mapped to PUSCH port 4 transmitted through the second panel, the port of the second SRS resource may be mapped to PUSCH port 5 transmitted through the second panel, the port of the third SRS resource may be mapped to PUSCH port 6 transmitted through the second panel, and the port of the fourth SRS resource may be mapped to PUSCH port 7 transmitted through the second panel.

The above example assumes that the first SRS resource set is associated with the first panel and the second SRS resource set is associated with the second panel. However, in addition to the associations described in the above example, as described in the second embodiment (association 1 or association 2), even in case that an SRS resource set includes SRS resources associated with the first panel or the second panel, the SRS port through which the SRS resource is transmitted may be mapped to the PUSCH port by considering the panel to which the SRS resource is associated.

In other words, when the single DCI-based multi-TRP multi-panel simultaneous noncodebook PUSCH transmission is supported according to mapping method 1, ports of the PUSCH transmitted to TRP1 may be mapped as follows. Among some of SRS resources having an association with the first panel in the first SRS resource set, a port of the first SRS resource may be mapped to PUSCH port 0 transmitted through the first panel and a port of the second SRS resource may be mapped to PUSCH port 1 transmitted through the first panel. Among some resources having an association with the first panel in the second SRS resource set, a port of the first SRS resource may be mapped to PUSCH port 2 transmitted through the first panel and a port of the second SRS resource may be mapped to PUSCH port 3 transmitted through the first panel. In addition, ports of PUSCH transmitted to TRP2 may be mapped as follows. Among some of SRS resources having an association with the second panel in the first SRS resource set, a port of the first SRS resource may be mapped to PUSCH port 0 transmitted through the second panel, a port of the second SRS resource may be mapped to PUSCH port 1 transmitted through the second panel, a port of the first SRS resource associated with the second panel in the second SRS resource set may be mapped to PUSCH port 2 transmitted through the second panel, and a port of the second SRS resource may be mapped to PUSCH port 3 transmitted through the second panel.

Similarly, when the single DCI-based multi-TRP multi-panel simultaneous noncodebook PUSCH transmission is supported according to mapping method 2, in the case of a PUSCH transmitted using the first panel to TRP1, PUSCH ports are indexed in the same manner as in mapping method 1. Further, in the case of a PUSCH transmitted using the second panel to TRP2, among the SRS resources having an association with the second panel in the first SRS resource set, the port of the first SRS resource may be mapped to PUSCH port 4 transmitted through the second panel, and the port of the second SRS resource may be mapped to PUSCH port 5 transmitted through the second panel; and among the SRS resources having an association with the second panel in the second SRS resource set, the port the first SRS resource may be mapped to PUSCH port 6 transmitted through the second panel, and the port of the second SRS resource may be mapped to PUSCH port 7 transmitted through the second panel.

<Fourth embodiment: Method for scheduling and determining a multi-panel based simultaneous transmission technique>

In the fourth embodiment, a method is specifically described in which a base station performs scheduling according to one of several methods for simultaneously transmitting an uplink channel based on multiple panels, and the UE determines and performs one of several multi-panel-based simultaneous transmission techniques, based on scheduling information.

NR Release 18 may support not only the mTRP TDM-based uplink channel repeated transmission method introduced in NR Release 17, but also methods for simultaneous transmission of uplink channels based on multiple panels.

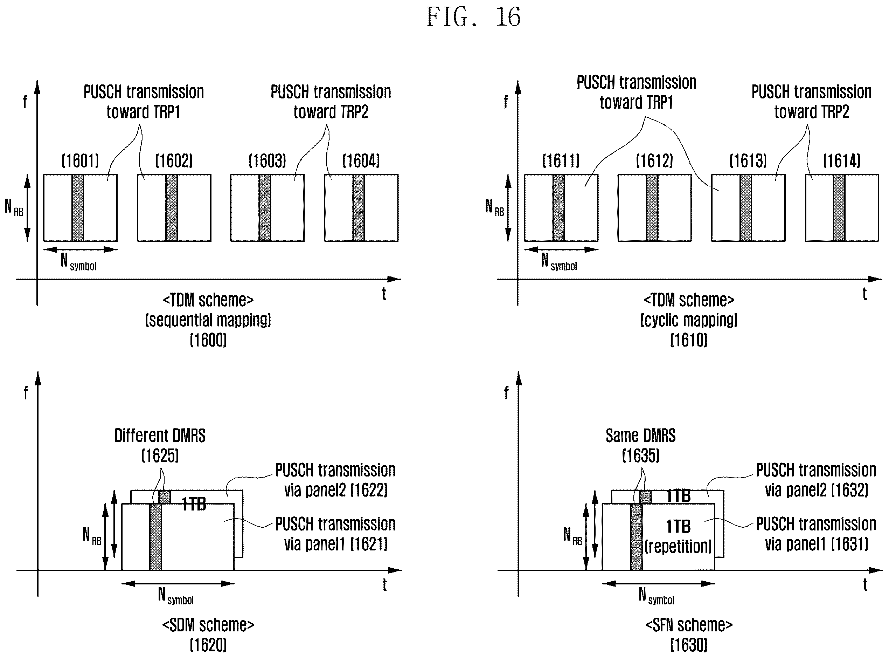

FIG. 16 illustrates an example of an mTRP TDM-based uplink channel repeated transmission method, and SDM and single frequency network (SFN) schemes corresponding to a multi-panel-based uplink channel simultaneous transmission method.

According to FIG. 16, the mTRP TDM-based uplink channel repeated transmission methods 1600 and 1610 may be distinguished into a "sequential mapping" method 1600 and a "cyclic mapping" method 1610 depending on the method of mapping an uplink beam (or a TRP receiving a signal) for multiple repeated transmissions. The mTRP TDM-based uplink channel repeated transmission method transmitted based on the "sequential mapping" method is such that in the first and second transmission occasion 1601 or 1602, the PUSCH is transmitted to the first TRP (or the first UL beam indicated through the first spatial relation info or the first TCI state (the DL and UL joint TCI state or the UL TCI state described above), etc.), and in the third and fourth transmission occasion 1603 or 1604, the PUSCH is transmitted to the second TRP (or the second UL beam indicated by the second spatial relation info or the second TCI state (the DL and UL joint TCI state or the UL TCI state described above), etc.). Even for the repeated transmissions of more than four, the transmission occasions and the TRPs toward which the uplink is directed may be mapped in the same pattern (i.e., the TRP receiving a signal changes every two transmission occasions).

The mTRP TDM-based uplink channel repetitive transmission method transmitted based on the "cyclic mapping" method is that in the first and third transmission occasion 1611 or 1613, the PUSCH is transmitted to the first TRP (or the first UL beam indicated through the first spatial relation info or the first TCI state (the DL and UL joint TCI state or the UL TCI state described above)), and in the second and fourth transmission occasion 1612 or 1614, the PUSCH is transmitted to the second TRP (or the second UL beam indicated through the second spatial relation info or the second TCI state (the DL and UL joint TCI state or the UL TCI state described above)). Even for the repeated transmissions of more than four, the transmission occasions and the TRPs toward which the uplink is directed may be mapped in the same pattern (i.e., the TRP receivING a signal changes in every transmission occasion).

An SDM scheme 1620 is a method of configuring one scheduled PUSCH resource considering the total number of layers as one TB and encoding information bits based on this configuration. Thereafter, according to the SDM scheme, the UE may divide resources in the spatial domain into half and transmit the PUSCH simultaneously at the same time using each panel. In other words, the UE transmits different layers of the PUSCH separately through each panel. For example, the UE may transmit a first part (a part including a layer of low index) through the first panel (indicated by reference numeral 1621), and transmit a second part (a part other than the first part) through the second panel (indicated by reference numeral 1622). This is only an example, and each part may be mapped to the panels and transmitted according to a different order than the example (e.g., the first part may be transmitted through the second panel, and the second part may be transmitted through the first panel). A DMRS 1625 of the PUSCH transmitted through each panel is configured by different DMRS ports, and the different DMRS ports may be included in different CDM groups. Alternatively, the different DMRS ports may be included in the same CDM group. In this case, when a single TB is split into two halves and transmitted through each panel, and transmitted to different TRPs by using each panel, a part of the TB will be received by a single TRP. Thereafter, the base station may collect them into a single signal and perform joint decoding or separate decoding thereon depending on the base station implementation, enabling the UE to receive the transmitted signal.

An SFN scheme 1630 is a method in which a UE configures and transmits the same TB and the same DMRS on the same frequency and time resources. The PUSCH transmitted through each panel may include the same data and the same DMRS. In other words, the UE may transmit the first part through the first panel (indicated by reference numeral 1631) and transmit the second part through the second panel (indicated by reference numeral 1632). This is just one example, and each part may be mapped to the panels and transmitted according to a different order than the example (e.g., the first part may be transmitted through the second panel and the second part may be transmitted through the first panel). In this case, when the same TB is transmitted through each panel and transmitted to different TRPs by using each panel, the same TB is received by a single TRP. Thereafter, the base station may collect them into a single signal and perform joint decoding or separate decoding thereon depending on the base station implementation, enabling the UE to receive the transmitted signal. In the SFN scheme 1630, the DMRS transmitted through each panel may be configured by the same DMRS port (indicated by reference numeral 1635). However, different precoding matrices may be applied to the DMRS of each panel having the same DMRS port index. In other words, although both panels transmit the same TB through the same DMRS port, precoding for the DMRS and data for each panel may be applied individually.

In addition to the transmission method described above in FIG. 16, repeated transmission based on the SDM scheme may also be supported to transmit the same TB. FIG. 16 mainly describes uplink channel transmission using mTRP and multiple panels, but dynamic switching may be additionally considered, and accordingly, transmission methods based on sTRP and panel switching using a single panel may also be considered.

<Fifth embodiment: Method for configuring a phase tracking reference signal for uplink data transmission simultaneously transmitted through multiple panels based on SFN>

In the fifth embodiment, a method for transmitting a PTRS for PUSCH transmission using an SFN-based multi-panel simultaneous transmission method is specifically described.

As described above in the fourth embodiment, in the SFN-based multi-panel simultaneous transmission method, the UE transmits the same TB through two panels, and the same DMRS port index is applied to each panel transmission. However, since the channels between each panel and the TRP are different, precoding may be applied individually to the PUSCH and DMRS transmitted through each panel. In other words, when the base station schedules the SFN-based multi-panel simultaneous transmission for the UE, the base station may instruct the same TB, the same antenna port field (indicating the DMRS port index), the same PUSCH resources, etc. for the PUSCH transmitted through all panels by the scheduling DCI, and may instruct individual SRI and individual TPMI for the PUSCH applied to each panel by the scheduling DCI. In this case, even if individual SRI and individual TPMI are applied to the PUSCH transmission for each panel, the same data should be transmitted with the same TB size, and thus the precoding matrix (or the same number of SRS ports) for transmitting the same number of layers should be indicated.

The PTRS is used to measure a phase error in a time domain and correct the phase error to perform channel estimation with higher reliability because DMRS are sparsely placed in the time domain. In order to accurately measure the phase error, the phase error in the time domain should be measured for all DMRS ports, but in this case, the overhead due to RS increases significantly. Therefore, in the NR system, one PTRS port or at most two PTRS ports are designed to be operated when performing uplink data transmission. Unlike downlink PTRS, the base station indicates, to the UE via the scheduling DCI, which port of the DMRS ports is associated with the PTRS port among the DMRS ports of the scheduled PUSCH.

A downlink PTRS used to receive a PDSCH based on mTRP may operate up to two ports (at this time, the RRC parameter maxNrofPorts to support this should be configured as "n2"), and each PTRS port is associated with the lowest indexed DMRS port among the DMRSs of the PDSCH transmitted to each TCI state. This is because the base station may identify information about layers with good channel conditions and layers with relatively poor channel conditions, based on the channel state information reported by the UE, and may then order the layers based on the information to transmit a downlink signal. In other words, the base station may determine the lowest indexed DMRS port as an appropriate layer to be associated with the PTRS, based on the CSI reported by the UE.

However, since the UE does not receive a report of separate status information about the uplink channel from the base station, there is a problem in that the UE is unable to determine an uplink layer appropriate for association with the PTRS port. Taking this into consideration, in the NR system, a DCI field is added in the DCI format 0_1 or 0_2 that schedules the PUSCH, allowing the base station to determine and indicate the DMRS associated with the PTRS, and DCI is transmitted to the UE. As described above, in the NR system, DMRS port candidates with which PTRS port 0 or PTRS port 1 may be associated are defined in advance, and the base station may indicate a DMRS port with which a PTRS is associated and transmitted when transmitting the scheduled PUSCH by using 2 bits of the PTRS-DMRS association field in the DCI for scheduling the PUSCH.

When a UE transmits a PUSCH, the number of actual PTRS ports indicating PTRS ports through which data is actually transmitted may be determined by the configured maximum number of uplink PTRS ports and the SRI (SRS resource indicator) or TPMI (transmitting precoding matrix indicator) indicated by the scheduling DCI (or the RRC parameter configured for configured grant-based PUSCH transmission). As described above, in the case of codebook-based PUSCH, a DMRS port corresponding to the layer may be associated with a specific PTRS port depending on a PUSCH port used to transmit the layer. Specifically, a DMRS port for a layer transmitted through PUSCH port 0 (the first PUSCH port) or/and PUSCH port 2 (the third PUSCH port) may be associated with PTRS port 0. A DMRS port for a layer transmitted through PUSCH port 1 (the second PUSCH port) and/or PUSCH port 3 (the fourth PUSCH port) may be associated with PTRS port 1. In the case of noncodebook-based PUSCH, PTRS ports that may be associated with SRS resources used for transmitting layers is configured by RRC parameters. For example, SRS resource 0 and SRS resource 1 may be associated with PTRS port 0, and SRS resource 2 and SRS resource 3 may be associated with PTRS port 1. In addition, if a scheduled PUSCH is transmitted through the same PUSCH port as the SRS resource 0 and SRS resource 2, the first layer of the corresponding PUSCH may be associated with PTRS port 0, and the second layer may be associated with PTRS port 1. All of the examples described specifically correspond to the case in which the maximum number of supportable uplink PTRS ports "maxNrofPorts" configured in the RRC parameter PTRS-UplinkConfig is configured as "n2". In case that "maxkNrofPorts" is configured as "n1", one of the four DMRS ports may be associated with PTRS port 0. As such, if the maximum number of uplink PTRS ports supported is two, in the case of a codebook-based PUSCH, the number of actually transmitted PTRS ports associated with the layers of a PUSCH scheduled through the TPMI may be determined by the PUSCH antenna port used for the transmitted layer, and in the case of a noncodebook-based PUSCH, the number of actually transmitted PTRSs associated with the layers of a PUSCH scheduled through the SRI may be determined by the RRC configuration configured for the SRS resource indicated by the SRI.

When the UE supports SFN-based multi-panel simultaneous transmission, the number of actual PTRS ports transmitted with the SFN PUSCH scheduled for each panel may differ because different SRIs or/and TPMIs may be indicated for the PUSCH transmitted through each panel.

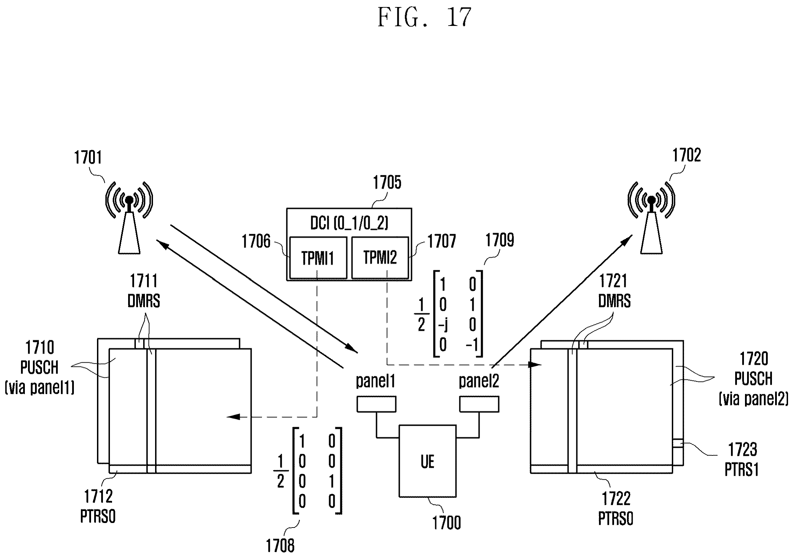

FIG. 17 illustrates an example of the number of actual PTRS ports for a PUSCH transmitted through each panel during codebook-based SFN PUSCH multi-panel transmission.

FIG. 17 assumes a case in which a UE 1700 performs codebook-based SFN PUSCH multi-panel simultaneous transmission 1710 or 1720 scheduled by single DCI 1705 with respect to two TRPs 1701 and 1702. The number of precoders and actual PTRS ports for the PUSCHs 1710 and 1720 transmitted through each panel is determined by DCI format 0_1 or 0_2 1705 scheduling the corresponding PUSCH (or, in the case of configured grant-based PUSCH, the precoder indicators configured with RRC (e.g., "precodingAndNumberOfLayers" and "precodingAndNumberOfLayers2" in "rrc-ConfiguredUplinkGrant" in "ConfiguredGrantConfig")). It is assumed that the UE 1700 has two panels and the both panels may support 4 PUSCH ports.

A base station may transmit, to the UE, single DCI 1705 including a first TPMI 1706 and a second TPMI 1707 to indicate precoders and layers for the PUSCHs 1710 and 1720 to be transmitted through each panel within the single DCI 1705 for scheduling SFN-based multi-panel simultaneous transmission. The UE may apply a precoder 1708 for two-layer transmission using four PUSCH ports indicated through the first TPMI 1706 to the PUSCH 1710 transmitted through the first panel (associated with the first SRS resource set or the first unified TCI state). At this time, the UE may configure a DMRS 1711 according to the RRC configuration for the DMRS and the number of symbols in the time domain of the scheduled PUSCH 1710 and then transmit the DMRS together with the PUSCH. In case that the PUSCH 1710 transmitted through the first panel (associated with the first SRS resource set or the first unified TCI state) is transmitted by applying the indicated precoder 1708, it may be seen that both the first layer and the second layer are transmitted through the first PUSCH port or the third PUSCH port. This is understood as meaning that both layers may be associated with PTRS port 0, and therefore PTRS port 0 may be transmitted in association with one of the two DMRS ports (indicated by reference numeral 1712).

Similarly, the UE may apply a precoder 1709 for two-layer transmission using four PUSCH ports indicated by the second TPMI 1707 to the PUSCH 1720 transmitted through the second panel (associated with the second SRS resource set or the second unified TCI state). At this time, the UE may similarly configure a DMRS 1721 according to the RRC configuration for the DMRS and the number of symbols in the time domain of the scheduled PUSCH 1720 and then transmit the DMRS together with the PUSCH. The corresponding DMRS is transmitted through the same resources as the DMRS 1711 that has been transmitted together with the PUSCH 1710 transmitted through the first panel, and the UE transmits the corresponding DMRS by applying a different precoding matrix, even though the DMRS port index is the same. In case that the PUSCH 1720 transmitted through the second panel (associated with the second SRS resource set or the second unified TCI state) is transmitted by applying the indicated precoder 1709, the first layer is transmitted through the first PUSCH port and the third PUSCH port, and the second layer is transmitted through the second PUSCH port and the fourth PUSCH port. Since the first layer may be associated with PTRS port 0 and the second layer may be associated with PTRS port 1, PTRS port 0 and PTRS port 1 may be associated with and transmitted to DMRS ports, respectively (indicated by reference numerals 1722 and 1723).

As illustrated in the example in FIG. 17, the number of actual PTRS ports transmitted together with the PUSCH 1710 transmitted through the first panel may be different from the number of actual PTRS ports transmitted together with the PUSCH 1720 transmitted through the second panel. In other words, an example is illustrated where the actual number of PTRS ports of the PUSCH simultaneously transmitted through each panel may be different when codebook-based SFN PUSCH multi-panel simultaneous transmission is supported.

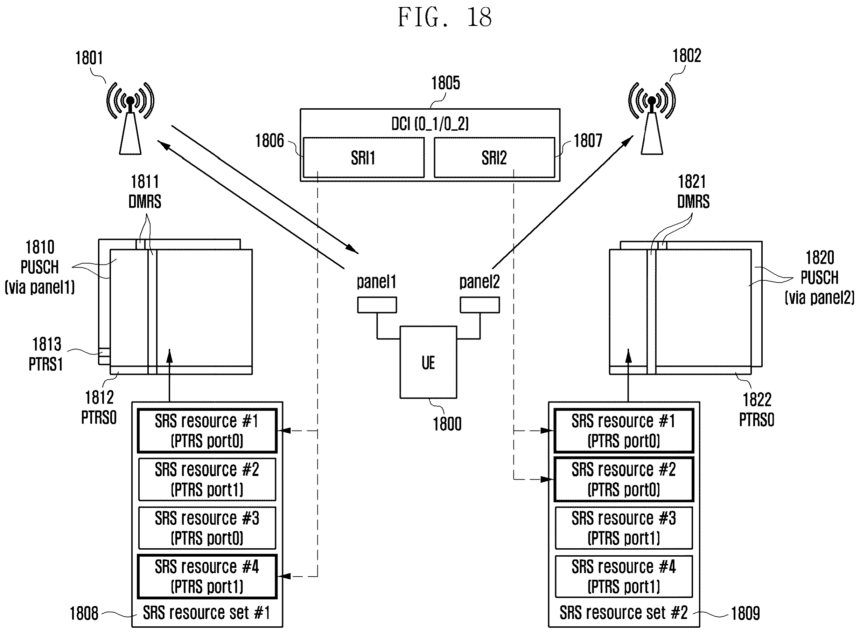

The same case may also occur when noncodebook-based SFN PUSCH multi-panel simultaneous transmission is supported. FIG. 18 illustrates an example of the number of actual PTRS ports for PUSCH transmitted through each panel during noncodebook-based SFN PUSCH multi-panel transmission.

FIG. 18 assumes a case in which a UE 1800 performs noncodebook-based SFN PUSCH multi-panel simultaneous transmission 1810 or 1820 scheduled by single DCI 1805 with respect to two TRPs 1801 and 1802. The number of precoders and actual PTRS ports through which the PUSCHs 1810 and 1820 are transmitted through each panel is determined by DCI format 0_1 or 0_2 1805 scheduling the corresponding PUSCH (or, in the case of configured grant-based PUSCH, the precoder indicators configured with RRC (e.g., "srs-ResourceIndicator" and "srs-ResourceIndicator2" in "rrc-ConfiguredUplinkGrant" in "ConfiguredGrantConfig")). It is assumed that the UE 1800 has two panels and the both panels may support SRS resource sets based on four SRS resources. The base station may indicate SRS resources for indicating precoders and layers for the PUSCHs 1810 and 1820 transmitted through each panel to the UE, by using a first SRI 1806 and a second SRI 1807 in single DCI 1805 for scheduling SFN-based multi-panel simultaneous transmission.

The UE performs two-layer PUSCH transmission using the first panel (based on the first SRS resource set or the first unified TCI state) by configuring PUSCH ports in the same manner as SRS resource #1 and SRS resource #4 in the first SRS resource set #1 1808 indicated through the first SRI 1806 in the DCI 1805 and transmitting each layer through each PUSCH port. At this time, each layer may have a one-to-one mapping relationship with each DMRS port. SRS resource #1 and SRS resource #3 in the first SRS resource set #1 1808 are associated with PTRS port 0, and SRS resource #2 and SRS resource #4 are associated with PTRS port 1. Therefore, the first layer of PUSCH 1810 transmitted through the first panel (associated with the first SRS resource set or the first unified TCI state) is transmitted in association with PTRS port 0 1812 because it is transmitted with the same antenna port configuration as SRS resource #1, and the second layer is transmitted in association with PTRS port 1 1813 because it is transmitted with the same antenna port configuration as SRS resource #4. Accordingly, PTRS port 0 and PTRS port 1 may be associated with and transmitted to DMRS ports, respectively (indicated by reference numerals 1812 and 1813).

The UE performs two-layer PUSCH transmission through the second panel (based on the second SRS resource set or the second unified TCI state) by configuring PUSCH ports in the same manner as SRS resource #1 and SRS resource #2 in the second SRS resource set #2 1809 indicated by the second SRI 1807 in the DCI 1805 and transmitting each layer through each PUSCH port. At this time, each layer may have a one-to-one mapping relationship with each DMRS port, similarly to the case of transmitting through the first panel. SRS resource #1 and SRS resource #2 in the second SRS resource set #2 1809 are associated with PTRS port 0, and SRS resource #3 and SRS resource #4 are associated with PTRS port 1. Therefore, since both layers of the PUSCH 1820 transmitted through the second panel (associated with the second SRS resource set or the second unified TCI state) may be associated with PTRS port 0, PTRS port 0 may be transmitted in association with one of the two DMRS ports (indicated by reference numeral 1822).

As described above, when supporting SFN PUSCH multi-panel simultaneous transmission and up to 2 PTRS ports for not only codebook-based PUSCH but also noncodebook-based PUSCH, it may be identified that the actual number of PTRS ports of PUSCH transmitted through each panel may differ. In addition to the SRI and/or TPMI indication examples specifically described in FIGS. 17 and 18, the actual number of PTRS ports of PUSCH transmitted through each panel may also differ through other SRIs and/or TPMIs.

If the number of actual PTRS ports transmitted together with the PUSCH transmitted through each panel differs, as in a specific example, the UE may need to individually perform rate matching for each PUSCH transmission. In other words, this is understood as meaning that even if the same data is transmitted according to the SFN-based multi-panel simultaneous transmission method, the amount of resources required for actual data transmission may vary depending on the number of actual PTRS ports. In addition, it may be inferred that the amount of resources required for data transmission when the number of actual PTRS ports is 2 is smaller than the amount of resources required for data transmission when the number of actual PTRS ports is 1. In other words, even though the same data is transmitted, the UE may need to individually perform rate matching considering different amounts of resources for data transmission. This may cause additional complexity, as it requires extra operations from the UE.

In another aspect, SFN PUSCH transmitted with the same rate matching and multiplexing pattern may allow the base station to process the uplink data channel according to various combining methods. For example, signals transmitted with the same pattern may be combined at various layers, such as symbol-level combining, log-likelihood ratio (LLR)-level combining, and bit-level combining after decoding. However, if the same rate matching cannot be performed, the multiplexing pattern of data and UCI cannot be maintained the same. Therefore, there are cases where combining methods, which could be considered when transmitting with the same pattern, such as symbol-level combining, cannot be performed.

As in the examples of FIGS. 17 and 18, when rate matching and multiplexing patterns are different, additional complexity may be required for the UE, or restrictions may be placed on improved reception gain according to the combining method. Taking this into consideration, the disclosure specifically describes a method for determining a PTRS port during simultaneous SFN PUSCH multi-panel transmission and operations of a base station and a UE according thereto. In the disclosure, [Method 1] to [Method 6] are specifically described assuming that the number of uplink PTRS ports supportable by the UE is two and the base station has configured RRC parameters for the UE to enable support for up to two uplink PTRS ports. However, the number of uplink PTRS ports is not limited to two, and the method below may be used even when a larger number of uplink PTRS ports are supported.

[Method 1] Allocate one PTRS port for each PUSCH transmitted in association with each panel (or each SRS resource set)

The base station and the UE may allocate one PTRS port for the PUSCH transmitted through each panel (or each SRS resource set). As a specific example, the PUSCH associated with panel 1 (or the first SRS resource set) may be transmitted together with PTRS port 0, and the PUSCH associated with panel 2 (or the second SRS resource set) may be transmitted together with PTRS port 1. Alternatively, one PTRS port may be transmitted together for the PUSCH associated with each panel (or each SRS resource set) without indexing the PTRS ports separately. Of course, if a higher layer parameter (RRC parameter) for the uplink PTRS is not configured, the uplink PTRS cannot be transmitted together with the PUSCH.

When one PTRS port is transmitted in association with the DMRS port of a PUSCH transmitted through each panel (or each SRS resource set) and the number of DMRS ports of the corresponding PUSCH is two, the PTRS port should be transmitted in association with one of the two DMRS ports. At this time, as described above, the PTRS-DMRS association field in the DCI scheduling the PUSCH is also indicated, and the UE may determine a single DMRS port associated with the PTRS port among the two DMRS ports according to the code point indicated by the corresponding field. For example, the MSB M (e.g., 1) bit of the PTRS-DMRS association field may be used to determine one DMRS port associated with the PTRS port among up to $2^m$ (e.g., two) DMRS ports transmitted together with the PUSCH associated with the first panel (associated with the first SRS resource set or associated with the first TCI state). The LSB M (e.g., 1) bit of the PTRS-DMRS association field may be used to determine one DMRS port associated with the PTRS port among up to $2^m$ (e.g., two) DMRS ports transmitted together with the PUSCH associated with the second panel (associated with the second SRS resource set or associated with the second TCI state). Alternatively, if the second SRS resource set (usage is "codebook" or "nonCodebook") is configured, a second PTRS-DMRS association field may be additionally indicated by the DCI along with the existing PTRS-DMRS association field.

When [Method 1] is used, the number of actual PTRS ports for PUSCH transmission transmitted for each panel may be kept the same, and thus rate matching may not be performed for each PUSCH. However, a subcarrier offset value within an RB of a PTRS transmitted for each panel may differ depending on a code point indicated by the PTRS-DMRS association field. When the PTRS port is multiplexed within the RB, the subcarrier offset ($k_{ref}^{RE}$) within the RB may be determined based on the index value of the DMRS port with which the PTRS port is associated and the "resourceElementOffset" value configured by an RRC parameter, by referring to Table 6.4.1.2.2.1-1 in Technical Specification TS 38.211 (or Table 28 below). The relationship between "resourceElementOffset" and the subcarrier offset within the RB is not restricted by the table below.

【Table 28】

| DMRS antenna port $\tilde{p}$ | $k_{ref}^{RE}$ | | | | | | | |
|---|---|---|---|---|---|---|---|---|
| | DMRS configuration type 1 | | | | DMRS configuration type 2 | | | |
| | resourceElementOffset | | | | resourceElementOffset | | | |
| | offset00 | offset01 | offset10 | offset11 | offset00 | offset01 | offset10 | offset11 |
| 0 | 0 | 2 | 6 | 8 | 0 | 1 | 6 | 7 |
| 1 | 2 | 4 | 8 | 10 | 1 | 6 | 7 | 0 |
| 2 | 1 | 3 | 7 | 9 | 2 | 3 | 8 | 9 |
| 3 | 3 | 5 | 9 | 11 | 3 | 8 | 9 | 2 |
| 4 | - | - | - | - | 4 | 5 | 10 | 11 |
| 5 | - | - | - | - | 5 | 10 | 11 | 4 |

For example, "0" and "1" have been indicated as an index for a DMRS port for two-layer PUSCH transmission, and a PTRS DMRS association field in DCI scheduling the corresponding SFN PUSCH multi-panel simultaneous transmission may be indicated as "01". A PTRS port transmitted together with a PUSCH associated with a first panel (or associated with a first SRS resource set or associated with a first TCI state) is transmitted in association with DMRS port 0 (associated with DMRS port 0, which is the first DMRS port among the two DMRS ports since MSB 1 bit is 0), and a PTRS port transmitted together with a PUSCH associated with a second panel (or associated with a second SRS resource set or associated with a second TCI state) is transmitted in association with DMRS port 1 (associated with DMRS port 1, which is the second DMRS port among the two DMRS ports since LSB 1 bit is 1). In the case of configuration type 1 and when resourceElementOffset is configured as "offset00", the PTRS port associated with the first panel (or associated with the first SRS resource set or associated with the first TCI state) is associated with DMRS port 0, and thus the value of offset $k_{ref}^{RE}$ within the RB of the PTRS port is determined as 0, and the PTRS port associated with the second panel (or associated with the second SRS resource set or associated with the second TCI state) is associated with DMRS port 1, and thus the value of offset $k_{ref}^{RE}$ within the RB of the PTRS port is determined as 2.

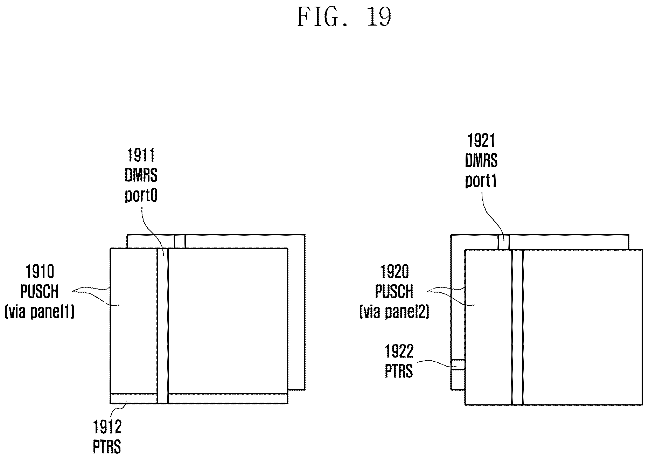

FIG. 19 illustrates an example of a case where each PTRS port is transmitted through each panel during SFN PUSCH multi-panel simultaneous transmission. According to FIG. 19, as described above, the PTRS DMRS association field is indicated as "01", and the UE transmits scheduled two-layer PUSCHs 1910 and 1920 by using the SFN-based multi-panel simultaneous transmission method. Since a PTRS 1912 transmitted through the PUSCH 1910 transmitted through the first panel (or the first SRS resource set or the first TCI state) is transmitted in association with DMRS port 0 1911, the value of offset $k_{ref}^{RE}$ within the RB may be determined as 0. Since a PTRS 1922 transmitted through the PUSCH 1920 transmitted through the second panel (or the second SRS resource set or the second TCI state) is transmitted in association with DMRS port 1 1921, the value offset $k_{ref}^{RE}$ within the RB may be determined as 2. In other words, although the same rate matching is performed, the pattern in which the PTRS is multiplexed onto the PUSCH may be different because PTRS is transmitted in association with different DMRS ports.

On the other hand, if the PTRS DMRS association field is indicated as "00", both PTRS ports associated with two panels (or associated with two SRS resource sets or associated with two TCI states) may be associated with DMRS port 0, and the value of offset $k_{re_f}^{RE}$ within the RB of the PTRS ports in both cases may be determined as 0.

When the SFN PUSCH multi-panel simultaneous transmission is supported through [Method 1], the base station may allow, for PUSCHs transmitted through different panels, different offsets $k_{re_f}^{RE}$ within RB for which the PTRS port is transmitted, similar to that shown in FIG. 19. In this case, the UE may perform the same rate matching for the SFN PUSCH transmitted through the two panels, and may multiplex the PTRS onto the PUSCH at the same location or multiplex the PTRS onto the PUSCH at different locations according to the value indicated by the PTRS DMRS association field. Alternatively, when the SFN PUSCH multi-panel simultaneous transmission is supported through [Method 1], the base station may allow, for PUSCHs transmitted through different panels PTRS port, the same offset $k_{re_f}^{RE}$ only within the RB for which the PTRS port is transmitted. When the base stations allows only the same offset $k_{re_f}^{RE}$, the following scheduling constraints may be considered.

- [Detailed Method 1] If the SFN PUSCH multi-panel simultaneous transmission is scheduled by DCI format 0_1 or DCI format 0_2 (or if a type 2 configured grant PUSCH is activated), the UE may not expect an association between a PTRS port and a different DMRS port by the PTRS-DMRS association field in the corresponding DCI. In other words, for PUSCHs transmitted using different panels, the UE may not expect that the PTRS port is to be associated with different DMRS ports for PUSCHs (as indicated by the PTRS-DMRS association field within the DCI). The determination of whether the PUSCH is associated with a panel may be made based on the SRS resource or TCI state configured using the method described above.
- [Detailed Method 2] If the SFN PUSCH multi-panel simultaneous transmission is scheduled by DCI format 0_1 or DCI format 0_2 (or if a type 2 configured grant PUSCH is activated), the UE may expect that the PTRS port is associated with the same DMRS port by the PTRS-DMRS association field in the corresponding DCI. In other words, for PUSCHs transmitted using different panels, the UE may expect that the PTRS port is associated with the same DMRS port for each PUSCH (as indicated by the PTRS-DMRS association field in the corresponding DCI). The determination of whether the PUSCH is associated with a panel may be made based on the SRS resource or TCI state configured using the method described above.
- [Detailed Method 3] If the SFN PUSCH multi-panel simultaneous transmission is scheduled by DCI format 0_1 or DCI format 0_2 (or if a type 2 configured grant PUSCH is activated), the UE may not expect that "a DMRS port (with which the PTRS port is associated) for a PUSCH transmitted via the first SRS resource set (or the first indicated TCI state)" indicated by the PTRS-DMRS association field within the DCI and "another DMRS port (with which the PTRS port is associated) for a PUSCH transmitted via the second SRS resource set (or the second indicated TCI state)" are different (here, this refers to the case where the usage of the SRS resource set is configured as "codebook" or "nonCodebook").
- [Detailed Method 4] If the SFN PUSCH multi-panel simultaneous transmission is scheduled by DCI format 0_1 or DCI format 0_2 (or if a type 2 configured grant PUSCH is activated), the UE may expect that "a DMRS port (with which the PTRS port is associated) for a PUSCH transmitted via the first SRS resource set (or the first indicated TCI state)" indicated by the PTRS-DMRS association field within the DCI and "another DMRS port (with which the PTRS port is associated) for a PUSCH transmitted via the second SRS resource set (or the second indicated TCI state)" are the same (here, this refers to the case where the usage of the SRS resource set is configured as "codebook" or "nonCodebook".)
- [Detailed Method 5] If the SFN PUSCH multi-panel simultaneous transmission is scheduled through higher layer parameters (RRC parameters for scheduling a type 1 configured grant PUSCH), the UE may operate in the same manner as if the value of the PTRS-DMRS association field is "0" or "00".

When the SFN PUSCH is supported to be transmitted with the same multiplexing pattern between PUSCH and PTRS as in [Detailed Method 1] to [Detailed Method 5], the UE only needs to transmit the SFN PUSCH with the same rate matching and the same multiplexing pattern, thereby reducing the complexity of processing required for the UE to transmit the SFN PUSCH, and enabling the base station to support a wider range of combining methods during reception. However, since the association between PTRS and DMRS ports cannot be specified according to the channel status of each panel cannot be indicated, performance degradation may occur in terms of phase error estimation and compensation.

[Method 2] Configuration of PTRS ports according to a PUSCH transmitted with the maximum (or minimum) number of actual PTRS ports.

If the SFN PUSCH multi-panel simultaneous transmission is scheduled by DCI format 0_1 or DCI format 0_2 (or if a type 2 configured grant PUSCH is activated) or scheduled via higher layer parameters (RRC parameters for scheduling a type 1 configured grant PUSCH), a PTRS port transmitted according to the PUSCH transmission with the maximum (or minimum) number of actual PTRS ports among the PUSCHs transmitted via each panel (or an SRS resource set or TCI state) may be determined.

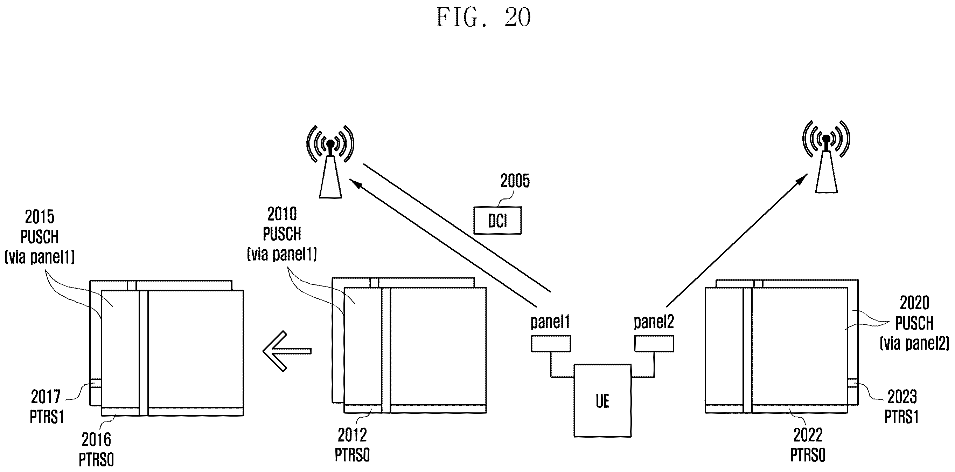

FIG. 20 illustrates an example of transmitting a PUSCH according to the maximum number of actual PTRS ports during simultaneous SFN PUSCH multi-panel transmission. It is assumed that a PUSCH 2010 transmitted via a first panel (or a first SRS resource set or a first TCI state) and a PUSCH 2020 transmitted via a second panel (or a second SRS resource set or a second TCI state) are scheduled by DCI format 0_1 or 0_2 2005).

If the number of actual PTRS ports for the PUSCH 2010 transmitted via the first panel (or the first SRS resource set or the first TCI state) is 1 (indicated by reference numeral 2012) and the number of actual PTRS ports for the PUSCH 2020 transmitted via the second panel (or the second SRS resource set or the second TCI state) is 2 (indicated by reference numerals 2022 and 2023), the UE may configure the PTRS ports for the PUSCH 2010 transmitted via the first panel (or the first SRS resource set or the first TCI state) with the same pattern as the PTRS ports (indicated by reference numerals 2016 and 2017) for the PUSCH 2020 transmitted via the second panel (or the second SRS resource set or the second TCI state) according to the maximum number of actual PTRS ports and transmit the same (indicated by reference numeral 2015). In this case, the PTRSs 2016 and 2017 for the PUSCH 2015 transmitted via the first panel may have the same configuration as the PTRSs 2022 and 2023 for the PUSCH 2020 transmitted via the second panel, such as offset within the RB of the PTRS port.

Alternatively, unlike the example of FIG. 20, the UE may configure the PTRS ports for the PUSCH 2020 transmitted via the second panel (or the second SRS resource set or the second TCI state) with the same pattern as the PTRS ports for the PUSCH 2010 transmitted via the first panel (or the first SRS resource set or the first TCI state) according to the minimum number of actual PTRS ports and transmit the same. In this case, the PTRSs for the PUSCH 2020 transmitted via the second panel may have one actual PTRS port, and the configurations of the PTRS port, such as the offset within the RB, may also follow the same configurations as the PTRS 2012 for the PUSCH 2010 transmitted via the first panel.

[Method 3] Allocate both PTRS ports to each PUSCH transmitted in association with each panel (or each SRS resource set).

If the SFN PUSCH multi-panel simultaneous transmission is scheduled by DCI format 0_1 or DCI format 0_2 (or if a type 2 configured grant PUSCH is activated) or via higher layer parameters (RRC parameters for scheduling a type 1 configured grant PUSCH), the actual number of PTRS ports for PUSCH transmitted through each panel may be two. In case that the number of actual PTRS ports for PUSCH transmitted through each panel is always two, the UE may ignore the PTRS-DMRS association field in the DCI for scheduling the SFN PUSCH multi-panel simultaneous transmission. Alternatively, when the SFN PUSCH multi-panel simultaneous transmission is scheduled, the base station needs to configure the PTRS-DMRS association field in the corresponding DCI as "00" and the UE may not expect that the PTRS-DMRS association field in the corresponding DCI is configured as a value other than "00".

When the [Method 3] is used, the accuracy of phase error estimation may be improved when performing two-layer SFN PUSCH multi-panel repeated transmission, and thus the reception performance may be improved due to the improved channel estimation. However, since more resources are used for PTRS transmission, a loss may occur in terms of resources for data transmission (i.e., the actual code rate for data transmission may increase). [Method 3] may work only in case that the UE is capable of supporting two uplink PTRS ports at most and the base station has configured higher layer parameters so that the UE may operate two uplink PTRS ports at most. In the case of two-layer SFN PUSCH multi-panel simultaneous transmission, since both DMRS ports are associated with two PTRS ports, the multiplexing patterns of the PUSCH and the PTRS transmitted through each panel (or an SRS resource set or TCI state) may be the same. However, when three- or four-layer SFN PUSCH multi-panel simultaneous transmission to be described later is allowed, the multiplexing patterns of the PUSCH and the PTRS transmitted through each panel (or an SRS resource set or TCI state) may or may not be identical depending on the value indicated by the PTRS-DMRS association field associated with each panel (or an SRS resource set or TCI state).

[Method 4] Configure a PTRS port for a PUSCH transmitted in association with a second panel (or a second SRS resource set or a second TCI state) in the same manner as a PTRS port for a PUSCH transmitted in association with a first panel (or a first SRS resource set or a first TCI state).

If the SFN PUSCH multi-panel simultaneous transmission is scheduled by DCI format 0_1 or DCI format 0_2 (or if a type 2 configured grant PUSCH is activated) or via higher layer parameters (RRC parameters for scheduling a type 1 configured grant PUSCH), the UE determines a PUSCH, a DMRS port, and a PTRS port to be transmitted in association with a first panel (the first SRS resource set or the first TCI state), based on the scheduling information. The UE performs resource mapping including PTRS according to the configuration to transmit the corresponding PUSCH. Thereafter, based on the PUSCH transmitted in association with the first panel (or the first SRS resource set or the first TCI state), the UE may configure the PUSCH to be transmitted in association with the second panel (or the second SRS resource set or the second TCI state) identically. In other words, the UE may determine the port of the PTRS of the PUSCH transmitted in association with the second panel according to the configuration of the PTRS transmitted together with the PUSCH transmitted in association with the first panel, and may generate and map the PTRS.

In other words, if the SFN PUSCH multi-panel simultaneous transmission is scheduled by DCI format 0_1 or DCI format 0_2 (or if a type 2 configured grant PUSCH is activated) or via higher layer parameters (RRC parameters for scheduling a type 1 configured grant PUSCH), the UE performs multi-panel simultaneous transmission by configuring, based on the scheduling information, the PUSCH to be transmitted in association with the second panel (or the second SRS resource set or the second TCI state) to be the same as the PUSCH transmitted in association with the first panel (or the first SRS resource set or the first TCI state).

[Method 5] Configure a PTRS port for a PUSCH transmitted in association with a first panel (or a first SRS resource set or a first TCI state) in the same manner as a PTRS for a PUSCH transmitted in association with a second panel (or a second SRS resource set or a second TCI state).

Although [Method 5] is similar to [Method 4], the UE may determine the PTRS port configuration to be transmitted and multiplexing pattern, based on the PUSCH transmitted in association with the second panel (or the second SRS resource set or the second TCI state). In other words, the UE may determine the port of the PTRS of the PUSCH transmitted in association with the first panel, based on the configuration of the PTRS transmitted together with the PUSCH transmitted in association with the second panel, and may generate and map the PTRS.

[Method 6] Rate matching is performed based on the maximum number of actual PTRS ports or a PUSCH transmitted through the first panel (or second panel), and only PTRS determined based on information indicated by the SRI, the TPMI, and the PTRS-DMRS association field are transmitted.

When performing rate matching for PUSCHs (transmitted through the first panel and the second panel), the UE may collectively perform rate matching based on the maximum number of actual PTRS ports associated with the scheduled PUSCHs. In this case, although the UE performs rate matching in the same manner for PUSCHs transmitted through the actual PTRS ports that are not the maximum number of actual PTRS ports, the UE may not transmit the number of PTRS ports other than the actual PTRS ports together with the PUSCH transmitted through the corresponding panel, unlike [Method 2] or [Method 3]. In other words, the number of actual PTRS ports used as the basis for rate matching may differ from the number of PTRS ports that are used for actual transmission. The UE may maintain the resources, to which PTRSs other than the corresponding actual PTRS ports are mapped, to be empty without transmitting any channel or reference signal therethrough. In this case, the transmission power for each symbol of the transmitted PUSCH may be reduced by the PTRS ports that are not used for transmission. In this case, the UE may boost the transmission power for PTRS ports used for transmission by considering the transmission power for the PTRS ports that are not used for transmission. Alternatively, the UE may boost the transmission power of resources for PUSCH data by considering the transmission power for PTRS ports that are not used for transmission. Alternatively, the UE may transmit the PUSCH with reduced power depending on the PTRS ports that are not used for transmission.

[Method 1] to [Method 6] are described with specific examples. In this case, it is explained assuming that the maximum number of uplink PTRS ports that the UE is supportable is two. In case that the maximum number of uplink PTRS ports that the UE is supportable is one, or the base station has configured the RRC parameters in the UE to support one uplink PTRS port at most, the descriptions of [Method 1] to [Method 6] may be modified for application to the operations for one uplink PTRS port. Of course, some methods (e.g., [Method 3]) may not be valid when one uplink PTRS port at most is supported, but the other methods may be interpreted and applied by modifying them for the one uplink PTRS port.

For the above-described methods, whether the UE is scheduled for the SFN PUSCH multi-panel simultaneous transmission may be determined based on the following higher layer parameter configurations and the indication values of specific fields indicated in the scheduling DCI.

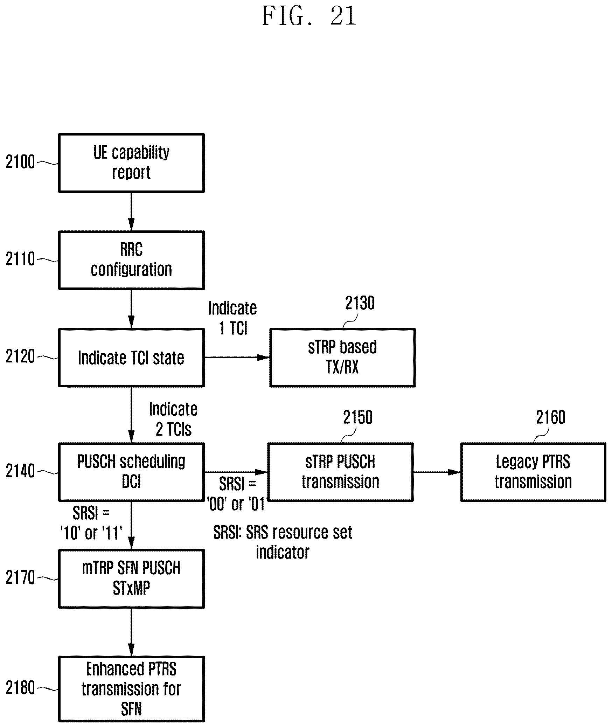

FIG. 21 is a flowchart illustrating an example of an operation in which a base station and a UE configure and transmit a PTRS depending on whether signaling between the base station and the UE and the SFN PUSCH multi-panel simultaneous transmission are scheduled.

The base station may receive a UE capability report for supporting the SFN PUSCH multi-panel simultaneous transmission from the UE (operation 2100). Thereafter, the base station may configure higher layer parameters (RRC parameters) in the UE (operation 2110). The RRC parameters included in the RRC configuration may include parameters for uplink transmission as well as parameters for configuring a technique to be supported among various transmission techniques for multi-panel simultaneous transmission. For example, an RRC parameter such as "ULTransmissionScheme" may be configured, and the corresponding RRC parameter may be configured as either "SFN" or "SDM". In the disclosure, it is assumed that the corresponding RRC parameter is configured as "SFN". In addition, RRC parameters for supporting the unified TCI framework may also be configured together. "unifiedTCI-StateType" may be configured by RRC signaling, and may be configured to support NR Release 17 or NR Release 18. In addition, RRC parameters such as "enableMultipleTCIState" may be configured to support mTRP transmission/reception based on multiple TCI states. In addition to the RRC parameters described above, the base station may configure two SRS resource sets, each having usage configured as "codebook" or "nonCodebook", in the UE to support the mTRP PUSCH transmission method. When two SRS resource sets, each having usage being "codebook" or "nonCodebook", are configured, the base station may additionally indicate a 2-bit SRS resource set indicator, which will be described later, in DCI format 0_1 or 0_2 for scheduling the PUSCH.

The base station may indicate a TCI state to the UE through the DCI (operation 2120). The base station and the UE operate according to the unified TCI framework described above, and the number of TCI states indicated by the code point indicated by the corresponding DCI may be 1 or 2. In case that the base station indicates only one TCI state through the DCI, the base station and the UE support an sTRP-based transmission/reception method after the beam application time (BAT) (operation 2130).

When the base station indicates two TCI states through the DCI, the base station may then schedule the PUSCH by the DCI (operation 2140). The DCI for scheduling the PUSCH includes not only fields for indicating resources, precoding, etc. for the scheduled PUSCH, but also an SRS resource set indicator field for determining whether the corresponding PUSCH is transmitted to the sTRP or mTRP. The SRS resource set indicator may be indicated by 2 bits in the DCI when two SRS resource sets, each of which has usage configured as "codebook" or "nonCodebook", are configured. In case that the SRS resource set indicator is indicated as "00" or "01", the PUSCH scheduled by the corresponding DCI is transmitted to the sTRP (operation 2150). The sTRP PUSCH transmission may be transmitted in the same manner as in the existing NR Release 17, and the PTRS that may be transmitted together at this time may also be transmitted in the same manner (operation 2160).

If the SRS resource set indicator is indicated as "10" or "11", the PUSCH scheduled by the corresponding DCI may be transmitted using the mTRP SFN PUSCH multi-panel simultaneous transmission method (operation 2170). This is because the RRC parameter for configuring the uplink transmission method has been assumed to support the SFN in the RRC configuration in operation 2110. With regard to the PTRS transmitted together when performing the sDCI-based mTRP SFN PUSCH multi-panel simultaneous transmission scheduled by the corresponding DCI, the PTRS port may be configured by considering one or a combination of the various [Method 1] to [Method 6] described in the fifth embodiment, and transmitted by the UE together with the PUSCH (operation 2180).

In each of the above operations, a specific operation may be omitted, or the operations may be performed with in a different order. Additional operations not described here may also be performed. Operations do not necessarily have to be performed sequentially.

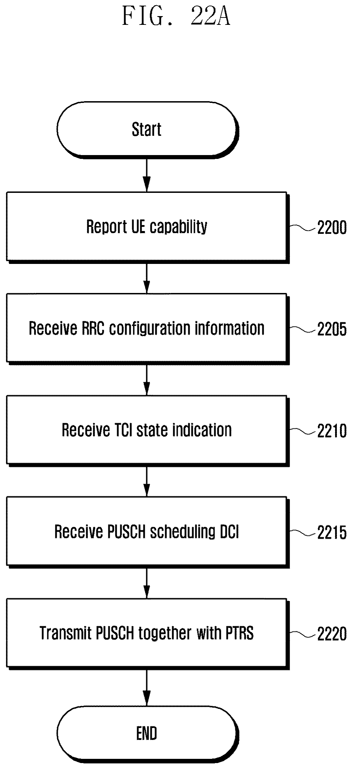

FIG. 22A is a flowchart illustrating an example of an operation of a UE receiving and transmitting a configured PTRS according to at least an embodiment of the disclosure.

According to FIG. 22A, a UE may report UE capability related to simultaneous PUSCH transmission using multiple panels to a base station (operation 2200). The UE capability may include the UE capability information described above. The UE may receive RRC configuration information for configuring simultaneous PUSCH transmission using multiple panels from the base station (operation 2205). The RRC configuration information may include the higher layer parameter described above. Thereafter, the UE receives DCI indicating multiple unified TCI states from the base station (operation 2210). For example, the DCI may indicate two unified TCI states. Thereafter, the UE receives DCI for scheduling a PUSCH from the base station (operation 2215). The DCI may include at least one of resource information on the PUSCH for simultaneous PUSCH transmission using multiple panels, an SRS resource set indicator, TPMI, and PTRS-DMRS association information. Based on the DCI scheduling the PUSCH, the UE may transmit the PUSCH together with the PTRS and DMRS to the base station, based on at least one combination of the methods 1 to 6 described above (operation 2220).

The flowcharts described above illustrate exemplary methods that may be implemented in accordance with the principles of the disclosure, and various modifications may be made to the methods illustrated in the flowcharts herein. For example, although illustrated as a series of operations, the various operations in each drawing may overlap, occur in parallel, occur in different orders, or occur multiple times. In other examples, operations may be omitted or replaced by other operations.

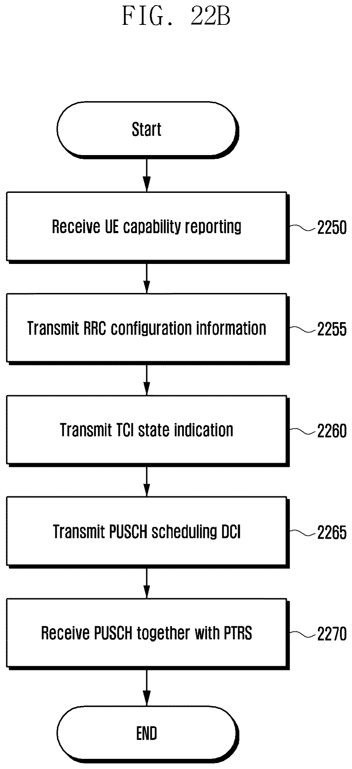

FIG. 22B is a flowchart illustrating an example of an operation of a base station configuring and receiving a PTRS according to at least an embodiment of the disclosure.

According to FIG. 22B, the base station may receive a UE capability report related to simultaneous PUSCH transmission using multiple panels from the UE (operation 2250). The UE capability may include the UE capability information described above. The base station may transmit RRC configuration information for configuring simultaneous PUSCH transmission using multiple panels to the UE (operation 2255). The RRC configuration information may include the higher layer parameter described above. Thereafter, the base station transmits DCI indicating multiple unified TCI states to the UE (operation 2260). For example, the DCI may indicate two unified TCI states. Thereafter, the base station transmits DCI for scheduling a PUSCH to the UE (operation 2265). The DCI may include at least one of resource information on the PUSCH for simultaneous PUSCH transmission using multiple panels, the SRS resource set indicator, TPMI, and PTRS-DMRS association information. Based on the DCI scheduling the PUSCH, the UE may transmit the PUSCH together with PTRS and DMRS to the base station, based on at least one combination of the methods 1 to 6 described above, and the base station may receive the PUSCH together with the PTRS and DMRS (operation 2270).

The flowcharts described above illustrate exemplary methods that may be implemented in accordance with the principles of the disclosure, and various modifications may be made to the methods illustrated in the flowcharts herein. For example, although illustrated as a series of operations, the various operations in each drawing may overlap, occur in parallel, occur in different orders, or occur multiple times. In other examples, operations may be omitted or replaced by other operations.

The methods specifically described in the fifth embodiment assume that, when performing the SFN PUSCH multi-panel simultaneous transmission, the number of layers of PUSCH transmitted via each panel (or each SRS resource set or each TCI state) is at most two. However, three- or four-layer SFN PUSCH multi-panel simultaneous transmission methods larger than two-layer may also be considered. Even in this case, the UE determines the SRS resource and precoder to be referred to for transmission for each SRI field or TPMI field with respect to the PUSCH transmitted via each panel (or each SRS resource set or each TCI state). Therefore, as discussed above, the number of actual PTRS ports transmitted through each panel may be different (when scheduled up to two layers), or even if the number of actual PTRS ports is the same (two), the pattern in which the PTRS is mapped to the resource may be different. When explaining [Method 1] to [Method 6] indetail, although the method of reinterpreting 2 bits of a single PTRS-DMRS association field included in DCI has been mainly explained, if three- or four-layer transmission is allowed for the SFN PUSCH multi-panel simultaneous transmission method, the second PTRS-DMRS association field included in the DCI associated with the second SRS resource set, as introduced in NR Release 17, may be used instead of reinterpreting the single PTRS-DMRS association field. Even when performing the three- or four-layer SFN PUSCH multi-panel simultaneous transmission by applying the previously described [Method 1] to [Method 6] using two PTRS-DMRS association fields, PTRS ports may be mapped to resources and transmitted together.

Specifically, when the SFN PUSCH multi-panel simultaneous transmission is supported, two PTRS-DMRS association fields included in DCI format 0_1 or 0_2 for scheduling a PUSCH to the UE may be indicated. At this time, the first PTRS-DMRS association field may be used to determine an association between a DMRS port of a PUSCH transmitted via the first panel (or the first SRS resource set or the first TCI state) and a PTRS port. The second PTRS-DMRS association field may be used to determine an association between a DMRS port of a PUSCH transmitted via the second panel (or the second SRS resource set or the second TCI state) and a PTRS port.

More specifically, it is assumed that four-layer SFN PUSCH multi-panel simultaneous transmission is scheduled by DCI format 0_1 and the RRC parameters are configured so that the UE is capable of supporting two uplink PTRS ports. As a specific example, if the first PTRS-DMRS association field is indicated as "00" and the second PTRS-DMRS association field is indicated as "11", the PTRS port 0 for the PUSCH transmitted via the first panel (or the first SRS resource set or the first TCI state) may be associated with the first DMRS port among the two DMRS ports that may be associated with the PTRS port 0 (for the "codebook" based PUSCH, a PUSCH layer transmitted through the PUSCH antenna port 1000 (the first PUSCH antenna port) and/or 1002 (the third PUSCH antenna port) according to the TPMI, or for the "nonCodebook" based PUSCH, the PUSCH layer transmitted by referring to an SRS resource configured with RRC to be associated with PTRS port 0 among SRS resources indicated by the SRI). The PTRS port 1 for the PUSCH transmitted via the first panel (or the first SRS resource set or the first TCI state) may be associated with the first DMRS port among the two DMRS ports that may be associated with the PTRS port 1 (for the "codebook" based PUSCH, a PUSCH layer transmitted through the PUSCH antenna port 1001 (the second PUSCH antenna port) and/or 1003 (the fourth PUSCH antenna port) according to TPMI, or for the "nonCodebook" based PUSCH, the PUSCH layer transmitted by referring to an SRS resource configured with RRC to be associated with PTRS port 1 among SRS resources indicated by the SRI).

Similarly, since the second PTRS-DMRS association field is indicated as "11", the PTRS port 0 for the PUSCH transmitted via the second panel (or the second SRS resource set or the second TCI state) may be associated with the second DMRS port among the two DMRS ports that may be associated with PTRS port 0 (for the "codebook" based PUSCH, a PUSCH layer transmitted through the PUSCH antenna port 1000 (the first PUSCH antenna port) and/or 1002 (the third PUSCH antenna port) according to TPMI, or for the "nonCodebook" based PUSCH, the PUSCH layer transmitted by referring to an SRS resource configured with RRC to be associated with PTRS port 0 among SRS resources indicated by the SRI). The PTRS port 1 for the PUSCH transmitted via the second panel (or the second SRS resource set or the second TCI state) may be associated with the second DMRS port among the two DMRS ports that may be associated with the PTRS port 1 (for the "codebook" based PUSCH, a PUSCH layer transmitted through the PUSCH antenna port 1001 (the second PUSCH antenna port) and/or 1003 (the fourth PUSCH antenna port) according to TPMI, or for the "nonCodebook" based PUSCH, the PUSCH layer transmitted by referring to an SRS resource configured with RRC to be associated with PTRS port 1 among SRS resources indicated by the SRI).

As discussed above, in this case as well, PTRS ports may be mapped to a PUSCH transmitted through each panel in different patterns. Therefore, one or a combination of [Method 1] through [Method 6] may be applied to support mapping the PTRS ports in the same pattern or perform the same PUSCH rate matching. Alternatively, since the actual number of PTRS ports is the same, PTRS ports may be allowed to be transmitted using different mapping patterns. Even in the case of performing three-layer SFN PUSCH multi-panel simultaneous transmission, the actual number of PTRS ports is also two, and thus four-layer SFN PUSCH multi-panel simultaneous transmission may also be processed in the same manner.

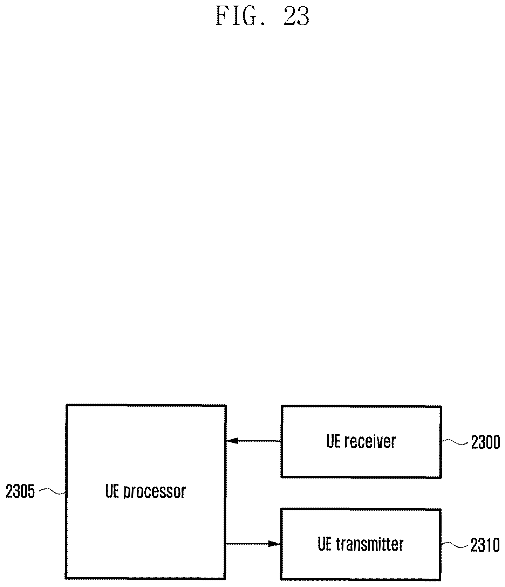

FIG. 23 illustrates a structure of a UE in a wireless communication system according to an embodiment of the disclosure.

Referring to FIG. 23, the UE may include a transceiver, which refers to a UE receiver 2300 and a UE transmitter 2310 as a whole, a memory (not illustrated), and a UE processor 2305 (or UE controller or processor). The UE transceiver 2300 and 2310, the memory, and the UE processor %n may operate according to the above-described communication methods of the UE. Components of the UE are not limited to the above-described example. For example, the UE may include a larger or smaller number of components than the above-described components. Furthermore, the transceiver, the memory, and the processor may be implemented in the form of a single chip.

The transceiver may transmit/receive signals with the base station. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the UE. The memory may include storage media such as a ROM, a RAM, a hard disk, a CD-ROM, and a DVD, or a combination of storage media. In addition, the memory may include multiple memories.

Furthermore, the processor may control a series of processes such that the UE can operate according to the above-described embodiments. The processor may include multiple processors, and the processor may perform operations of controlling the components of the UE by executing programs stored in the memory.

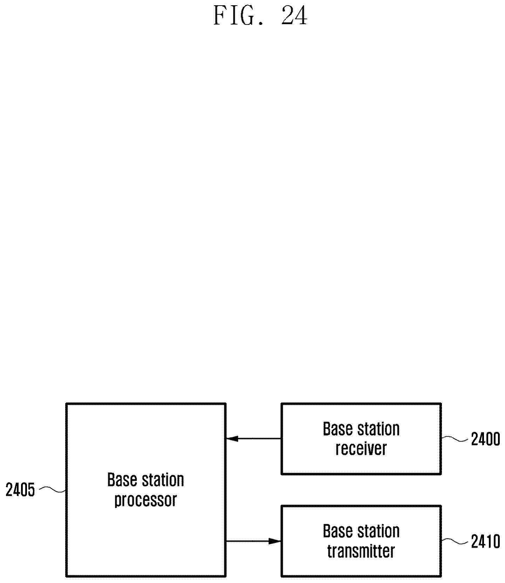

FIG. 24 illustrates a structure of a base station in a wireless communication system according to an embodiment of the disclosure.

Referring to FIG. 24, the base station may include a transceiver, which refers to a base station receiver 2400 and a base station transmitter 2410 as a whole, a memory (not illustrated), and a base station processor 2405 (or base station controller or processor). The base station transceiver 2400 and 2410, the memory, and the base station processor 2405 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The transceiver may transmit/receive signals with the UE. The signals may include control information and data. To this end, the transceiver may include an RF transmitter configured to perform amplification and up-conversion of a frequency of a transmitted signal, an RF receiver configured to perform low-noise amplification of a received signal and down-conversion of a frequency, and the like. However, this is only an embodiment of the transceiver, and the components of the transceiver are not limited to the RF transmitter and the RF receiver.

In addition, the transceiver may receive signals through a radio channel, output the same to the processor, and transmit signals output from the processor through the radio channel.

The memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

The processor may control a series of processes such that the base station can operate according to the above-described embodiments of the disclosure. The processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, other variants based on the technical idea of the embodiments may also be implemented in other communication systems such as TDD LTE, 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a communication system, the method comprising:

   receiving higher layer signaling from a base station, the higher layer signaling comprising information for configuring a simultaneous uplink transmission scheme for two transmission and reception points (TRPs) as a scheme of a single frequency network (SFN) and information for configuring uplink phase tracking reference signal (PTRS) transmission;
   receiving, from the base station, downlink control information (DCI) for scheduling a first physical uplink shared channel (PUSCH) and a second PUSCH;
   mapping the first PUSCH to a first uplink PTRS, and the second PUSCH to a second uplink PTRS, based on a first transmit precoding matrix indicator (TPMI) or a second sounding reference signal resource indicator (SRI) included in the DCI; and
   transmitting the first PUSCH, the first uplink PTRS, the second PUSCH, and the second uplink PTRS,
   wherein the same rate matching is applied to uplink data transmitted via the first PUSCH and the second PUSCH, and the first uplink PTRS and the second uplink PTRS are mapped to the same time-frequency resource.

2. The method of claim 1, wherein, in case that the first PUSCH and the second PUSCH are transmitted through a codebook-based scheme, the first uplink PTRS is identified based on the first TPMI and a first demodulation reference signal (DMRS) configuration transmitted with the first PUSCH.

3. The method of claim 1, wherein, in case that the first PUSCH and the second PUSCH are transmitted through a non-codebook-based scheme, the first uplink PTRS is identified based on the first SRI and a first demodulation reference signal (DMRS) configuration transmitted with the first PUSCH.

4. The method of claim 1, wherein the first PUSCH is transmitted based on a first transmission configuration indicator (TCI) state indicated to the terminal, and the second PUSCH is transmitted based on a second TCI state indicated to the terminal.

5. A method performed by a base station in a communication system, the method comprising:

transmitting higher layer signaling to a terminal, the higher layer signaling comprising information for configuring a simultaneous uplink transmission scheme for two transmission and reception points (TRPs) as a scheme of a single frequency network (SFN) and information for configuring uplink phase tracking reference signal (PTRS) transmission;
transmitting downlink control information (DCI) for scheduling a first physical uplink shared channel (PUSCH) and a second PUSCH to the terminal; and
receiving a first PUSCH, a first uplink PTRS, a second PUSCH, and a second uplink PTRS,
wherein the first PUSCH is mapped to the first uplink PTRS, and the second PUSCH is mapped to the second uplink PTRS, based on a first transmit precoding matrix indicator (TPMI) or a second sounding reference signal resource indicator (SRI) included in the DCI, and
wherein the same rate matching is applied to uplink data transmitted via the first PUSCH and the second PUSCH, and the first uplink PTRS and the second uplink PTRS are mapped to the same time-frequency resource.

6. The method of claim 5, wherein, in case that the first PUSCH and the second PUSCH are transmitted through a codebook-based scheme, the first uplink PTRS is associated with the first TPMI and a first demodulation reference signal (DMRS) configuration transmitted with the first PUSCH.

7. The method of claim 5, wherein, in case that the first PUSCH and the second PUSCH are transmitted through a non-codebook-based scheme, the first uplink PTRS is associated with the first SRI and a first demodulation reference signal (DMRS) configuration transmitted with the first PUSCH.

8. The method of claim 5, wherein the first PUSCH is transmitted based on a first transmission configuration indicator (TCI) state indicated to the terminal, and the second PUSCH is transmitted based on a second TCI state indicated to the terminal.

9. A terminal in a communication system, the terminal comprising:

a transceiver; and
a controller configured to
receive higher layer signaling from a base station, the higher layer signaling comprising information for configuring a simultaneous uplink transmission scheme for two transmission and reception points (TRPs) as a scheme of a single frequency network (SFN) and information for configuring uplink phase tracking reference signal (PTRS) transmission,
receive, from the base station, downlink control information (DCI) for scheduling a first physical uplink shared channel (PUSCH) and a second PUSCH,
map the first PUSCH to a first uplink PTRS, and the second PUSCH to a second uplink PTRS, based on a first transmit precoding matrix indicator (TPMI) or a second sounding reference signal resource indicator (SRI) included in the DCI, and
transmit the first PUSCH, the first uplink PTRS, the second PUSCH, and the second uplink PTRS,
wherein the same rate matching is applied to uplink data transmitted via the first PUSCH and the second PUSCH, and the first uplink PTRS and the second uplink PTRS are mapped to the same time-frequency resource.

10. The terminal of claim 9, wherein, in case that the first PUSCH and the second PUSCH are transmitted through a codebook-based scheme, the first uplink PTRS is identified based on the first TPMI and a first demodulation reference signal (DMRS) configuration transmitted with the first PUSCH.

11. The terminal of claim 9, wherein, in case that the first PUSCH and the second PUSCH are transmitted through a non-codebook-based scheme, the first uplink PTRS is identified based on the first SRI and a first demodulation reference signal (DMRS) configuration transmitted with the first PUSCH.

12. The terminal of claim 9, wherein the first PUSCH is transmitted based on a first transmission configuration indicator (TCI) state indicated to the terminal, and the second PUSCH is transmitted based on the second TCI state indicated to the terminal.

13. A base station in a communication system, the base station comprising:

a transceiver; and
a controller configured to
transmit higher layer signaling to a terminal, the higher layer signaling comprising information for configuring a simultaneous uplink transmission scheme for two transmission and reception points (TRPs) as a scheme of a single frequency network (SFN) and information for configuring uplink phase tracking reference signal (PTRS) transmission,
transmit downlink control information (DCI) for scheduling a first physical uplink shared channel (PUSCH) and a second PUSCH to the terminal, and
receive a first PUSCH, a first uplink PTRS, a second PUSCH, and a second uplink PTRS,
wherein the first PUSCH is mapped to the first uplink PTRS, and the second PUSCH is mapped to the second uplink PTRS, based on a first transmit precoding matrix indicator (TPMI) or a second sounding reference signal resource indicator (SRI) included in the DCI, and
wherein the same rate matching is applied to uplink data transmitted via the first PUSCH and the second PUSCH, and the first uplink PTRS and the second uplink PTRS are mapped to the same time-frequency resource.

14. The base station of claim 13, wherein, in case that the first PUSCH and the second PUSCH are transmitted through a codebook-based scheme, the first uplink PTRS is associated with the first TPMI and a first demodulation reference signal (DMRS) configuration transmitted with the first PUSCH.

15. The base station of claim 13, wherein, in case that the first PUSCH and the second PUSCH are transmitted through a non-codebook-based scheme, the first uplink PTRS is associated with the first SRI and a first demodulation reference signal (DMRS) configuration transmitted with the first PUSCH.

FIG. 1

One subframe (110)

$N_{symb}^{subframe,\mu}$ OFDM symbols

1 OFDM symbols (102)

1 subcarrier (103)

$K=N_{RB,x}^{max,\mu} N_{sc}^{RB} - 1$

$N_{RB}^{\mu} N_{sc}^{RB}$ subcarriers

Resource block $N_{sc}^{RB}$ subcarriers (104)

Resource element (k,l) (101)

Frequency

Time

$\bar{l}=0$

$\bar{l}=14 \cdot 2^{\mu} - 1$

$K=0$

FIG. 2

FIG. 3

FIG. 4

TCI state #0
(400)

TCI state #1
(405)

TCI state #2
(410)

EP 4 651 421 A1

# FIG. 5

S
(500)

L (505)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \quad (510)$$

# FIG. 6

EP 4 651 421 A1

# FIG. 7

| Control information for TRP #0 | — | DCI #0 |

| Control information for TRP #1 | — | DCI #1 |

⋮                    ⋮

| Control information for TRP #(N-1) | — | DCI #(N-1) |

Case #1 (700)

| Control information for TRP #0 | — | DCI #0 |

| Control information for TRP #1 | — | sDCI #0 |

⋮                    ⋮

| Control information for TRP #(N-1) | — | sDCI #(N-2) |

Case #2 (705)

| Control information for TRP #0 | — | DCI |

| Control information for TRP #1 | — | sDCI |

⋮

| Control information for TRP #(N-1) |

Case #3 (710)

| Control information for TRP #0 |

| Control information for TRP #1 | — | Long DCI |

⋮

| Control information for TRP #(N-1) |

Case #4 (715)

EP 4 651 421 A1

FIG. 8

MAC-CE structure

| CORESET Pool ID | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| $T_{(N-2) \times 8+7}$ | $T_{(N-2) \times 8+6}$ | $T_{(N-2) \times 8+5}$ | $T_{(N-2) \times 8+4}$ | $T_{(N-2) \times 8+3}$ | $T_{(N-2) \times 8+2}$ | $T_{(N-2) \times 8+1}$ | $T_{(N-2) \times 8}$ | Oct N |
|---|---|---|---|---|---|---|---|---|

# FIG. 9

| R | Serving Cell ID | BWP ID | Oct 1 |
|---|---|---|---|
| $C_0$ | TCI state ID $_{0,1}$ | | Oct 2 |
| R | TCI state ID $_{0,2}$ | | Oct 3 [Optional] |

905, 910, 915

. . .

| $C_N$ | TCI state ID $_{N,1}$ | Oct M-1 |
|---|---|---|
| R | TCI state ID $_{N,2}$ | Oct M [Optional] |

FIG. 10

1000

PDCCH 1001  PDSCH 1005  PUCCH 1010

BAT 1015

1025  1030

1020

By using DCI format 1_1, 1_2 with DL assignment

1050

PDCCH 1055  PUCCH 1060

BAT 1065

1075  1080

1070

By using DCI format 1_1, 1_2 without DL assignment

FIG. 11

| | | | | | | |
|---|---|---|---|---|---|---|
| R<br>1130 | Serving Cell ID<br>1100 | | | | DL BWP ID<br>1105 1110 | Oct 1 |
| R | R | R | R | R | R | UL BWP ID | Oct 2 |
| P₁<br>1115 | P₂ | P₃ | P₄ | P₅ | P₆ | P₇ | P₈ | Oct 3 |
| D/U<br>1120 | TCI state ID 1 | | | | | Oct 4 |
| D/U | TCI state ID 2 | | | | | Oct 5 |

. . .

| | | |
|---|---|---|
| D/U | TCI state ID N<br>1125 | Oct N+3 |

# FIG. 12

| R | Serving Cell ID | | | | | DL BWP ID | Oct 1 |
|---|---|---|---|---|---|---|---|
| R | R | R | R | R | R | UL BWP ID | Oct 2 |
| $P_1$ | | $P_2$ | | $P_3$ | | $P_4$ | Oct 3 |
| $P_5$ | | $P_6$ | | $P_7$ | | $P_8$ | Oct 4 |
| D/U | TCI state ID 1 | | | | | | Oct 5 |
| D/U | TCI state ID 2 | | | | | | Oct 6 |

. . .

| D/U | TCI state ID N | Oct N+4 |
|---|---|---|

FIG. 13

| R | Serving Cell ID | | | | | DL BWP ID | | Oct 1 |
|---|---|---|---|---|---|---|---|---|
| R | R | R | R | R | R | UL BWP ID | | Oct 2 |
| $P_{1,1}$ | $P_{2,1}$ | $P_{3,1}$ | $P_{4,1}$ | $P_{5,1}$ | $P_{6,1}$ | $P_{7,1}$ | $P_{8,1}$ | Oct 3 |
| $P_{1,2}$ | $P_{2,2}$ | $P_{3,2}$ | $P_{4,2}$ | $P_{5,2}$ | $P_{6,2}$ | $P_{7,2}$ | $P_{8,2}$ | Oct 4 |
| D/U | TCI state ID 1 | | | | | | | Oct 5 |
| D/U | TCI state ID 2 | | | | | | | Oct 6 |

. . .

| D/U | TCI state ID N | Oct N+4 |
|---|---|---|

## FIG. 14

FIG. 15

EP 4 651 421 A1

# FIG. 16

PUSCH transmission toward TRP1    PUSCH transmission toward TRP2

(1601)    (1602)    (1603)    (1604)

$N_{RB}$

$N_{symbol}$

<TDM scheme>
(sequential mapping)
(1600)

PUSCH transmission toward TRP1    PUSCH transmission toward TRP2

(1611)    (1612)    (1613)    (1614)

$N_{RB}$

$N_{symbol}$

<TDM scheme>
(cyclic mapping)
(1610)

Different DMRS
(1625)

PUSCH transmission
via panel2 (1622)

1TB

PUSCH transmission
via panel1 (1621)

$N_{RB}$

$N_{symbol}$

<SDM scheme>
(1620)

Same DMRS
(1635)

PUSCH transmission
via panel2 (1632)

1TB

1TB
(repetition)

PUSCH transmission
via panel1 (1631)

$N_{RB}$

$N_{symbol}$

<SFN scheme>
(1630)

EP 4 651 421 A1

# FIG. 17

FIG. 18

EP 4 651 421 A1

FIG. 19

1911
DMRS
port0

1910
PUSCH
(via panel1)

1912
PTRS

1921
DMRS
port1

1920
PUSCH
(via panel2)

1922
PTRS

FIG. 20

EP 4 651 421 A1

# FIG. 21

# FIG. 22A

```
            ┌─────────────┐
            │    Start     │
            └──────┬──────┘
                   │
                   ▼
   ┌──────────────────────────────┐
   │      Report UE capability      │～2200
   └──────────────┬───────────────┘
                   │
                   ▼
   ┌──────────────────────────────┐
   │ Receive RRC configuration information │～2205
   └──────────────┬───────────────┘
                   │
                   ▼
   ┌──────────────────────────────┐
   │    Receive TCI state indication    │～2210
   └──────────────┬───────────────┘
                   │
                   ▼
   ┌──────────────────────────────┐
   │    Receive PUSCH scheduling DCI    │～2215
   └──────────────┬───────────────┘
                   │
                   ▼
   ┌──────────────────────────────┐
   │  Transmit PUSCH together with PTRS  │～2220
   └──────────────┬───────────────┘
                   │
                   ▼
            ┌─────────────┐
            │     END      │
            └─────────────┘
```

FIG. 22B

```
        ╭─────────────╮
        │    Start     │
        ╰──────┬──────╯
               │
               ▼
   ┌──────────────────────────┐
   │ Receive UE capability     │ ～2250
   │ reporting                 │
   └────────────┬─────────────┘
               │
               ▼
   ┌──────────────────────────┐
   │ Transmit RRC configuration│ ～2255
   │ information               │
   └────────────┬─────────────┘
               │
               ▼
   ┌──────────────────────────┐
   │ Transmit TCI state         │ ～2260
   │ indication                │
   └────────────┬─────────────┘
               │
               ▼
   ┌──────────────────────────┐
   │ Transmit PUSCH scheduling  │ ～2265
   │ DCI                       │
   └────────────┬─────────────┘
               │
               ▼
   ┌──────────────────────────┐
   │ Receive PUSCH together     │ ～2270
   │ with PTRS                 │
   └────────────┬─────────────┘
               │
               ▼
        ╭─────────────╮
        │     END      │
        ╰─────────────╯
```

FIG. 23

2305 〜 UE processor

UE receiver 〜 2300

UE transmitter 〜 2310

FIG. 24

Base station
receiver — 2400

2405 — Base station
processor

Base station
transmitter — 2410

## INTERNATIONAL SEARCH REPORT

International application No.

**PCT/KR2024/095088**

### A. CLASSIFICATION OF SUBJECT MATTER

**H04L 5/00**(2006.01)i

According to International Patent Classification (IPC) or to both national classification and IPC

### B. FIELDS SEARCHED

Minimum documentation searched (classification system followed by classification symbols)

H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SFN, PTRS, DCI, PUSCH, 레이트 매칭(rate matching), 코드북(codebook), 넌-코드북(non-codebook)

### C. DOCUMENTS CONSIDERED TO BE RELEVANT

| Category* | Citation of document, with indication, where appropriate, of the relevant passages | Relevant to claim No. |
|---|---|---|
| Y | VIVO. Views on UL precoding indication for multi-panel transmission. R1-2203546, 3GPP TSG RAN WG1 #109-e. 29 April 2022.<br>See pages 1-11. | 1-15 |
| Y | MODERATOR (OPPO). Summary #3 on Rel-18 STxMP. R1-2210307, 3GPP TSG RAN WG1 #110 bis-e. 18 October 2022.<br>See pages 24, 51 and 96. | 1-15 |
| A | QUALCOMM INCORPORATED. Enhancements on HST-SFN deployment. R1-2107327, 3GPP TSG-RAN WG1 Meeting #106-e. 07 August 2021.<br>See pages 25-32. | 1-15 |
| A | INTEL CORPORATION. UL precoding indication for multi-panel transmission. R1-2211387, 3GPP TSG RAN WG1 #111-e. 07 November 2022.<br>See pages 1-18. | 1-15 |
| A | CATT. Enhancements on UL precoding indication for multi-panel transmission. R1-2211172, 3GPP TSG RAN WG1 #111. Toulouse, France. 07 November 2022.<br>See pages 1-13. | 1-15 |

☐ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 May 2024** | **13 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)